(19) Europäisches Patentamt / European Patent Office / Office européen des brevets

(11) **EP 2 716 893 A1**

(12) **EUROPEAN PATENT APPLICATION**
published in accordance with Art. 153(4) EPC

(43) Date of publication:
09.04.2014 Bulletin 2014/15

(51) Int Cl.:
*F02D 23/00* (2006.01)     *F02B 37/24* (2006.01)
*F02B 39/16* (2006.01)     *F02D 45/00* (2006.01)

(21) Application number: 11866181.8

(22) Date of filing: 26.05.2011

(86) International application number:
**PCT/JP2011/062056**

(87) International publication number:
**WO 2012/160687 (29.11.2012 Gazette 2012/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **TOYOTA JIDOSHA KABUSHIKI
KAISHA
Toyota-shi, Aichi-ken, 471-8571 (JP)**

(72) Inventor: **IEMURA, Akiyuki
Toyota-shi, Aichi-ken, 471-8571 (JP)**

(74) Representative: **Kuhnen & Wacker
Patent- und Rechtsanwaltsbüro
Prinz-Ludwig-Straße 40A
85354 Freising (DE)**

(54) **CONTROL APPARATUS FOR INTERNAL COMBUSTION ENGINE**

(57)     The invention relates to a controlled object (63, 52) for variably controlling a control amount relating to the engine and an actuator for changing the operation state of the controlled object.

The control device comprises means for determining a control signal to be given to the actuator for feedback controlling the driving state of the actuator to accomplish the target operation state.

The control device changes the operation state of the controlled object by driving the actuator when no fuel is supplied to the combustion chamber, measures as a control amount change delay time, the time from the start of the driving of the actuator until the start of the control amount and sets a feedback gain used in the determination of the control signal by the actuator control means in consideration of the measured control amount change delay time.

FIG.4

EP 2 716 893 A1

**Description**

[TECHNICAL FIELD]

The invention relates to a control device of an internal combustion engine.

[BACKGROUND ART]

An internal combustion engine comprising a supercharger having a compressor arranged in an intake passage and an exhaust turbine arranged in an exhaust passage is described in the Patent Document 1.
This supercharger of the engine further has vanes for variably controlling a flow rate of an exhaust gas passing through the turbine and an actuator for driving the vanes (hereinafter, this actuator may be referred to as --vane actuator--).
The flow rate of the exhaust gas passing through the turbine is changed by driving the vanes by the vane actuator to change an operation states of the vanes.
Then, a degree of a compression of an air by the compressor changes by this flow rate change.
That is, in the engine of the Patent Document 1, a pressure of the air in the intake passage downstream of the compressor (hereinafter, this pressure may be referred to as - -supercharging pressure--) can be controlled by controlling the operation state of the vanes.
In order to change the operation state of the vanes by the vane actuator, a control signal for making the vane actuator drive the vanes is given to the vane actuator from an electronic control unit.
At this time, the control signal includes a command relating to a driving amount of the vanes (hereinafter, this amount may be referred to as --manipulation amount--).
That is, when there is a desired manipulation amount, the control signal for driving the vanes by this desired manipulation amount is given to the vane actuator.
In this case, in order to drive the vanes by the vane actuator exactly by the desired manipulation amount, the desired manipulation amount should be exactly reflected in the control signal given to the vane actuator.
Generally, a relationship between the manipulation amount relative to the vanes and the control signal is previously obtained and then, the control signal is determined from the desired manipulation amount on the basis of this relationship.
Therefore, in order to drive the vanes by the vane actuator exactly by the desired manipulation amount, the relationship between the vane manipulation amount and the control signal should be exact.
In this regard, the relationship between the vane manipulation amount and the control signal may change depending on a temperature of the vane actuator itself.
In the engine of the Document 1, in order to drive the vanes exactly by the desired manipulation amount, the control signal determined from the desired manipulation amount on the basis of the previously obtained relationship between the vane manipulation amount and the control signal is corrected on the basis of the temperature of the vane actuator.

[PRIOR ART DOCUMENTS]

[PATENT DOCUMENT]

[PATENT DOCUMENT 1]
JP UNEXAMINED PATENT PUBLICATION NO.2008-275058
[PATENT DOCUMENT 2]
JP UNEXAMINED PATENT PUBLICATION NO.2010-249057
[PATENT DOCUMENT 3]
JP UNEXAMINED PATENT PUBLICATION NO.2004-108329
[PATENT DOCUMENT 4]
JP UNEXAMINED PATENT PUBLICATION NO.2009-57853

[DISCLOSURE OF THE INVENTION]

[PROBLEM TO BE SOLVED BY THE INVENTION]

In the aforementioned control of the vanes of the supercharger, the exact driving of the vanes by the desired manipulation amount as well as the maintaining of the high following property of the actual supercharging pressure relative to a target supercharging pressure (hereinafter, this property may be referred to as --target supercharging pressure following property--) are required.

In order to maintain the target supercharging pressure following property high, it is preferred that the control signal given to the vane actuator is determined in consideration of the time required until the supercharging pressure actually starts changing after the control signal for changing the operation state of the vanes to change the supercharging pressure is given to the vane actuator from the electronic control unit.

In other words, in order to maintain the target supercharging pressure following property high, it is preferred that the control signal given to the vane actuator is determined in consideration of a supercharging pressure responsiveness (i.e. the responsiveness of the supercharging pressure relative to the signal given to the vane actuator).

Then, generally, this can be applied to the vane actuator for driving the vanes as well as an actuator (in the aforementioned example, the vane actuator) for driving a controlled object (in the aforementioned example, the vanes) for controlling a control amount (in the aforementioned example, the supercharging pressure).

The object of the invention of this application is to reflect the exact control amount responsiveness (i.e. the responsiveness of the control amount relative to the control signal given to the actuator) in the control of the actuator.

[MEANS FOR SOLVING THE PROBLEM]

The invention of this application relates to a control device of an internal combustion engine comprising:

a controlled object for variably controlling a control amount relating to the engine; and
a controlled object actuator for changing an operation state of the controlled object.

The control amount changes due to the influence of a combustion in a combustion chamber of the engine or a change property thereof relative to the change of the operation state of the controlled object (hereinafter, this property may be simply referred to as -- change property--) changes due to the influence of the environment surrounding the engine.

In particular, the control amount is a control amount having the change property which changes due to the influence of the change of the pressure of the exhaust gas discharged from the combustion chamber or due to the influence of the change of the environment surrounding the engine.

The environment surrounding the engine is a temperature of a cooling water in the case that the engine comprises the supercharger and the cooling water is used for cooling the engine or a temperature of a lubricant oil in the case that the engine comprises the supercharger and the lubricant oil is used for lubricating elements of the engine or an amount of soots trapped in a catalyst in the case that the engine comprises the supercharger and the catalyst having a function for purifying a particular component in the exhaust gas and trapping the soots in the exhaust gas is arranged in the exhaust passage of the engine.

That is, the easiness of the rotation of the compressor or the turbine of the supercharger changes due to the influence of the change of the temperature of the cooling water or the lubricant oil.

That is, the operation property of the compressor or the turbine changes due to the influence of the change of the temperature of the cooling water or the lubricant oil and as a result, the change property of the control amount such as the supercharging pressure changes.

For the reasons, as an example of the environment surrounding the engine, the temperature of the cooling water or the lubricant oil can be employed.

Further, when the amount of the soots trapped in the catalyst changes, the pressure of the exhaust gas in the exhaust gas upstream of the catalyst changes.

Thus, when the amount of the soots trapped in the catalyst changes, the operation property of the compressor or the turbine may change due to the influence of the change of the soot amount and therefore, in the case that the operation property of the compressor or the turbine changes, the change property of the control amount such as the supercharging pressure changes and on the other hand, even in the case that the operation property of the compressor or the turbine does not change, the change property of the control amount such as the supercharging pressure at least changes.

For the reasons, as an example of the environment surrounding the engine, the amount of the soots trapped in the catalyst may be employed.

The control device of the invention comprises:

means for determining a target operation state of the controlled object; and
means for determining a control signal to be given to the controlled object actuator for feedback controlling the driving state of the controlled object actuator to accomplish the target operation state determined by the target operation state determination means and and giving the determined control signal to the controlled object actuator.

Then, in order to accomplish the aforementioned object, the control device of the invention changes the operation state of the controlled object by driving the controlled object actuator when no fuel is supplied to the combustion chamber, measures as a control amount change delay time, the time from the start of the driving of the controlled object actuator until the start of the change of the control amount controlled by the controlled object, and sets a feedback gain used in the determination of the control signal by the controlled object actuator in consideration of the measured control amount change delay time.

According to the invention, the exact control amount is reflected in the controlled object actuator control. That is, the pressure of the exhaust gas discharged from the combustion chamber changes depending on a combustion amount in the combustion chamber.

Therefore, in the case that the change property of the control amount is subject to the influence of the pressure of the exhaust gas discharged from the combustion chamber, the time from the start of the driving of the controlled object actuator until the start of the change of the control amount (i.e. the control amount change delay time) changes depending on the combustion amount in the combustion chamber.

Then, the amount of the fuel supplied to the combustion chamber continuously changes depending on the requirement relative to the engine and therefore, the combustion amount in the combustion chamber also continuously changes.

Therefore, the control amount change delay time measured when the combustion is generated in the combustion chamber is not a stable control amount change delay time.

On the other hand, according to the invention, when no fuel is supplied to the combustion chamber, the control amount change delay time is measured. That is, when no combustion is generated in the combustion chamber, the control amount change delay time is measured.

Therefore, the control amount change delay time measured according to the invention is a stable control amount change delay time.

Further, when the environment surrounding the engine changes, the change property of the control amount changes.

In this regard, when a torque is produced by the combustion in the combustion chamber, the engine operation state changes and then, the control amount also changes by the influence of the change of the engine operation state.

Thus, when the control amount change delay time is measured under the condition where the torque is produced, the change of the control amount change delay time due to the change of the environment surrounding the engine as well as the change of the control amount change delay time due to factors other than the aforementioned environment change (i.e. the torque) are reflected in the measured control amount change delay time.

In this case, the measured control amount change delay time is not a stable control amount change delay time.

On the other hand, according to the invention, when no combustion is generated in the ccombustion chamber, the control amount change delay timie is measured.

Therefore, the control amount change delay time measured according to the invention is a stable control amount change delay time since the change of the control amount change delay time due to the factors other than the aforementioned environment change is omitted.

Then, in consideration of this stable control amount change delay time, the feedback gain is set and as a result, the stable control amount change delay time is reflected in the controlled object actuator control.

Therefore, according to the invention, the exact control amount responsiveness is reflected in the controlled object actuator control.

In this regard, the feedback control relative to the controlled object actuator may be a feedback control on the basis of a classical or modern control theory.

Further, in the aforementioned invention, the controlled object may be a controlled object for variably controlling the control amount having a change property which changes by the influence of the pressure of the exhaust gas discharged from the combustion chamber or the environment surrounding the engine.

Therefore, for example, in the case that the engine comprises a supercharger having a compressor arranged in an intake passage for compressing a gas supplied to the combustion chamber and an exhaust turbine arranged in an exhaust passage and connected to the compressor and the supercharger has vanes for variably controlling a flow rate of the exhaust gas passing through the exhaust turbine by the operation state of the vanes being changed and a vane actuator for changing the operation state of the vanes, in the aforementioned invention, the controlled object may be the vane and the controlled object actuator may be the vane actuator.

In this case, the target operation state determination means determines a target operation state of the vane, and the controlled object actuator control means determines a control signal to be given to the vane actuator for feedback controlling the driving state of the vane actuator to accomplish the target operation state determined by the target operation state determination means and gives the determined control signal to the vane actuator.

Then, in order to accomplish the aforementioned object, the control device changes the vane operation state by driving the vane actuator when no fuel is supplied to the combustion chamber,

measures as a pressure change delay time which is the control amount change delay time, the time from the start of the driving of the vane actuator until the start of the change of the pressure of the gas compressed by the compressor, and sets a feedback gain used in the determination of the control signal by the vane actuator control means in consideration of the measured pressure change delay time.

In this regard, the pressure of the gas compressed by the compressor (i.e. a so-called "supercharging pressure") is a control amount having a change property which changes by the influence of the pressure of the exhaust gas discharged from the combustion chamber and the environment surrounding the engine.

Therefore, for the same reasons as that aforementioned, according to the invention, the exact supercharging pressure responsiveness (i.e. the responsiveness of the supercharging pressure relative to the giving of the control signal to the vane actuator) is reflected in the vane actuator control.

Further, in the case that the engine comprises an exhaust gas recirculation device for introducing to an intake passage, an exhaust gas discharged from a combustion chamber to an exhaust passage and the exhaust gas recirculation device has an exhaust gas recirculation control valve for variably controlling the amount of the exhaust gas introduced to the intake passage and an exhaust gas recirculation control valve actuator for changing the operation state of the exhaust gas recirculation control valve,
in the aforementioned invention, the controlled object may be the exhaust gas recirculation control valve and the controlled object actuator may be the exhaust gas recirculation control valve actuator.

In this case, the target operation state determination means determines a target operation state of the exhaust gas recirculation control valve and
the controlled object actuator control means determines a control signal to be given to the exhaust gas recirculation control valve actuator for feedback controlling the driving state of the exhaust gas recirculation control valve actuator to accomplish the target operation state determined by the target operation state determination means and gives the determined control signal to the exhaust gas recirculation control valve actuator.

Then, in order to accomplish the aforementioned object, the control device changes the operation state of the exhaust gas recirculation control valve by driving the exhaust gas recirculation control valve actuator when no fuel is supplied to the combustion chamber,
measures as an exhaust gas amount change delay time, the time from the start of the driving of the exhaust gas recirculation control valve actuator until the start of the change of the amount of the exhaust gas introduced into the intake passage, and
sets a feedback gain used in the determination of the control signal by the exhaust recirculation control valve actuator in consideration of the measured exhaust gas amount change delay time.

In this regard, the exhaust gas introduced into the intake passage (hereinafter, this gas may be referred to as --EGR gas--) is a control amount having a change property which changes by the influence of the pressure of the exhaust gas discharged from the combustion chamber and the environment surrounding the engine.

Therefore, for the same reasons as that aforementioned, the exact exhaust gas amount responsiveness (i.e. the responsiveness of the amount of the exhaust gas introduced into the intake passage relative to the giving of the control signal to the exhaust gas recirculation control valve actuator) is reflected in the control of the exhaust gas recirculation control valve actuator.

Further, in the aforementioned invention, the control device may generatees a combustion so as not to produce a torque in the combustion chamber while the engine performs a fuel supply stop operation for stopping the fuel supply to the combustion chamber,
calculate a change rate of the control amount at this time as a control amount change rate and
set a feedback gain used in the determination of the control signal by the controlled object actuator control means in consideration of the measured control amount change delay time and the calculated control amount change rate.

According to this, the following property of the actual control amount relative to the target control amount when the fuel is supplied to the combustion chamber can be maintained high. That is, when the operation state of the controlled object is changed, the control amount changes.

In this regard, even when the change of the operation state of the controlled object is the same, the manner of the change of the control amount is different depending on the combustion amount in the combustion chamber.

In addition, the amount of the fuel supplied to the combustion chamber continuously changes depending on the requirement relative to the engine and therefore, the combustion amount in the combustion chamber continuously changes.

On the other hand, in many cases, when the fuel is supplied to the combustion chamber, the feedback control relative to the controlled object actuator is performed and therefore, if the feedback control relative to the controlled object actuator is performed without considering the manner of the change of the control amount depending on the combustion amount in the combustion chamber, the following property of the actual control amount relative to the target amount decreases comparing with the case that the control is performed in consideration of the manner.

On the other hand, if the combustion is generated in the combustion chamber so as not to produce a torque while the engine performs the fuel supply stop operation, the control amount changes.

In this regard, the torque is not produced and therefore, the change rate of the control amount at this time is not subject to the influence of the torque. That is, the change rate of the control amount at this time is subject only to the influence of the combustion in the combustion chamber.

Therefore, if the change rate of the control amount at this time is calculated and then, the feedback gain used in the determination of the control signal given to the controlled object actuator is set in consideration of the calculated change rate of the control amount, the combustion in the combustion chamber is considered in the feedback gain and therefore, if the feedback control of the controlled object actuator is performed by the control signal determined using the feedback gain, the following property of the actual control amount relative to the target amount can be maintained high even when the fuel is supplied to the combustion chamber.

In this regard, the purpose of generating the combustion in the combustion chamber so as not to produce the torque at the calculation of the control amount change rate is to calculated the exact control amount change rate by eliminating the influence of the torque relative to the change of the control amount.

That is, for example, when the environment surrounding the engine (e.g. the temperature of the cooling water or the lubricant oil) changes, the change property of the control amount changes as explained above and therefore, the control amount change rate also changes.

In this regard, if the torque changes, the engine operation state changes and then, the control amount also changes by the influence of the change of the engine operation state.

Thus, if the control amount change rate is calculated under the condition where the torque is produced, the change of the control amount change rate due to the change of the environment surrounding the engine as well as the change of the control amount change rate due to the factors other than the change of the environment (i.e. the torque) are reflected in the calculated control amount change rate.

In this case, the calculated control amount change rate is not exact.

For this reason, the control amount change rate is calculated under the condition where the combustion is generated in the combustion chamber so as not to produce the torque.

Further, in the case that the engine comprises a supercharger having a compressor arranged in an intake passage for compressing a gas supplied to the combustion chamber and an exhaust turbine arranged in an exhaust passage and connected to the compressor and
the supercharger has vanes for variably controlling the flow rate of the exhaust gas passing through the exhaust turbine by the operation state of vanes being changed and a vane actuator for changing the operation state of the vanes,
in the aforementioned invention, the controlled object may be the vane and the controlled object actuator ma be the vane actuator.

In this case, the target operation state determination means determines the target operation state of the vanes and
the controlled object actuator control means determines the control signal to be given to the vane actuator for feedback controlling the driving state of the vane actuator to accomplish the target operation state determined by the target operation state determination means and gives the determined control signal to the vane actuator.

Then, in order to accomplish the aforementioned object, the control device changes the operation state of the vanes by driving the vane actuator when the no fuel is supplied to the combustion chamber,
measures as a pressure change delay time which is the control amount change delay time, the time from the start of the driving of the vane actuator until the start of the change of the pressure of the gas compressed by the compressor,
generates the combustion in the combustion chamber so as not to produce the torque while the engine performs the fuel supply stop operation,
calculates as a pressure change rate which is the control amount change rate, the change rate of the pressure of the gas at this time compressed by the compressor, and
sets a feedback gain used in the determination of the control signal by the vane actuator control means in consideration of the measured pressure change delay time and the calculated pressure change rate.

According to this, for the same reason as that explained above, the following property of the actual supercharging pressure relative to the target supercharging pressure at the supply of the fuel to the combustion chamber, can be maintained high.

Further, in the case that the engine comprises:

an exhaust gas recirculation device for introducing to an intake passage, an exhaust gas discharged from a combustion chamber to an exhaust passage and
the exhaust gas recirculation device has an exhaust gas recirculation control valve for variably controlling an amount of the exhaust gas introduced to the intake passage by changing the operation state of the valve and an exhaust gas recirculation control valve actuator for changing the operation state of the exhaust gas recirculation control valve,
in the aforementioned invention, the controlled object may be the exhaust gas recirculation control valve and the controlled object actuator may be the exhaust gas recirculation control valve actuator.

In this case, the target operation state determination means determines the target operation state of the exhaust gas recirculation control valve and

the controlled object actuator control means determines a control signal to be given to the exhaust gas recirculation control valve actuator for feedback controlling the driving state of the exhaust gas recirculation control valve actuator to accomplish the target operation state determined by the target operation state determined means and gives the determined control signal to the exhaust gas recirculation control valve actuator.

Then, in order to accomplish the object, the control device changes the operation state of the exhaust gas recirculation control valve by driving the exhaust gas recirculation control valve actuator when no fuel is supplied to the combustion chamber,

measures as an exhaust gas amount change delay time which is the control amount change delay time, the time from the starting of the driving of the exhaust gas recirculation control valve actuator until the start of the change of the amount of the exhaust gas introduced into the intake passage,

generates the combustion in the combustion chamber so as not to produce the torque while the engine performs the fuel supply stop operation,

calculates as an exhaust gas amount change rate which is the control amount change rate, a change rate of the amount of the exhaust gas introduced into the intake passage at this time, and

sets a feedback gain used in the determination of the control signal by the exhaust gas recirculation control valve actuator control means in consideration of the measured exhaust gas amount change delay time and the calculated exhaust gas amount change rate.

According to this, for the same reason as that explained above, the following property of the actual EGR gas amount relative to the target EGR gas amount at the supply of the fuel to the combustion chamber can be maintained high.

Another invention of this application relates to a control device of an internal combustion engine, comprising:

a first controlled object for variably controlling a first control amount which is one of control amounts relating to the engine;

a first controlled object actuator for changing an operation state of the first controlled object;

a second controlled object for variably controlling a second control amount which is one of the control amounts relating to the engine and is different from the first control amount; and

a second controlled object actuator for changing an operation state of the second controlled object.

The first control amount changes at least due to the influence of the combustion in the combustion chamber of the engine or the change property thereof relative to the change of the operation state of the first controlled object (hereinafter, this property may be referred simply to as --change property--) changes by the influence of the environment surrounding the engine.

In particular, the first control amount is, for example, a control amount having a change property which changes by the influence of the change of the exhaust gas discharged from the combustion chamber or by the influence of the environment surrounding the engine.

The second control amount changes at least due to the influence of the combustion in the combustion chamber of the engine or the change property thereof relative to the change of the operation state of the second controlled object (hereinafter, this property may be referred simply to as --change property--) changes by the influence of the environment surrounding the engine.

In particular, the second control amount is, for example, a control amount having a change property which changes by the influence of the change of the exhaust gas discharged from the combustion chamber or by the influence of the environment surrounding the engine.

As explained above, the environment surrounding the engine is, for example, a temperature of a cooling water in the case that the engine comprises a supercharger and the cooling water is used for cooling the engine or a temperature of a lubrication oil in the case that the engine comprises a supercharger and the lubricant oil is used for lubricating the elements of the engine or an amount of a soot trapped in a catalyst arranged in the exhaust passage of the engine for trapping the soot in the exhaust gas and purifying a particular component in the exhaust gas in the case that the engine comprises a supercharger.

The control device of this invention comprises:

first target operation state determination means for determining a target operation state of the first controlled object;

first controlled object actuator control means for determining a control signal to be given to the first controlled object actuator for feedback controlling the driving state of the first controlled object actuator to accomplish the target operation state determined by the first target operation state determination means and giving the determined control signal to the first controlled object actuator;

second target operation state determination means for determining a target operation state of the second controlled object; and

second controlled object actuator control means for determining a control signal to be given to the second controlled object actuator for feedback controlling the driving state of the second controlled object actuator to accomplish the target operation state determined by the second target operation state determination means and giving the determined control signal to the second controlled object actuator.

Then, in order to accomplish the object, the control device changes the operation state of the first controlled object by driving the first controlled object actuator when no fuel is supplied to the combustion chamber, measures as a first control amount change delay time at the first controlled object being manipulated, the time from the starting of the driving of the first controlled object actuator until the start of the change of the first control amount, measures as a second control amount change delay time at the first controlled object being manipulated, the time from the starting of the driving of the first controlled object actuator until the start of the change of the second control amount, changes the operation state of the second controlled object by driving the second controlled object actuator when no fuel is supplied to the combustion chamber, measures as a first control amount change delay time at the second controlled object being manipulated, the time from the starting of the driving of the second controlled object actuator until the start of the change of the first control amount, and measures as a second control amount change delay time at the second controlled object being manipulated, the time from the starting of the driving of the second controlled object actuator until the start of the change of the second control amount.

Then, the control device of this invention sets a feedback gain used in the determination of the control signal by the first controlled object actuator control means in consideration of the measured two first control amount change delay times, and sets a feedback gain used in the determination of the control signal by the second controlled object actuator control means in consideration of the measured two second control amount change delay times.

According to this invention, the accurate controlled object responsiveness is reflected in the controls of the first and second controlled object actuators.

That is, the pressure of the exhaust gas discharged from the combustion chamber changes depending on the combustion amount in the combustion chamber.

Therefore, in the case that the change property of the control amount is subject to the influence of the pressure of the exhaust gas discharged from the combustion chamber, the time from the start of the driving of the controlled object actuator until the start of the change of the control amount (i.e. the control amount change delay time) changes depending on the combustion amount in the combustion chamber.

Then, the amount of the fuel supplied to the combustion chamber changes continuously depending on the requirements for the engine and therefore, the combustion amount in the combustion chamber also changes continuously.

Therefore, the control amount change delay time measured when the combustion is generated in the combustion chamber may not be a stable control amount change delay time.

On the other hand, according to this invention, when no fuel is supplied to the combustion chamber, the first and second control amount change delay times are measured.

That is, when no combustion is generated in the combustion chamber, the first and second control amount change delay times are measured.

Therefore, the control amount change delay times measured according to this invention are stable control amount change delay times.

Further, when the environment surrounding the engine changes, the engine operation state changes and the first and second control amounts also change by the influence of the change of the engine operation state.

Thus, if the first and second control amount delay times are measured in the condition where the torque is produced, the change of the control amount change delay time due to the change of the environment surrounding the engine as well as the change of the control amount change delay time due to a factor other than the change of the environment (i.e. the torque) are reflected in the measured control amount change delay time.

In this case, the measured control amount change delay time may not be a stable control amount change delay time.

On the other hand, according to this invention, when no combustion is generated in the combustion chamber, the first and second control amount change delay times are measured.

Therefore, it can be realized that the first and second control amount change delay times measured according to this invention are stable control amount change delay times since the change of the control amount change delay time due to the factor other than the change of the environment is eliminated.

Then, the first and second control amounts are subject to the influence of the pressure of the exhaust gas discharged from the combustion chamber.

Therefore, if the operation state of the first controlled object is changed to change the first control amount, the pressure of the exhaust gas discharged from the combustion chamber changes due to the change of the operation state of the first controlled object and if the operation state of the second controlled object is changed to change the second control amount, the pressure of the exhaust gas discharged from the combustion chamber changes due to the change of the operation state of the second controlled object.

Therefore, the change of the operation state of the first controlled object influences the first and second control amounts and therefore, in the case that the second control amount change delay time is considered in the setting of the feedback gain, in order to reflect the accurate control amount responsiveness in the control of the second controlled object actuator, it is preferred that the influence of the change of the operation state of the first controlled object to the second control amount is considered.

Therefore, the change of the operation state of the second controlled object influences the first and second control amounts and therefore, in the case that the first control amount change delay time is considered in the setting of the feedback gain, in order to reflect the accurate control amount responsiveness in the control of the first controlled object actuator, it is preferred that the influence of the change of the operation state of the second controlled object to the first control amount is considered.

According to this invention, the first control amount change delay time when the operation state of the first controlled object is changed by the first controlled object actuator as well as the first control amount change delay time when the operation state of the second controlled object is changed by the second controlled object actuator are considered in the setting of the feedback gain used in the determination of the control signal by the first controlled object actuator control means.

Therefore, the accurate control amount responsiveness is reflected in the control of the first controlled object actuator.

In addition, the second control amount change delay time when the operation state of the second controlled object is changed by the second controlled object actuator as well as the second control amount change delay time when the operation state of the first controlled object is changed by the first controlled object actuator are considered in the setting of the feedback gain used in the determination of the control signal by the second controlled object actuator control means.

Therefore, the accurate control amount responsiveness is reflected in the control of the second controlled object actuator.

The feedback control relating to the first controlled object actuator may be the feedback control on the basis of the classical control theory or the modern control theory.

The feedback control relating to the second controlled object actuator may be the feedback control on the basis of the classical control theory or the modern control theory.

Further, in the aforementioned invention, the first and second controlled objects may be any controlled objects as far as they are the controlled objects for variably controlling the control amount having the change property which changes due to the influence of the pressure of the exhaust gas discharged from the combustion chamber or due to the influence of the environment surrounding the engine.

Therefore, in the aforementioned invention, in the case that the engine comprises:

a supercharger having a compressor arranged in an intake passage for compressing a gas supplied to a combustion chamber and an exhaust turbine arranged in an exhaust passage and connected to the compressor; and an exhaust gas recirculation device for introducing to the intake passage, an exhaust gas discharged from the combustion chamber to the exhaust passage,

the the supercharger has vanes for variably controlling the flow rate of the exhaust gas passing through the exhaust turbine by changing the operation state of the vanes and a vane actuator for changing the operation state of the vanes, and

the exhaust gas recirculation device has an exhaust gas recirculation control valve for variably controlling the amount of the exhaust gas introduced to the intake passage by changing the operation state of the valve and an exhaust gas recirculation control valve actuator for changing the operation state of the exhaust gas recirculation control valve, the first controlled object may be the vane, the first controlled object actuator may be the vane actuator, the second controlled object may be the exhaust recirculation control valve and the second controlled object actuator may be the exhaust gas recirculation control valve actuator.

In this case, the first target operation state determination means determines the target operation state of the vane, the first controlled object actuator control means determines a control signal to be given to the vane actuator for feedback controlling the driving state of the vane actuator to accomplish the target operation state determined by the first target operation state determination means and gives the determined control signal to the vane actuator,

the second target operation state determination means determines the target operation state of the exhaust gas recirculation control valve and

the second controlled object actuator control means determines a control signal to be given to the exhaust gas recirculation control valve actuator for feedback controlling the driving state of the exhaust gas recirculation control valve actuator to accomplish the target operation state determined by the second target operation state determination means and gives the determined control signal to the exhaust gas recirculation control valve.

Then, in order to accomplish the aforementioned object, the control device changes the operation state of the vane by driving the vane actuator when no fuel is supplied to the combustion chamber,

measures as a pressure change delay time at the vane being manipulated which is the first control amount change delay time at the first controlled object being manipulated, the time from the start of the driving of the vane actuator until the start of the change of the pressure of the gas compressed by the compressor,

measures as an exhaust gas amount change delay time at the vane being manipulated which is the second control amount change delay time at the first controlled object being manipulated, the time from the start of the driving of the vane actuator until the start of the change of the amount of the exhaust gas introduced to the intake passage,

changes the operation state of the exhaust gas recirculation control valve by driving the exhaust gas recirculation control valve actuator when no fuel is supplied to the combustion chamber,

measures as a pressure change delay time at the exhaust gas recirculation control valve being manipulated which is the first control amount change delay time at the second controlled object being manipulated, the time from the start of the driving of the exhaust gas recirculation control valve actuator until the start of the change of the pressure of the gas compressed by the compressor, and

measures as an exhaust gas amount change delay time at the exhaust gas recirculation control valve being manipulated which is the second control amount change delay time at the second controlled object being manipulated, the time from the start of the driving of the exhaust gas recirculation control valve actuator until the start of the change of the amount of the exhaust gas introduced to the intake passage.

Then, the control device sets a feedback gain used in the determination of the control signal by the vane actuator control means in consideration of the measured two pressure change delay times, and

sets a feedback gain used in the determination of the control signal by the exhaust gas recirculation control valve actuator control means in consideration of the measured two exhaust gas amount change delay times.

According to this invention, for the same reason as that explained above, the accurate supercharging pressure responsiveness (i.e. the responsiveness of the supercharging pressure relative to the giving of the control signal to the vane actuator) is reflected in the control of the vane actuator and the accurate exhaust gas amount responsiveness (i.e. the responsiveness of the amount of the exhaust gas introduced to the intake passage relative to the giving of the control signal to the exhaust gas recirculation control valve actuator) is reflected in the control of the exhaust gas recirculation control valve actuator.

Further, in the aforementioned invention, the control device may generate the combustion in the combustion chamber so as not to produce the torque while the engine performs the fuel supply stop operation for stopping the fuel supply to the combustion chamber,

calculate the change rate of the first control amount as a first control amount change rate,

calculate the change rate of the second control amount as a second control amount change rate,

set a feedback gain used in the determination of the control signal by the first controlled object actuator control means in consideration of the measured first control amount change delay time and the calculated first control amount change rate, and

set a feedback gain used in the determination of the control signal by the second controlled object actuator control means in consideration of the measured second control amount change delay time and the calculated second control amount change rate.

According to this, the following property of the actual first control amount relative to the target first control amount and the following property of the actual second control amount relative to the target second control amount when the fuel supply to the combustion chamber is performed can be maintained high.

That is, when the operation states of the first and second controlled objects are changed, the first and second control amounts change.

At this time, even if the change of the operation states of the first and second controlled objects are the same as each other, the manner of the change of the first and second control amounts varies depending on the combustion amount in the combustion chamber.

Then, the amount of the fuel supplied to the combustion chamber changes continuously depending on the requirement for the engine and therefore, the combustion amount in the combustion chamber changes continuously.

On the other hand, in many cases, when the fuel supply to the combustion chamber is performed, the feedback control of the controlled object actuator is performed and therefore, if the feedback controls of the first and second controlled object actuators are performed not in consideration of the manner of the change of the first and second control amounts depending on the combustion amount in the combustion chamber, the following property of the actual first control amount relative to the target first control amount and the following property of the actual second control amount relative to the target second control amount decrease, compared with the case that the feedback controls of the first and second controlled object actuators are performed not in consideration of the manner of the change of the first and second control amounts depending on the combustion amount in the combustion chamber.

On the other hand, if the combustion is generate in the combustion chamber so as not to the torque while the engine performs the fuel supply stop operation, the first and second control amounts change.

Then, at this time, no torque is produced and therefore, the change rates of the first and second control amounts are not subject to the influence of the torque.

That is, the change rates of the first and second control amounts are subject only to the influence of the combustion in the combustion chamber.

Therefore, if the change rates of the first and second control amounts are calculated and the feedback gains used in the control signals given to the first and second controlled objects are set in consideration of these calculated change rates of the first and second control amounts, the combustion in the combustion chamber is considered in these feedback gains and therefore, if the feedback control of the first and second controlled object actuators is performed by the control signals determined using these feedback gains, even when the fuel supply to the combustion chamber is performed, the following property of the actual first control amount relative to the target first control amount and the following property of the actual second control amount relative to the target second control amount can be maintained high.

The purpose of generating the combustion in the combustion chamber so as not to produce the torque at the calculation of the first and second control amount change rates is to calculate the accurate first and second control amount change rates by eliminating the influence of the torque to the first and second control amounts.

That is, as explained above, for example, when the environment surrounding the engine (e.g. the temperature of the cooling water or the lubricant oil) changes, the change properties of the first and second control amounts changes as explained above and therefore, the first and second control amount change rates also change.

In this regard, when the torque changes, the engine operation state changes and then, the first and second control amounts also change by the influence of the change of this engine operation state.

Thus, when the first and second control amount change rates are calculated under the condition where the torque is produced, the change of each control amount change rate due to the change of the environment surrounding the engine as well as the change of each control amount change rate due to the factor other than the change of the environment (i.e. the torque) are reflected in the calculated first and second control amount change rates.

In this case, the calculated first and second control amount change rates may not be accurate.

For this reason, the control amount change rates are calculated under the condition where the combustion is generated in the combustion chamber so as not to produce the torque.

Further, in the case where the engine comprises:

a supercharger having a compressor arranged in an intake passage for compressing a gas supplied to a combustion chamber and an exhaust turbine arranged in an exhaust passage and connected to the compressor; and an exhaust gas recirculation device for introducing to the intake passage, an exhaust gas discharged from the combustion chamber to the exhaust passage,
the supercharger has vanes for variably controlling a flow rate of the exhaust gas passing through the exhaust turbine by changing the operation state of the vane and a vane actuator for changing the operation states of the vanes,and
the exhaust gas recirculation device has an exhaust gas recirculation control valve for variably controlling the amount of the exhaust gas introduced to the intake passage by changing the operation state of the valve and an exhaust gas recirculation control valve actuator for changing the operation state of the exhaust gas recirculation control valve, in the aforementioned invention, the first controlled object may be the vane, the first controlled object actuator may be the vane actuator, the second controlled object may be the exhaust gas recirculation control valve and the second controlled object actuator may be the exhaust gas recirculation control valve actuator.

In this case, the first target operation state determination means determines the target operation state of the vane, the first controlled object actuator control means determines a control signal to be given to the vane actuator for feedback controlling the driving state of the vane actuator to accomplish the target operation state determined by the first target operation state deterrriination means and gives the determined control signal to the vane actuator, the second target operation state determination means determines the target operation state of the exhaust gas recirculation control valve, and the second controlled object actuator control means determines a control signal to be given to the exhaust gas recirculation control valve actuator for feedback controlling the driving state of the exhaust gas recirculation control valve actuator to accomplish the target operation state determined by the second target operation state determination means and gives the determined control signal to the exhaust gas recirculation control valve actuator.

Then, in order to accomplish the aforementioned object, the control device changes the operation state of the first controlled object by driving the first controlled object actuator when no fuel is supplied to the combustion chamber, measures as a first control amount change delay time at the first controlled object being manipulated, the time from the start of the driving of the first controlled object actuator until the start of the change of the first control amount, measures as a second control amount change delay time at the first controlled object being manipulated, the time from the start of the driving of the first controlled object actuator until the start of the change of the second control amount, changes the operation state of the second controlled object by driving the second controlled object actuator when no fuel is supplied to the combustion chamber,

measures as a first control amount change delay time at the second controlled object being manipulated, the time from the start of the driving of the second controlled object actuator until the start of the change of the first control amount, measures as a second control amount change delay time at the second controlled object being manipulated, the time from the start of the driving of the second controlled object actuator until the start of the change of the second control amount,

generates the combustion in the combustion chamber so as not to produce the torque while the engine performs the fuel supply stop operation,

calculates as a pressure change rate which is the first control amount change rate, the change rate of the pressure of the gas compressed by the compressor, and

calculates as an exhaust gas amount change rate which is the second control amount change rate, the change rate of the amount of the exhaust gas introduced to the intake passage.

Then, the control device sets a feedback gain used in the determination of the control signal by the vane actuator control means in consideration of the measured two pressure change delay times and the calculated pressure change rate, and

sets a feedback gain used in the determination of the control signal by the exhaust gas recirculation control valve actuator control means in consideration of the measured two exhaust gas amount change delay times and the calculated exhaust gas amount change rate.

According to this invention, for the same reason as that explained above, the following property of the actual supercharging pressure relative to the target supercharging pressure and the following property of the actual EGR gas amount relative to the target EGR gas amount when the fuel supply to the combustion chamber is performed, can be maintained high.


[BRIEF DESCRIPTION OF THE DRAWINGS]


[FIG.1]

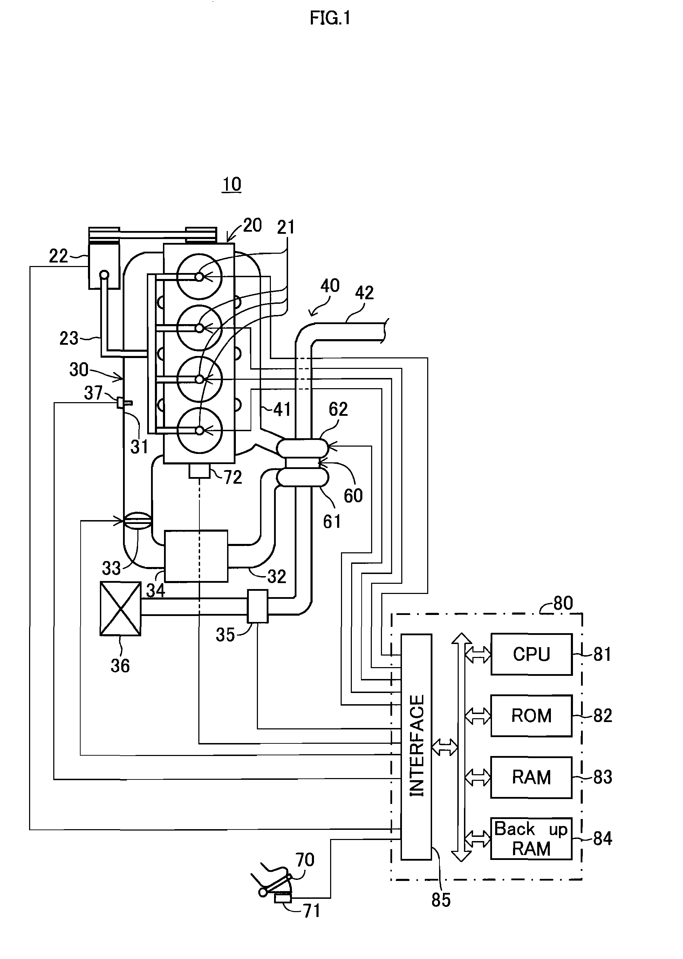

Fig.1 is a view showing an internal combustion engine which a control device of this invention is applied.
[FIG.2]

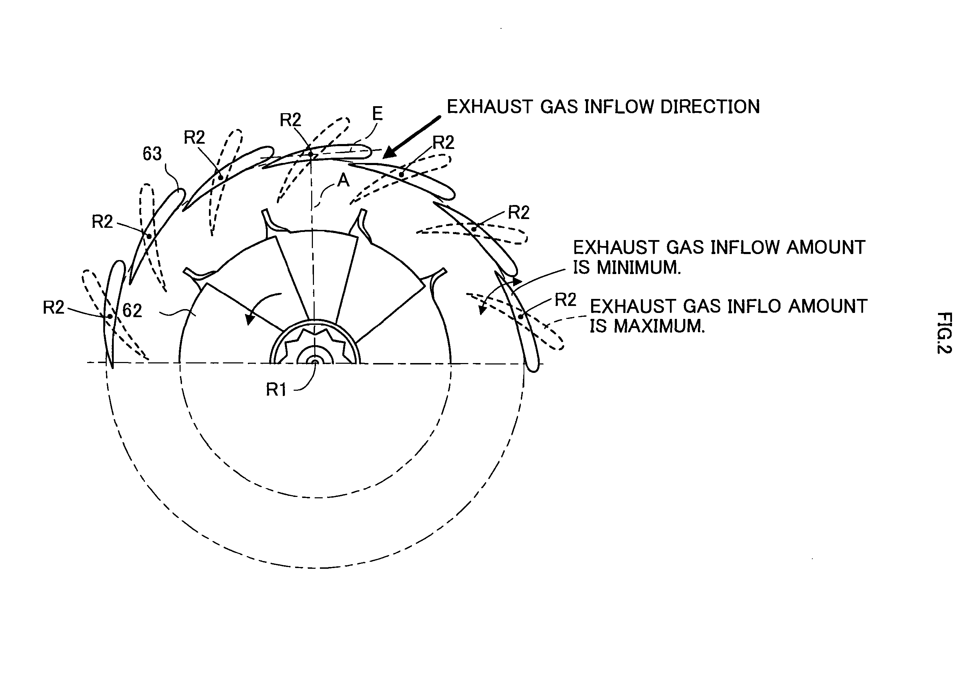

Fig.2 is a view showing a surrounding portion of an exhaust turbine of a supercharger of the engine shown in Fig.1.
[FIG.3]

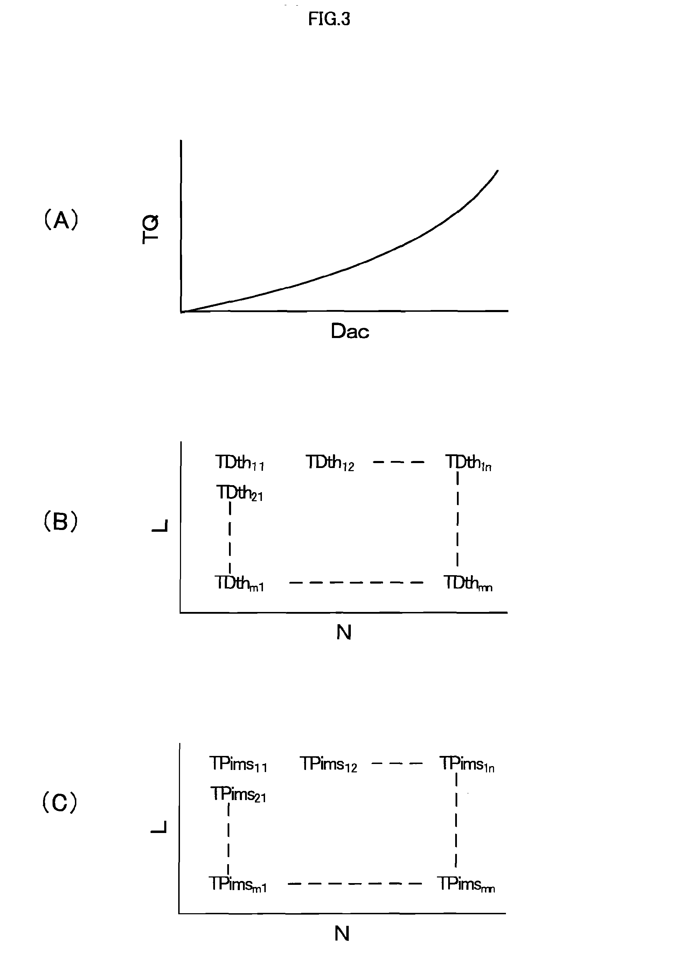

Fig.3(A) is a view showing a map used for setting a target fuel injection amount, Fig.3(B) is a view showing a map used for setting a target throttle valve opening degree and Fig.3(C) is a view showing a map used for setting a target supercharging pressure.
[FIG.4]

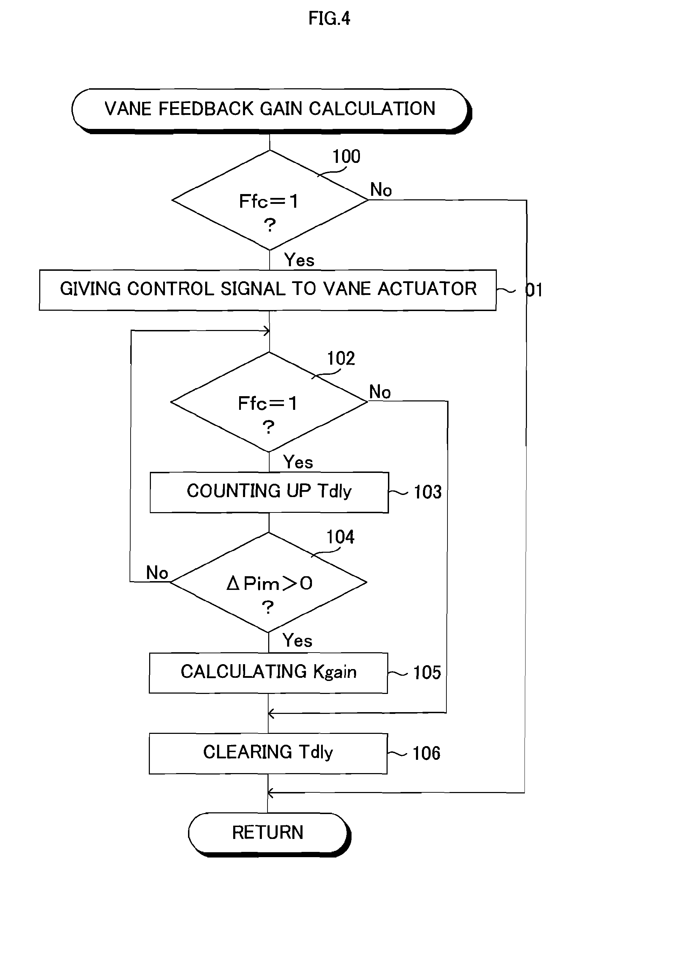

Fig.4 is a view showing an example of a routine for performing a calculation of a vane feedback gain of the first embodiment.
[FIG.5]

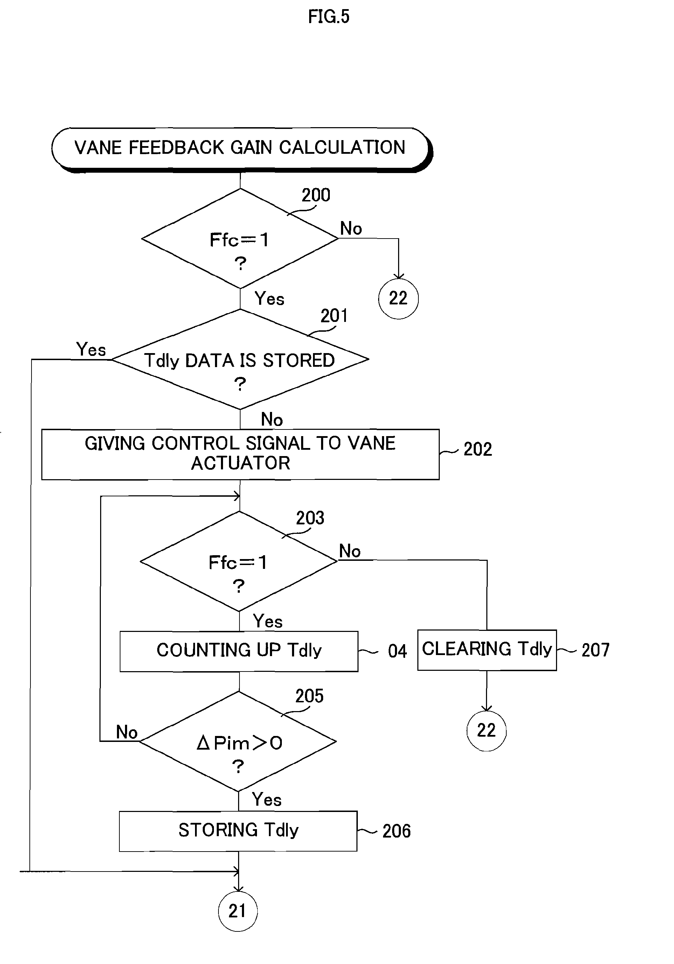

Fig.5 is a view showing a portion of an example of a routine for performing a calculation of a vane feedback gain of the second embodiment.
[FIG.6]

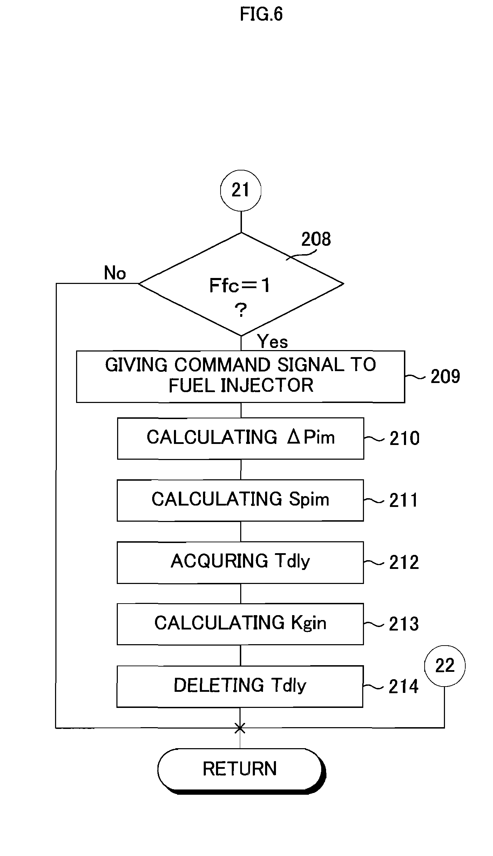

Fig.6 is a view showing a portion of the example of the routine for performing the calculation of the vane feedback gain of the second embodiment.
[FIG.7]

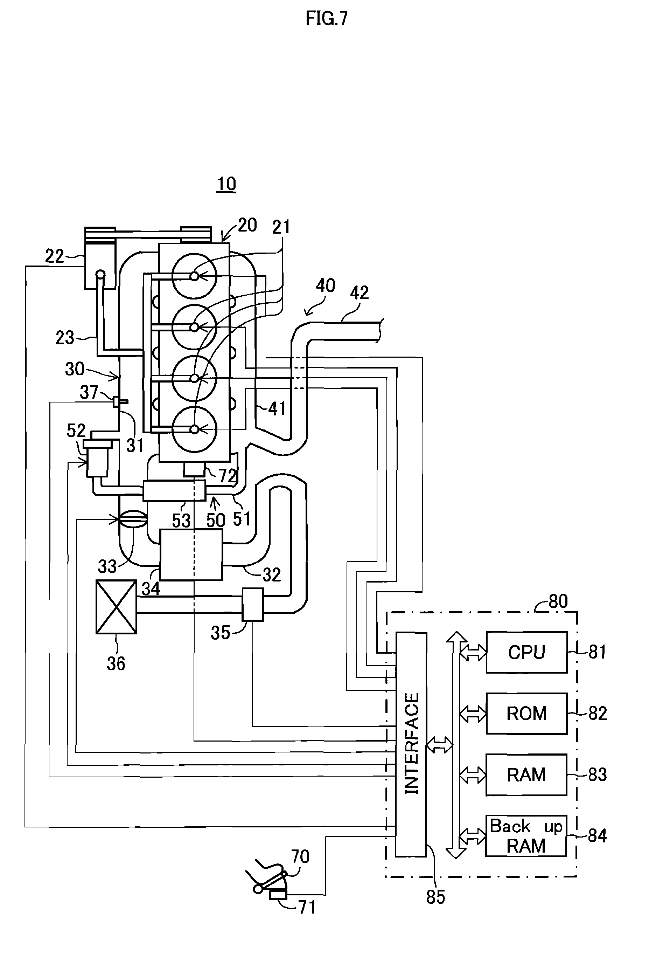

Fig.7 is a view showing an internal combustion engine which the control device of this invention is applied.
[FIG.8]

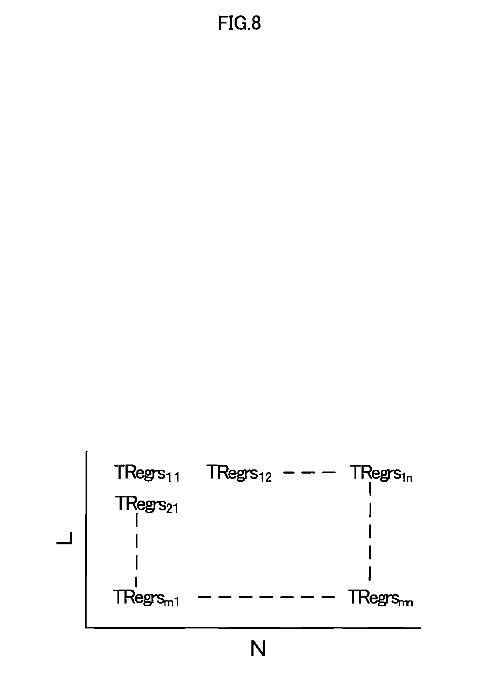

Fig.8 is a view showing a map used for setting a target EGR rate.
[FIG.9]

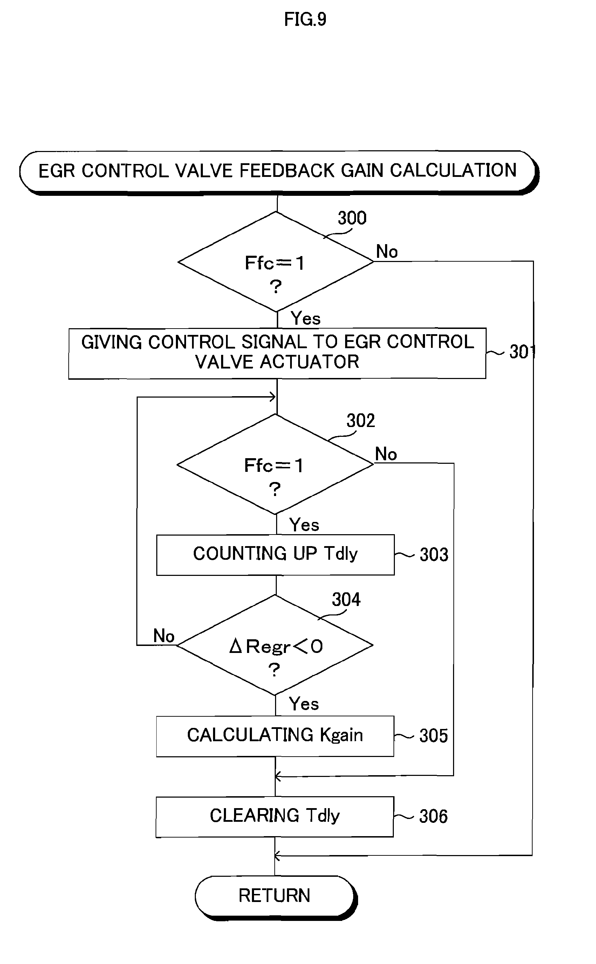

Fig.9 is a view showing an example of a routine for performing a calculation of an EGR control valve feedback gain of the third embodiment.
[FIG.10]

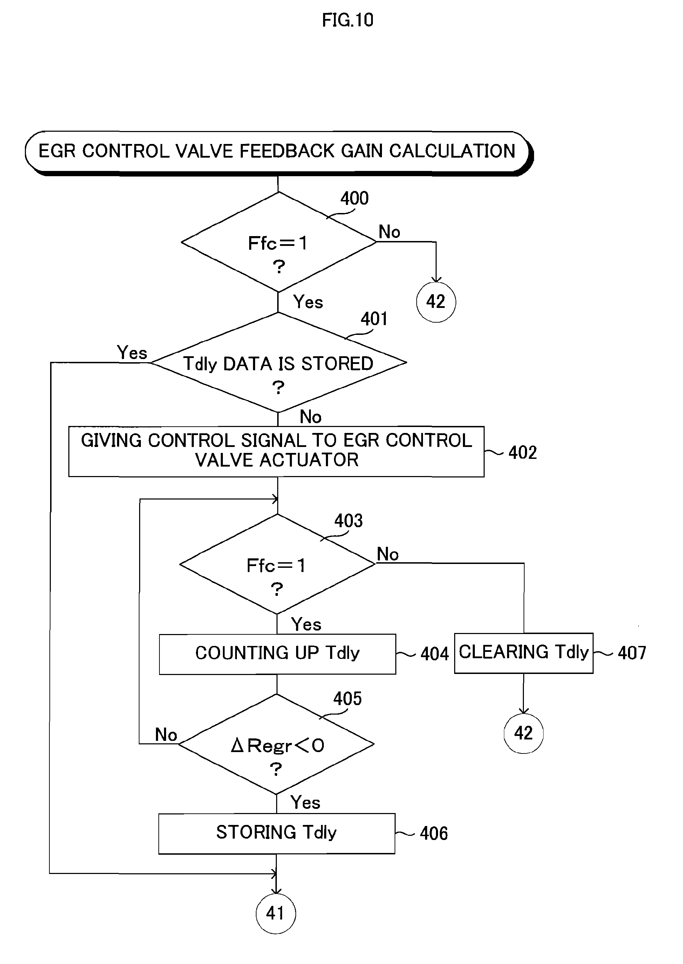

Fig.10 is a view showing a portion of an example of a routine for performing a calculation of a vane feedback gain of the fourth embodiment.
[FIG.11]

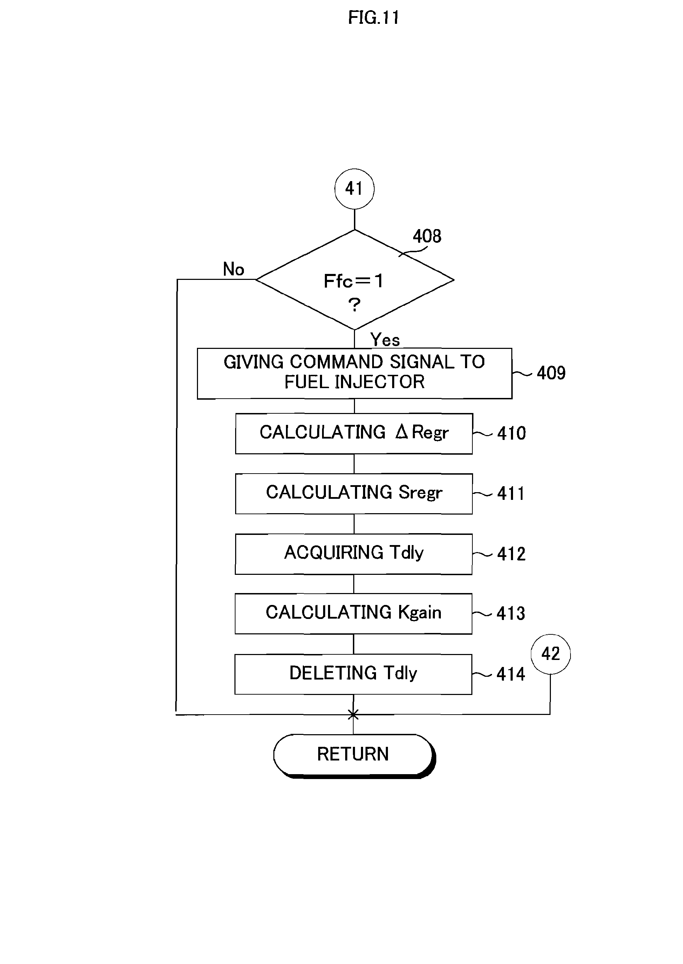

Fig.11 is a view showing a portion of the example of the routine for performing the calculation of the vane feedback gain of the fourth embodiment.
[FIG.12]

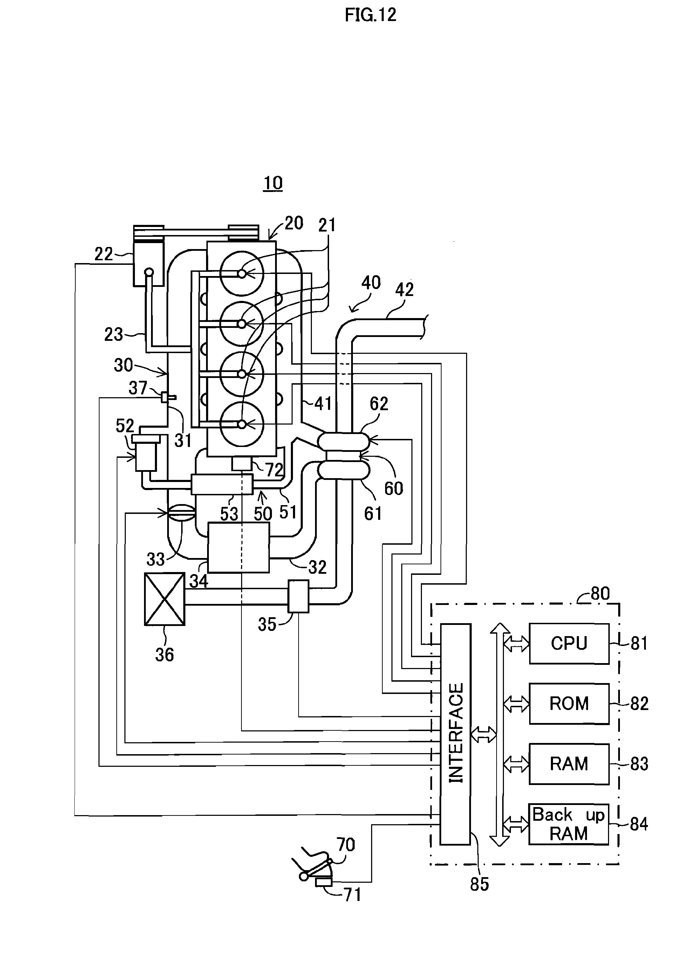

Fig.12 is a view showing an internal combustion engine which the control device of this invention is applied.
[FIG.13]

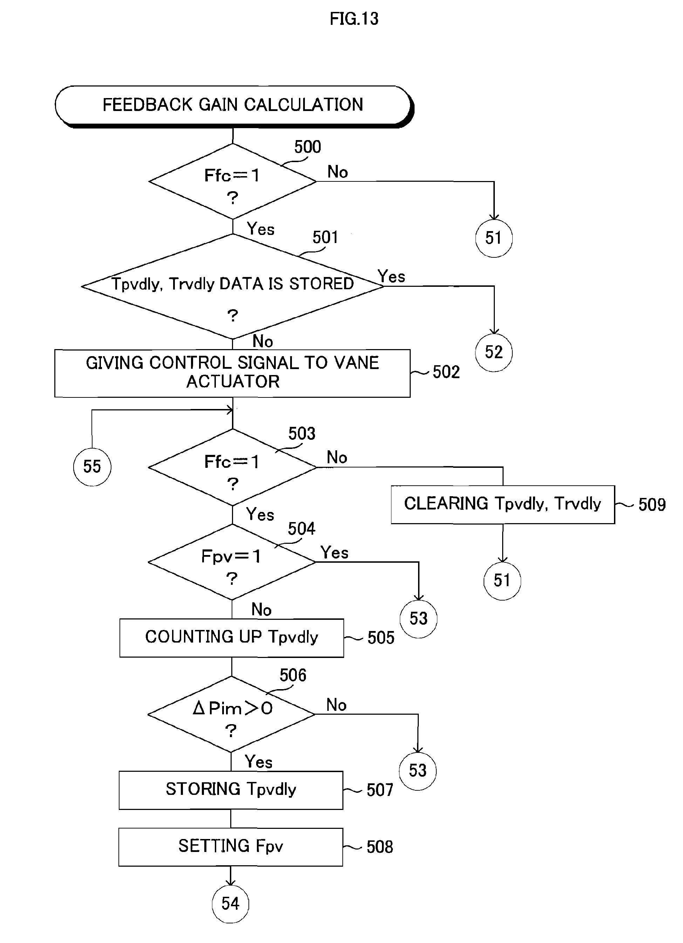

Fig.13 is a view showing a portion of an example of a routine for performing a calculation of a vane feedback gain and an EGR control valve feedback gain of the fifth embodiment.
[FIG.14]

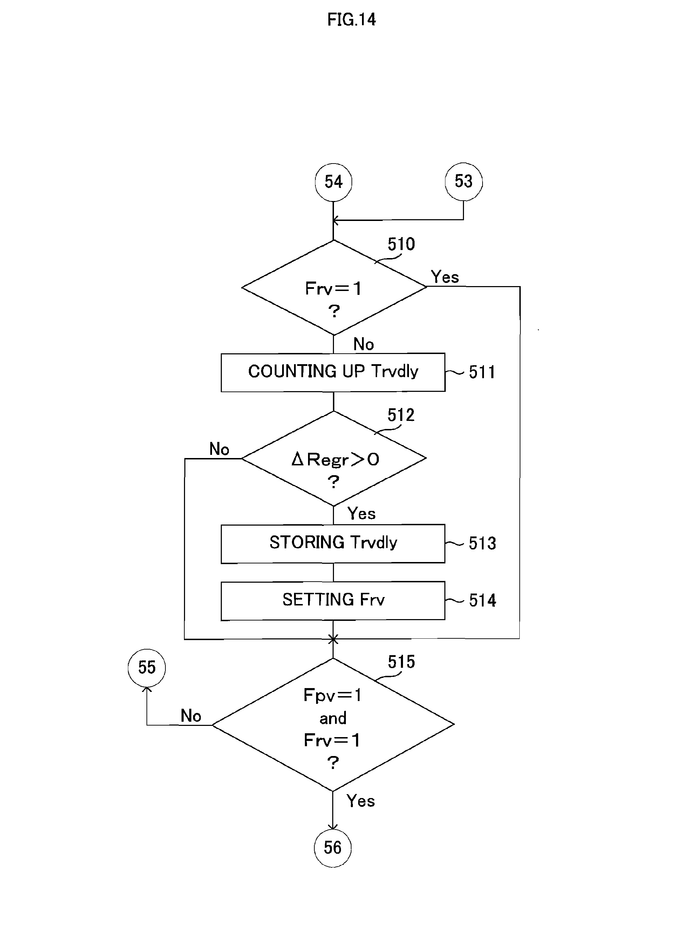

Fig.14 is a view showing a portion of the example of the routine for performing the calculation of the vane feedback gain and the EGR control valve feedback gain of the fifth embodiment.
[FIG.15]

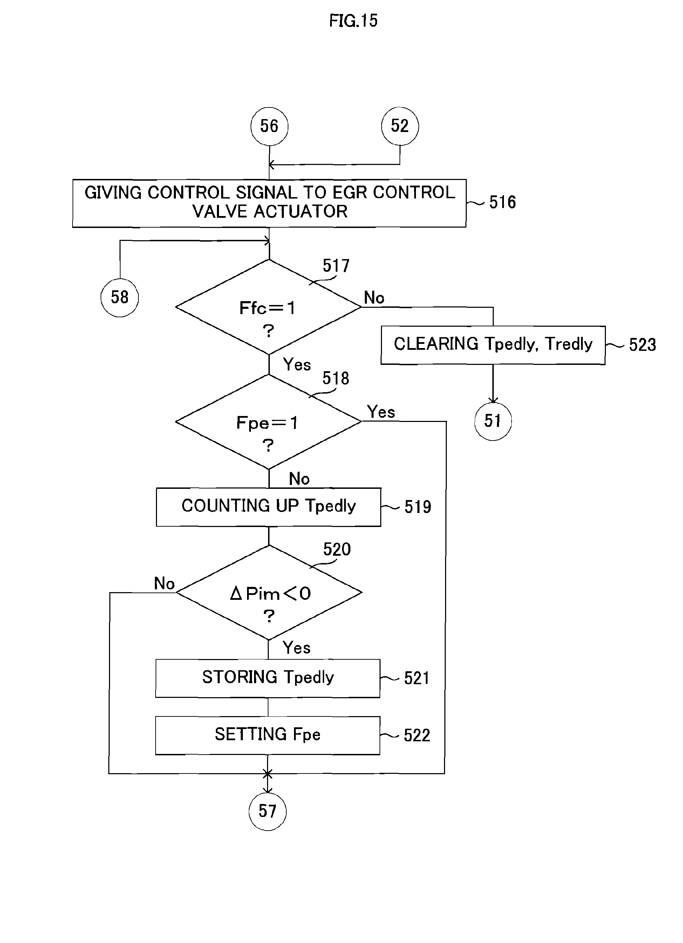

Fig.15 is a view showing a portion of the example of the routine for performing the calculation of the vane feedback gain and the EGR control valve feedback gain of the fifth embodiment.
[FIG.16]

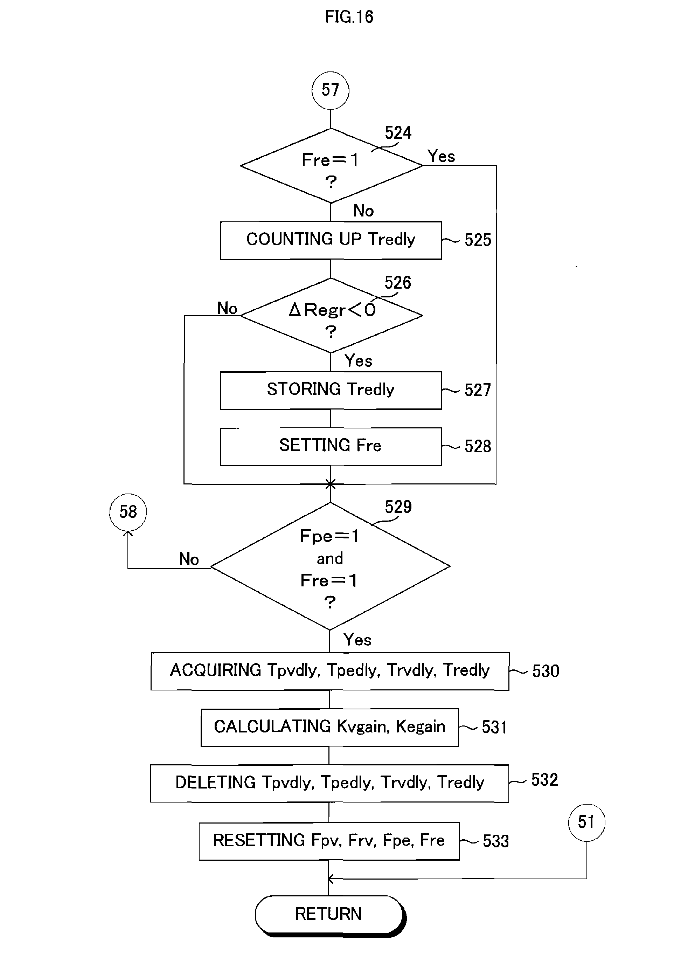

Fig.16 is a view showing a portion of the example of the routine for performing the calculation of the vane feedback gain and the EGR control valve feedback gain of the fifth embodiment.
[FIG.17]

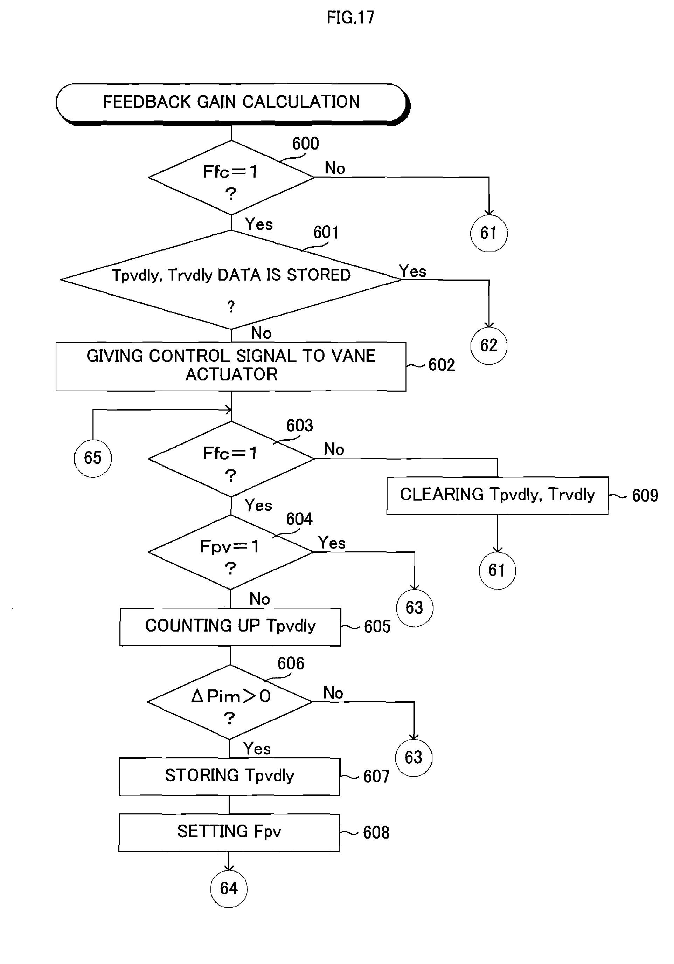

Fig.17 is a view showing a portion of an example of a routine for performing a calculation of a vane feedback gain and an EGR control valve feedback gain of the sixth embodiment.
[FIG.18]

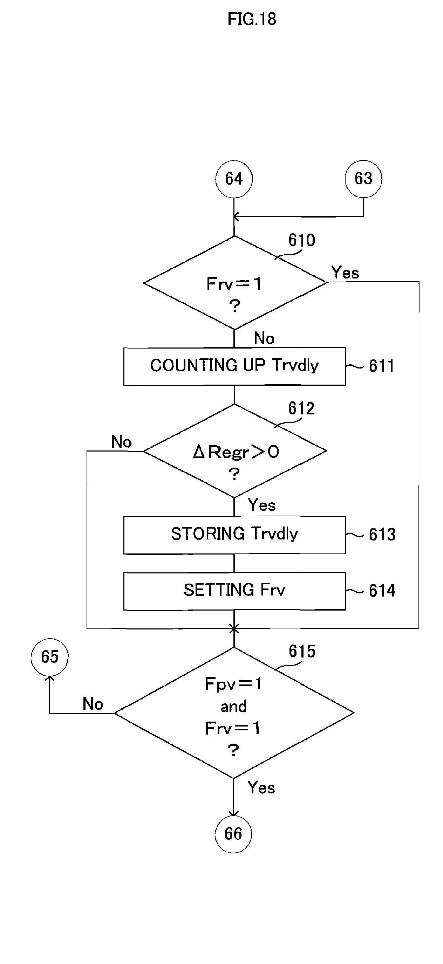

Fig.18 is a view showing a portion of the example of the routine for performing the calculation of the vane feedback gain and the EGR control valve feedback gain of the sixth embodiment.
[FIG.19]

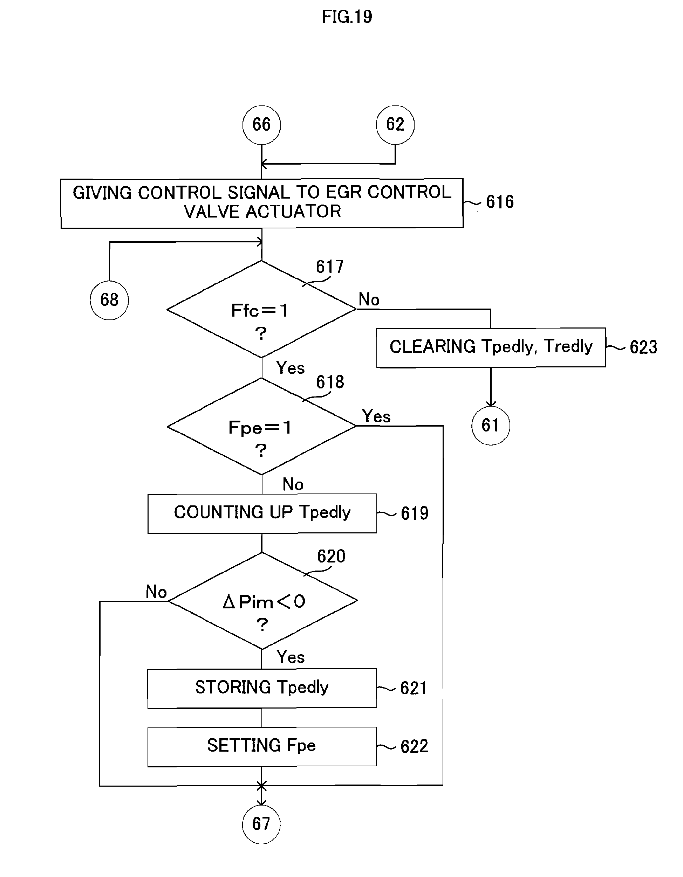

Fig.19 is a view showing a portion of the example of the routine for performing the calculation of the vane feedback gain and the EGR control valve feedback gain of the sixth embodiment.
[FIG.20]

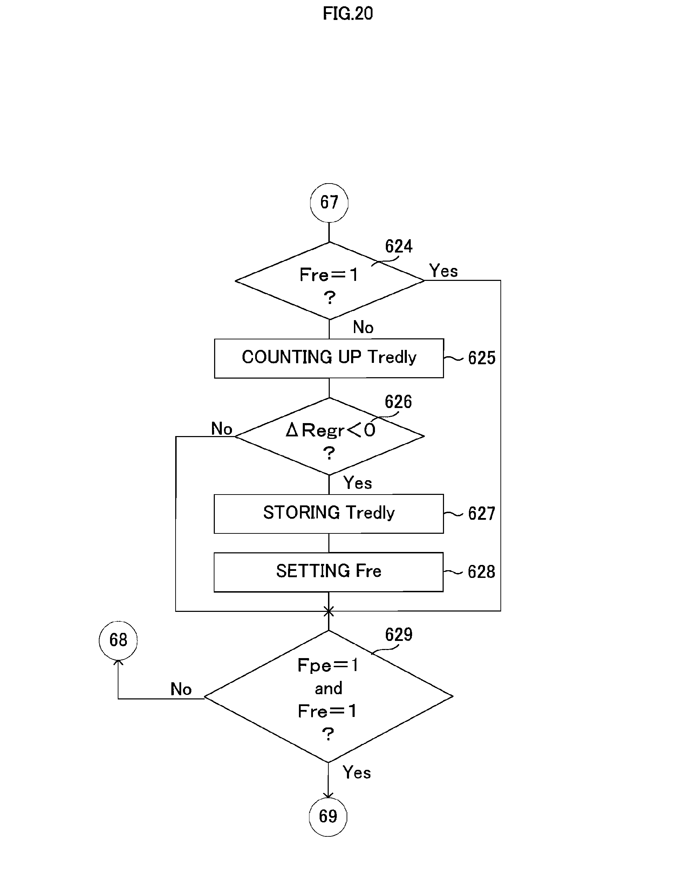

Fig.20 is a view showing a portion of the example of the routine for performing the calculation of the vane feedback gain and the EGR control valve feedback gain of the sixth embodiment.
[FIG.21]

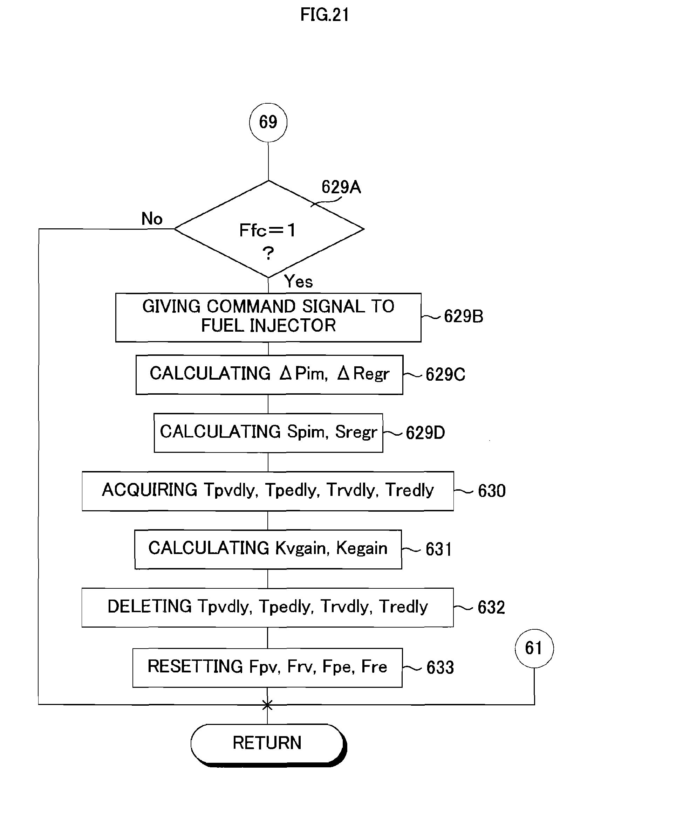

Fig.21 is a view showing a portion of the example of the routine for performing the calculation of the vane feedback gain and the EGR control valve feedback gain of the sixth embodiment.

[MODE FOR CARRYING OUT THE INVENTION]

An embodiment of a control device of an internal combustion engine of the invention (hereinafter, this embodiment may be referred to as --first embodiment--) will be explained.

In the following explanation, the term "engine operation" means --operation of an internal combustion engine--, the term "engine speed" means --rotation speed of the engine-- and the term "fuel injection amount" means --an amount of a fuel injected from a fuel injector--.

An internal combustion engine which a control device of the first embodiment is applied, is shown in Fig.1.

In Fig.1, 20 denotes a body of the engine 10, 21 denotes fuel injectors, 22 denotes a fuel pump, 23 denotes a fuel supply passage, 30 denotes an intake passage, 31 denotes an intake manifold, 32 denotes an intake pipe, 33 denotes a throttle valve, 34 denotes an intercooler, 35 denotes an air flow meter, 36 denotes an air cleaner, 37 denotes a supercharging pressure sensor, 40 denotes an exhaust passage, 41 denotes an exhaust manifold, 42 denotes an exhaust pipe, 60 denotes a supercharger, 70 denotes an acceleration pedal, 71 denotes an acceleration pedal depression amount sensor, 72 denotes a crank position sensor and 80 denotes an electronic control unit.

The intake passage 30 is constituted by the intake manifold 31 and the intake pipe 32. The exhaust passage 40 is constituted by the exhaust manifold 41 and the exhaust pipe 42.

The electronic control unit 80 is constituted by a micro computer. The electronic control unit 80 has a CPU (a micro processor) 81, a ROM (a read only memory) 82, a RAM (a random access memory) 83, a backup RAM 84 and an interface 85. These CPU 81, ROM 82, RAM 83, backup RAM 84 and interface 85 are connected to each other by a bidirectional bus.

The fuel injectors 21 are arranged on the body 20 of the engine. The fuel pump 22 is connected to the fuel injectors 21 via the fuel supply passage 23. The fuel pump 22 supplies a fuel having a high pressure to the fuel injectors 21 via the fuel supply passage 23.

The fuel injectors are electrically connected to the interface 85 of the electronic control unit 80. The electronic control unit 80 gives to the fuel injectors 21, command signals for making the fuel injectors 21 inject the fuel.

The fuel pump 22 is electrically connected to the interface 85 of the electronic control unit 80. The electronic control unit 80 gives to the fuel pump 22, a control signal for controlling the operation of the fuel pump 22 so as to maintain the pressure of the fuel supplied from the fuel pump 22 to the fuel injectors 21 at a predetermined pressure.

The fuel injectors 21 are arranged on the body 20 of the engine such that their fuel injection holes are exposed in combustion chambers. Therefore, when the command signal is given from the electronic control unit 80 to the fuel injector 21, the fuel injector 21 injects the fuel directly into the combustion chamber.

The intake manifold 31 is divided at its one end to a plurality of pipes and each pipe is connected to a corresponding intake port (not shown) formed corresponding to the combustion chamber of the body 20 of the engine. The intake manifold 31 is connected at its other end to one end of the intake pipe 32.

The exhaust manifold 41 is divided at its one end to a plurality of pipes and each pipe is connected to a corresponding exhaust port (not shown) formed corresponding to the combustion chamber of the body 20 of the engine. The exhaust manifold 41 is connected at its other end to one end of the exhaust pipe 42.

The throttle valve 33 is arranged in the intake pipe 32. When an opening degree of the throttle valve 33 (hereinafter, this degree may be referred to as --throttle valve opening degree--) is changed, a flow area in the intake pipe 32 at an area where the throttle valve 33 is arranged, changes. Thereby, an amount of an air passing through the throttle valve 33 changes and as a result, an amount of the air suctioned into the combustion chamber changes.

An actuator for changing an operation state of the throttle valve 33 (i.e. the throttle valve opening degree) is connected to the throttle valve 33 (hereinafter, this actuator may be referred to as --throttle valve actuator--). The throttle valve actuator is electrically connected to the interface 85 of the electronic control unit 80.

The electronic control unit 80 gives to the throttle valve actuator, a control signal for driving the throttle valve actuator to control the throttle valve opening degree to a target throttle valve opening degree.

The intercooler 34 is arranged in the intake pipe 32 on the upstream side of the throttle valve 33. The intercooler 34 cools the air flowing thereinto.

The air flow meter 35 is arranged in the intake pipe 32 on the upstream side of the intercooler 34. The air flow meter 35 is electrically connected to the interface 85 of the electronic control unit 80.

The air flow meter 35 outputs an output value corresponding to the amount of the air passing therethrough. This output value is input into the electronic control unit 80. The electronic control unit 80 calculates the amount of the air passing through the air flow meter 35, as a result, the amount of the air suctioned into the combustion chamber on the basis of the output value.

The air cleaner 36 is arranged in the intake pipe 32 on the upstream side of the air flow meter 35. The air cleaner 36 clears the air passing therethrough.

The supercharging pressure sensor 37 is arranged in the intake passage 30 (in particular, the intake manifold 31) downstream of the throttle valve 33. The supercharging pressure sensor 37 is electrically connected to the interface 85 of the electronic control unit 80.

The supercharging pressure sensor 37 outputs an output value corresponding to a pressure of the air surrounding the sensor (i.e. a pressure of the air in the intake manifold and suctioned into the combustion chamber). The electronic control unit 80 calculates the pressure of the air surrounding the supercharging pressure sensor 37, that is, the pressure of the air suctioned into the combustion chamber (hereinafter, this pressure may be referred to as --supercharging pressure--) on the output value.

The supercharger 60 has a compressor 61 and an exhaust turbine 62. The compressor 61 is arranged rotatably in the intake pipe 32 upstream of the intercooler 34 and downstream of the air flow meter 35. The exhaust turbine 62 is arranged rotatably in teh exhaust pipe 42. These compressor 61 and exhaust turbine 62 are connected to each other via a shaft (not shown).

The exhaust turbine 62 is rotated by an energy of the exhaust gas passing therethrough. The rotation of the exhaust turbine 62 is transmitted to the compressor 61 via the shaft. That is, the compressor 61 is rotated by the rotation of the exhaust turbine 62. Then, the air in the intake passage 30 downstream of the compressor 61 is compressed by the rotation of the compressor 61.

As shown in Fig.2, the supercharger 60 has a plurality of wing-shaped vanes 63. The vanes 63 are arranged so as to surround the exhaust turbine 62. In addition, the vanes 63 are arranged and radially equally spaced about a rotation center axis R1 of the exhaust turbine 62. Each vane 63 can rotate about an axis R2 thereof.

Referring to a direction of the extension of each vane 63 (i.e. a direction shown by a symbol E in Fig.2) as --extension direction-- and referring to a line connecting the rotation center axis R1 of the exhaust turbine 62 and the turning axis R2 of the vane 63 to each other (i.e. a line shown by a symbol A in Fig.2) as --base line--, each vane 63 can turn such that angles relating to all vanes 63, each of which angles is defined between the extension direction E and the base line A corresponding thereto (hereinafter, this angle may be referred to as --vane opening degree--), are maintained equal to each other.

When each vane 63 is turned such that the vane opening degree decreases (i.e. a flow area defined between adjacent two vanes 63 decreases), a pressure in the exhaust passage 40 upstream of the exhaust turbine 62 increases. As a result, a flow rate of the exhaust gas supplied to the exhaust turbine 62 increases.

Thus, a rotation speed of the exhaust turbine 62 increases and as a result, a rotation speed of the compressor 61 increases. Thus, the degree of the compression of the air in the intake passage 30 by the compressor 61 increases. That is, when the vane opening degree decreases, the degree of the compression of the air in the intake passage 30 by the compressor 61 increases.

On the other hand, when the vane opening degree increases, the degree of the compression of the air in the intake passage 30 by the compressor 61 decreases.

An actuator for driving the vanes 63 so as to change the opening degree thereof is connected to the vanes 63 (hereinafter, this actuator may be referred to as --vane actuator--). The vane actuator is electrically connected to the interface 85 of the electronic control unit 80. The electronic control unit 80 gives to the vane actuator, a control signal for driving the vane actuator to control the vane opening degree to a target vane opening degree.

The acceleration pedal depression amount sensor 71 is electrically connected to the interface 85 of the electronic control unit 80. The acceleration pedal depression sensor 71 outputs an output value corresponding to a depression amount of an acceleration pedal 70.

This output value is input into the electronic control unit 80. The electronic control unit 80 calculates the depression amount of the acceleration pedal, as a result, a torque required for the engine on the basis of this output value.

The crank position sensor 72 is arranged adjacent to a crank shaft (not shown) of the engine. The crank position sensor 72 is electrically connected to the interface 85 of the electronic control unit 80.

The crank position sensor 72 outputs an output value corresponding to a rotation phase of the crank shaft. This output value is input into the electronic control unit 80. The electronic control unit 80 calculates an engine speed on the basis of this output value.

Next, a control of the fuel injector according to the first embodiment will be explained. In the first embodiment, appropriate fuel injection amounts depending on the depression amount of the acceleration pedal are previously obtained by an experiment, etc.

Then, these obtained fuel injection amounts are memorized in the electronic control unit as target fuel injection amounts TQ in the form of a map as a function of the depression amount Dac of the acceleration pedal as shown in Fig.3(A).

During the engine operation, the target fuel injection amount TQ corresponding to the current acceleration pedal depression amount Dac is acquired from the map of Fig.3(A). Then, the command signal is given from the electronic control unit to the fuel injector so as to inject the fuel of the target fuel injection amount TQ from the fuel injector.

As shown in Fig.3(A), the target fuel injection amount TQ increases as the acceleration pedal amount Dac increases.

Further, in the first embodiment, when the acceleration pedal depression amount Dac is zero, it is judged that a deceleration is requested for the engine and then, the target fuel injection amount TQ is set as zero. That is, at this time, no fuel is injected from the fuel injector and the fuel injection amount is zero. Hereinafter, this engine operation wherein the fuel injection amount is zero, may be referred to as --uninjection operation--.

Next, a control of the throttle valve according to the first embodiment will be explained. In the first embodiment, appropriate throttle valve opening degrees depending on the engine operation state are previously obtained by an experiment, etc. Then, these obtained throttle valve opening degree are memorized in the electronic control unit as target throttle valve opening degrees TDth in the form of a map as a function of the engine speed N and the engine load L as shown in Fig.3(B).

During the engine operation, the target throttle valve opening degree TDth corresponding to the current engine speed N and the current load L is acquired. Then, the command signal is given from the electronic control unit for driving the throttle valve so as to control the throttle valve opening degree to this acquired target throttle valve opening degree TDth.

As shown in Fig.3(B), as the engine speed N increases and as the engine load L increases, the target throttle valve opening degree TDth increases.

Next, a control of the vane according to the first embodiment will be explained. In the first embodiment, appropriate supercharging pressure depending on the engine operation state are previously obtained by an experiment, etc. Then, these obtained supercharging pressure are memorized in the electronic control unit as target supercharging pressure TPim in the form of a map as a function of the engine speed N and the engine load L as shown in Fig.3(C).

During the engine operation, the target supercharging pressure TPim corresponding to the current engine speed N and the current load L is acquired from the map of Fig.3(C). Then, the vane actuator is feedback controlled by the electronic control unit to control the vane opening degree so as to control the actual supercharging pressure (this pressure is detected by the supercharging pressure sensor) to the aforementioned acquired target supercharging pressure TPim.

In particular, when the actual supercharging pressure is lower than the target supercharging pressure, the control signal for driving the vane actuator to drive the vanes so as to decrease the vane opening degree, is given from the electronic control unit to the vane actuator.

On the other hand, when the actual supercharging pressure is higher than the target supercharging pressure, the control signal for driving the vane actuator to drive the vanes so as to increase the vane opening degree, is given from the electronic control unit to the vane actuator.

In the map shown in Fig.3(C), as the engine speed N increases and as the engine load L increases, the target supercharging pressure TPim increases.

Next, a vane feedback gain used in the control of the vane according to the first embodiment will be explained. In the first embodiment, the vane actuator is driven by the control signal given from the electronic control unit to the vane actuator.

In this regard, the degree of the driving of the vane by the vane actuator is determined on the basis of a deviation of the actual supercharging pressure relative to the target supercharging pressure (hereinafter, this deviation may be referred to as -- supercharging pressure deviation--).

Then, a feedback gain (i.e. a vane feedback gain) for defining the manner of the reflection of the supercharging pressure deviation in a vane manipulation amount is used in this determination.

In this regard, in the first embodiment, a calculation expression for calculating the vane feedback gain by using a predetermined parameter, which gain increases a following property of the actual supercharging pressure relative to the target supercharging pressure (hereinafter, this property may be referred to as --target supercharging pressure following property--) to the maximum extent, is previously obtained (hereinafter, this expression may be referred to as --vane feedback gain calculation expression--) and this obtained calculation expression is memorized in the electronic control unit.

This vane feedback gain calculation expression calculates the vane feedback gain so as to calculate a manipulation amount such that when the control signal corresponding to the vane manipulation amount calculated on the basis of the supercharging pressure deviation is given to the vane actuator, a time for the actual supercharging pressure to converge on the target supercharging pressure is shorten to the maximum extent, an overshoot, in which the actual supercharging pressure becomes higher than the target supercharging pressure, decreases to the maximum extent and an undershoot, in which the actual supercharging pressure becomes lower than the target supercharging pressure, decreases to the maximum extent.

A supercharging pressure change delay time is included as a parameter in the vane feedback gain calculation expression.

In this regard, the supercharging pressure change delay time means --time until the supercharging pressure actually starts to change since the control signal for changing the vane opening degree by driving the vane actuator to drive the vane is given to the vane actuator--.

Then, in the first embodiment, during the engine operation, the supercharging pressure change delay time is measured (the detail of this measurement will be explained later), new vane feedback gain is calculated by applying this measured supercharging pressure change delay time to the vane feedback gain calculation expression and this calculated vane feedback gain is used in the calculation of the vane manipulation amount.

The vane feedback gain calculation expression of the first embodiment may be a calculation expression for calculating the vane feedback gain using the classical or modern control theory.

In this regard, in the case that the vane feedback gain calculation expression is a calculation expression for calculating the vane feedback gain by using the modern control theory and as one of the calculation expressions, a state equation expressed by the following equation 1 is used, as shown in the following equation 2, the aforementioned measured supercharging pressure change delay time $\Delta t$ t is reflected in the time relating to the vane opening degree Dv.

In the equations 1 and 2, "Pim(t)" is --supercharging pressure at the time t--, "Dv(t)" is --vane opening degree at the time t--, "Dv(t- $\Delta t$)" is --vane opening degree at the time t- $\Delta t$ t--, "A" is --constant matrix (or coefficient matrix) relating to the supercharging pressure-- and "B" is --constant matrix (or coefficient matrix) relating to the vane opening degree--.

$$dPim(t)/dt = A*Pim(t) + B*Dv(t) \quad ...(1)$$

$$dPim(t)/dt = A*Pim(t) + B*Dv(t-\Delta t) \quad ...(2)$$

There may be a single vane feedback gain or a plurality of vane feedback gains. For example, in the case that the feedback control of the vane actuator according to the first embodiment is the PID control (i.e. the proportional-integral-derivative control), three feedback gains such as the proportional gain, the integral gain and the derivative gain are the vane feedback gains.

Next, the measurement of the supercharging pressure change delay time according to the first embodiment will be explained. The control signal for driving the vane by a predetermined manipulation amount during the uninjection operation is given from the electronic control unit to the vane actuator.

Then, the time from the supply of the control signal to the vane actuator until the start of the change of the supercharging pressure is measured as the supercharging pressure change delay time. As explained above, new vane feedback gain is calculated by applying this measured supercharging pressure change delay time to the aforementioned vane feedback gain calculation expression.

The aforementioned predetermined manipulation amount (i.e. the amount of the driving of the vane for the measurement of the supercharging pressure change delay time during the uninjection operation) may be any amount as far as this manipulation amount is a manipulation amount which leads to the change of the supercharging pressure for sufficiently realizing the change of the supercharging pressure by the driving of the vane for the measurement of the supercharging pressure change delay time or may be a manipulation amount which decreases or increases the vane opening degree.

However, the pressure of the exhaust gas discharged from the combustion chamber decreases during the uninjection operation and therefore, the supercharging pressure also decreases.

Therefore, in the case that the aforementioned predetermined manipulation amount is a manipulation amount for increasing the vane opening degree (i.e. a manipulation amount for decreasing the supercharging pressure), it is difficult to judge if the decrease of the supercharging pressure is derived from the uninjection operation or from the driving of the vane for the measurement of the supercharging pressure change delay time.

Therefore, in order to realize the change of the supercharging pressure by the driving of the vane for the measurement of the supercharging pressure change delay time, in the case that the aforementioned predetermined manipulation amount is a manipulation amount for increasing the vane opening degree, it is preferred that the aforementioned predetermined manipulation amount is set as a manipulation amount having a relatively large absolute value.

Further, in the case that the aforementioned predetermined manipulation amount is a manipulation amount for decreasing the vane opening degree (i.e a manipulation amount for increasing the supercharging pressure), the absolute value of the aforementioned manipulation amount is relatively small and in the case that the increase of the supercharging pressure due to the driving of the vane according to the manipulation amount does not exceed the decrease of the supercharging pressure due to the uninjection operation, the supercharging pressure does not increase.

In this case, it is difficult to identify the time of the start of the change of the supercharging pressure by the influence of the driving of the vane for the measurement of the supercharging pressure change delay time.

Therefore, in order to identify the time of the start of the change of the supercharging pressure by the driving of the vane for the measurement of the supercharging pressure change delay time, it is preferred that the aforementioned predetermined manipulation amount is set as a manipulation amount having the large absolute value for at least increasing the supercharging pressure even when the aforementioned predetermined manipulation amount is a manipulation amount for decreasing the vane opening degree.

Further, even during the uninjection operation, the large change of the vane opening degree for the measurement of the supercharging pressure change delay time may not be preferred in the drivability point of view.

In this regard, compared with the case that the aforementioned predetermined manipulation amount is a manipulation amount for increasing the vane opening degree, a manipulation amount having a small absolute value can be employed as the aforementioned predetermined manipulation amount in the case that the aforementioned predetermined manipulation amount is a manipulation amount for decreasing the vane opening degree.

Therefore, in the drivability point of view, it is preferred that the aforementioned predetermined manipulation amount is set as a manipulation amount for decreasing the vane opening degree.

Further, in the case that a control for increasing or decreasing the vane opening degree is performed when the uninjection operation starts, in consideration of the transition of the supercharging pressure due to this control, the aforementioned predetermined manipulation amount should be set referring to the aforementioned description relating to the predetermined manipulation amount used in the driving of the vane for the measurement of the supercharging pressure change delay time.

Next, an advantage of using the supercharging pressure change delay time measured as explained above in the calculation of new vane feedback gain, will be explained.

In order to maintain the target supercharging pressure following property high, the control signal given to the vane actuator should be determined in consideration of the time until the supercharging pressure actually starts to change since the control signal for changing the operation state of the vane is given from the electronic control unit to the vane actuator (i.e. the supercharging pressure change delay time).

The pressure of the exhaust gas discharged from the combustion chamber changes depending on a combustion amount in the combustion chamber. In addition, the supercharging pressure is subject to the influence of the pressure of the exhaust gas discharged from the combustion chamber.

In this case, the time from the start of the driving of the vane actuator until the start of the change of the supercharging pressure (i.e. the supercharging pressure change delay time) changes depending on the combustion amount in the combustion chamber.

Then, an amount of the fuel supplied to the combustion chamber continuously changes depending on the requirement for the engine and therefore, the combustion amount in the combustion chamber also continuously changes.

Therefore, in the case that the supercharging pressure change delay time is measured when the combustion is generated in the combustion chamber, the influence of the combustion in the combustion chamber is reflected in the measured supercharging pressure change delay time.

Further, when an environment surrounding the engine (e.g. a temperature of a cooling water of the engine, a temperature of a lubricant oil of the engine, etc.) changes, the change property of the supercharging pressure changes.

In this regard, if the torque is produced by the combustion in the combustion chamber, the engine operation state changes and the supercharging pressure also changes by the influence of this change of the engine operation state.

Thus, the change of the supercharging pressure change delay time due to the change of the environment surrounding the engine as well as the change of the supercharging pressure change delay time due to a factor other than the change of the environment (i.e. the torque) are reflected in the supercharging pressure change delay time measured under the condition where the torque is produced.

Therefore, the supercharging pressure change delay time may not sufficient as the supercharging pressure change delay time to be considered for maintaining the target supercharging pressure following property high.

On the other hand, in the first embodiment, when no fuel is supplied to the combustion chamber, the supercharging pressure change delay time is measured. That is, when no combustion is generated in the combustion chamber, the supercharging pressure change delay time is measured.

Therefore, the thus measured supercharging pressure change delay time is sufficient as the supercharging pressure change delay time to be considered for maintaining the target supercharging pressure following property high.

Then, in the first embodiment, the thus measured supercharging pressure change delay time is considered in the calculation of the vane feedback gain.

Then, this vane feedback gain is used in the feedback control of the vane actuator and therefore, in the first embodiment, there is an advantage that the target supercharging pressure following property is maintained high.

Of course, according to the first embodiment, factors, which change the supercharging pressure responsiveness such as a temperature of the engine, the temperature of the cooling water of the engine, the temperature of the lubricant oil of the engine, the atmospheric pressure, a pressure of the exhaust gas in the exhaust passage downstream of the exhaust turbine and upstream of a catalyst in the case that the catalyst for purifying a particular component in the exhaust gas is arranged in the exhaust passage, a mechanical deterioration of the vane, are considered in order to maintain the target supercharging pressure following property.

Next, an example of a routine for performing the calculation of the vane feedback gain according to the first embodiment will be explained. This example of the routine is shown in Fig.4. The routine of Fig.4 is performed every a predetermined time has elapsed.

When the routine of Fig.4 starts, first, at step 100, it is judged if an uninjection operation flag Ffc is set (Ffc=1). In this regard, the uninjection operation flag Ffc is set by the input of "1" when the uninjection operation starts and is reset by the input of "0" when the uninjection operation ends.

At the step 100, when it is judged that Ffc=1, that is, it is judged that the uninjection operation is performed, the routine proceeds to the step 101.

On the other hand, when it is not judged that Ffc=1, that is, it is judged that the uninjection operation is not performed (in other words, a normal operation is performed), the routine ends directly. That is, in this case, the calculation of new vane feedback gain is not performed.

When it is judged that Ffc=1 at the step 100 and then, the routine proceeds to the step 101, the control signal for driving the vane by a predetermined manipulation amount so as to decrease the vane opening degree is given from the electronic control unit to the vane actuator.

Next, at the step 102, it is judged if the uninjection operation flag Ffc is set (Ffc=1), that is, it is judged if the uninjection operation is continued. In this regard, when it is judged that Ffc=1, the routine proceeds to the step 103. On the other hand, when it is not judged that Ffc=1, the routine proceeds to the step 106.

When it is judged that Ffc=1 at the step 102, that is, it is judged that the uninjection operation is continued and then, the routine proceeds to the step 103, a counter Tdly indicating the time having elapsed from the giving of the control signal from the electronic control unit to the vane actuator at the step 101, that is, the supercharging pressure change delay time is counted up.

Next, at the step 104, it is judged if a change amount $\Delta$ Pim of the supercharging pressure is larger than zero (Δ Pim >0).

In this regard, when it is judged that Δ Pim >0 (i.e. it is judged that the supercharging pressure starts to increase), the routine proceeds to the step 105.

On the other hand, when it is not judged that Δ Pim>0, the routine returns to the step 102 and it is judged if the uninjection operation flag Ffc is set (Ffc=1). In this regard, when it is judged that Ffc=1, the routine proceeds to the step 103 and the counter Tdly is counted up.

That is, in this routine, until it is judged that Δ Pim>0 at the step 104, the routine proceeds to the step 102 and as far as it is judged that Ffc=1, the step 103 is performed repeatedly and the count up of the counter Tdly is continued.

When it is judged that Δ Pim > 0 at the step 104, that is, it is judged that the supercharging pressure starts to increase and then, the routine proceeds to the step 105, the vane feedback gain Kgain is calculated by applying the current counter Tdly to the vane feedback gain calculation expression.

Next, at the step 106, the counter Tdly is cleared and then, the routine ends.

When it is not judged that Ffc=1 at the step 102, that is, it is judged that the uninjection operation ends and then, the routine proceeds to the step 106, the counter Tdly is cleared and then, the routine ends. That is, in this case, once the measurement of the supercharging pressure change delay time Tdly starts, this measurement is stopped since the uninjection operation ends.

Next, another embodiment of the control device of the engine of the invention (hereinafter, this embodiment may be referred to as --second embodiment--) will be explained. The engine which the control device of the second embodiment is applied, is the engine shown in Fig.1.

The constitution of the second embodiment is the same as that of the first embodiment except for a part thereof and therefore, in the following explanation, mainly, the constitution of the second embodiment different from that of the first embodiment will be explained.

The vane feedback gain used in the control of the vane according to the second embodiment will be explained. In the second embodiment, similar to the first embodiment, the vane manipulation amount is determined on the basis of the supercharging pressure deviation.

Then, similar to the first embodiment, the vane feedback gain is used in this determination. Then, similar to the first embodiment, the vane feedback gain calculation expression is memorized in the electronic control unit.

The supercharging pressure change delay time and the supercharging pressure change rate at the fuel injection being performed being performed are included as parameters in the vane feedback gain calculation expression of the second embodiment.

In this regard, the supercharging pressure change delay time is the same as the -- supercharging pressure change delay time-- of the first embodiment.

Further, the supercharging pressure change rate at the fuel injection being performed means --rate of the supercharging pressure which changes by the influence of the combustion of the fuel when the fuel is injected from the fuel injector--.

Then, in the second embodiment, during the engine operation, the supercharging pressure change delay time is measured (the detail of this measurement will be explained later), the supercharging pressure change rate at the fuel injection being performed is calculated (the detail of this calculation will be explained later), new vane feedback gain is calculated by applying the measured supercharging pressure change delay time and the calculated supercharging pressure change rate at the fuel injection being performed to the vane feedback gain calculation expression and this calculated vane feedback gain is used in the calculation of the vane manipulation amount.

The vane feedback gain calculation expression of the second embodiment may be a calculation expression for calculating the vane feedback gain by using the classical or modern control theory.

In this regard, in the case that the vane feedback gain calculation expression is a calculation expression for calculating the vane feedback gain by using the modern control theory and as one of the calculation expressions, a state equation expressed by the following equation 3 is used, as shown in the following equation 4, the measured supercharging pressure change delay time Δt is reflected in the time relating to the vane opening degree Dv and the calculated supercharging pressure change rate at the fuel injection being performed is reflected in the constant matrix (or the coefficient matrix) C relating to the fuel injection amount.

In the equations 3 and 4, "Pim(t)" is --supercharging pressure at the time t--, "Dv(t)" is --vane opening degree at the time t--, "Dv(t-Δt)" is --vane opening degree at the time t-Δt--, "Q(t)" is --fuel injection amount at the time t--, "A" is --constant matrix (or coefficient matrix) relating to the supercharging pressure--, "B" is --constant matrix (or coefficient matrix) relating to the vane opening degree and "C" is --constant matrix (or coefficient matrix) relating to the fuel injection amount--.

$$dPim(t)/dt = A*Pim(t) + B*Dv(t) + C*Q(t) \quad …(3)$$

$$dPim(t)/dt = A*Pim(t) + B*Dv(t-\Delta t) + C*Q(t) \quad \dots(4)$$

Next, the measurement of the supercharging pressure change delay time and the calculation of the supercharging pressure change rate at the fuel injection being performed according to the second embodiment will be explained.

In the second embodiment, the control signal for driving the vane by a predetermined manipulation amount during the uninjection operation is given from the electronic control unit to the vane actuator.

Then, the time from the giving of the control signal to the vane actuator until the start of the change of the supercharging pressure is measured as the supercharging pressure change delay time. That is, similar to the first embodiment, the supercharging pressure change delay time is measured.

Further, in the second embodiment, when the uninjection operation is performed and the supercharging pressure change delay time is measured, the command signal for injecting the fuel of a minute amount from the fuel injector is given to the fuel injector.

At this time, the fuel injection amount is set as a small amount so as not to produce the torque in the engine by the combustion of the fuel.

Then, the change rate of the supercharging pressure at this time is calculated as the supercharging pressure change rate at the fuel injection being performed.

As explained above, new vane feedback gain is calculated by applying the thus measured supercharging pressure change delay time and the thus calculated supercharging pressure change rate at the fuel injection being performed to the vane feedback gain calculation expression.

Of course, when the fuel of the minute amount is injected from the fuel injector for the calculation of the supercharging pressure change rate at the fuel injection being performed and the influence of the combustion of the injected fuel remains in the supercharging pressure, the measurement of the supercharging pressure change delay time is not performed.

Further, the order of the performance of the measurement of the supercharging pressure change delay time and the calculation of the supercharging pressure change rate at the fuel injection being performed may be any order and these measurement and calculation may be performed during one uninjection operation and may be performed during the different uninjecton operations, respectively.

Next, an advantage of using the measured supercharging pressure change delay time and the calculated supercharging pressure change rate at the fuel injection being performed as explained above in the calculation of the vane feedback gain, will be explained.

In the second embodiment, there is the following advantage other than the advantage explained relating to the first embodiment. That is, when the operation state of the vane is changed, the supercharging pressure changes.

At this time, even when the change of the operation state of the vane is the same, the manner of the change of the supercharging pressure varies depending on the combustion amount in the combustion chamber.

Then, the fuel injection amount changes continuously depending on the requirement for the engine (e.g. depending on the depression amount of the acceleration pedal) and therefore, the combustion amount in the combustion chamber changes continuously.

On the other hand, in may cases, when the fuel is injected into the combustion chamber, the feedback control of the vane actuator is performed and therefore, if the feedback control of the vane actuator is performed not in consideration of the manner of the change of the supercharging pressure depending on the combustion amount in the combustion chamber, the target supercharging pressure following property decreases, compared with the case that the feedback control of the vane actuator is performed in consideration of the manner of the change of the supercharging pressure depending on the combustion amount in the combustion chamber.

On the other hand, when the combustion is generated in the combustion chamber so as not to produce the torque while the engine performs the uninjection operation, the supercharging pressure changes.

At this time, no torque is produced and therefore, the change rate of the supercharging pressure at this time is not subject to the influence of the torque.

That is, the change rate of the supercharging pressure at this time is subject only to the influence of the combustion in the combustion chamber and the environment surrounding the engine (e.g. the temperature of the cooling water of the engine, the temperature of the lubricant oil of the engine, etc.).

Therefore, if the change rate of the supercharging pressure at this time is calculated and then, the vane feedback gain is set in consideration of this calculated change rate of the supercharging pressure, the combustion in the combustion chamber is reflected in the vane feedback gain.

Thus, when the feedback control of the vane actuator is performed by the control signal determined using this vane feedback gain, even when the fuel injection to the combustion chamber is performed, the target supercharging pressure following property can be maintained high.

Next, an example of a routine for performing the calculation of the vane feedback gain according to the second embodiment will be explained. This example of the routine is shown in Figs.5 and 6. The routine of Figs.5 and 6 is performed every a predetermined time has elapsed.

When the routine of Figs.5 and 6 starts, first, at the step 200 of Fig.5, it is judged if the uninjection operation flag Ffc is set (Ffc=1). The uninjection operation flag Ffc is the same as the uninjection operation flag of the routine of Fig.4.

When it is judged that Ffc=1 at the step 200, that is, it is judged that the uninjection operation is performed, the routine proceeds to the step 201.

On the other hand, when it is not judged that Ffc=1, that is, it is judged that the uninjection operation is not performed (in other words, the normal operation is performed), the routine ends directly. That is, in this case, the calculation of new vane feedback gain is not performed.

When it is judged that Ffc=1 at the step 200 and then, the routine proceeds to the step 201, it is judged if the data of the supercharging pressure change delay time Tdly stored in the electronic control unit at the step 206 of the routine performed before the routine is performed at this time is still stored in the electronic control unit.

In this regard, when it is judged that the data is still stored in the electronic control unit, the routine proceeds to the step 208 of Fig.6.

On the other hand, when it is not judged that the data is stored in the electronic control unit, the routine proceeds to the step 202.

The data of the supercharging pressure change delay time Tdly stored in the electronic control unit is deleted from the electronic control unit by the performance of the step 214 of Fig.6.

When it is not judged that the data of the supercharging pressure change delay time Tdly is still stored in the electronic control unit at the step 201 and then, the routine proceeds to the step 202, the control signal for driving the vane by a predetermined manipulation amount so as to decrease the vane opening degree is given from the electronic control unit to the vane actuator.

Next, at the step 203, it is judged if the uninjection operation flag Ffc is set (Ffc=1), that is, it is judged if the uninjection operation is continued. In this regard, when it is judged that Ffc=1, the routine proceeds to the step 204. On the other hand, when it is not judged that Ffc=1, the routine proceeds to the step 207.

When it is judged that Ffc=1 at the step 203, that is, it is judged that the uninjection operation is continued and then, the routine proceeds to the step 204, the counter Tdly indicating the time having elapsed from the giving of the control signal from the electronic control unit to the vane actuator at the step 202, that is, the supercharging pressure change delay time is counted up.

Next, at the step 205, it is judged if the change amount ΔPim of the supercharging pressure is larger than zero (ΔPim > 0). In this regard, when it is judged that ΔPim > 0 (i.e. it is judged that the supercharging pressure starts to increase), the routine proceeds to the step 206. On the other hand, when it is not judged that ΔPim > 0, the routine returns to the step 203 and it is judged if the uninjection operation flag Ffc is set (Ffc=1).

In this regard, when it is judged that Ffc=1, the routine proceeds to the step 204 and the counter Tdly is counted up. That is, in this routine, until it is judged that ΔPim > 0 at the step 205, the routine proceeds to the step 203 and as far as it is judged that Ffc=1, the step 204 is performed repeatedly and the count up of the counter Tdly is continued.

When it is judged that ΔPim >0 at the step 205, that is, it is judged that the supercharging pressure starts to increase and then, the routine proceeds to the step 206, the counter Tdly at this time is stored in the electronic control unit.

Next, at the step 208 of Fig.6, it is judged if the uninjection operation flag Ffc is set (Ffc=1), that is, it is judged if the uninjection operation is continued. In this regard, when it is judged that Ffc=1, the routine proceeds to the step 209. On the other hand, when it is not judged that Ffc=1, the routine ends directly.

When it is judged that Ffc=1 at the step 208, that is, it is judged that the uninjection operation is continued and then, the routine proceeds to the step 209, the command signal for injecting the fuel having the minute amount from the fuel injector is given to the fuel injector.

Next, at the step 210, the change amount ΔPim of the supercharging pressure is calculated.

Next, at the step 211, the change rate Spim of the supercharging pressure is calculated using the change amount ΔPim of the supercharging pressure calculated at the step 210.

Next, at the step 212, the counter Tdly stored in the electronic control unit is acquired.

Next, at the step 213, the vane feedback gain Kgain is calculated by applying the change rate Spim of the supercharging pressure calculated at the step 211 and the counter Tdly acquired at the step 212, that is, the supercharging pressure change delay time to the vane feedback gain calculation expression.

Next, at the step 214, the counter Tdly stored in the electronic control unit is deleted and then, the routine ends.

When it is not judged that Ffc=1 at the step 203 of Fig.5, that is, it is judged that the uninjection operation ends and then, the routine proceeds to the step 207, the counter Tdly is cleared and then, the routine ends. That is, in this case, once the measurement of the supercharging pressure change delay time Tdly starts, the measurement is stopped since the uninjection operation ends.

Next, further another embodiment of the control device of the engine of the invention (hereinafter, this embodiment may be referred to as --third embodiment--) will be explained. The engine which the control device of the third embodiment is applied, is shown in Fig.7. In Fig.7, 50 denotes an exhaust gas recirculation device (hereinafter, this device may be referred to as --EGR device--).

Comparing the engine shown in Fig.7 with the engine shown in Fig.1, except that the engine shown in Fig.7 comprises the EGR device 50 and does not comprise the supercharger 60, the constitution of the engine shown in Fig.7 is the same as that of the engine shown in Fig.1 and therefore, the detailed explanation thereof will be omitted.

The exhaust gas recirculation device (hereinafter, this device may be referred to as --EGR device--) 50 has an exhaust gas recirculation passage (hereinafter, this passage may be referred to as --EGR passage--) 51, an exhaust gas recirculation control valve (hereinafter, this valve may be referred to as --EGR control valve--) 52 and an exhaust gas recirculation cooler (hereinafter, this cooler may be referred to as --EGR cooler--) 53.

The EGR device 50 is a device for introducing to the intake passage 30 via the EGR passage 51, the exhaust gas discharged from the combustion chamber to the exhaust passage 40.

The EGR passage 51 is connected at its one end to the exhaust passage 40 (in particular, the exhaust manifold 41) and is connected at its other end to the intake passage 30 (in particular, the intake manifold 31). That is, the EGR passage 51 connects the exhaust passage 40 to the intake passage 30.

The EGR control valve 52 is arranged in the EGR passage 51. When an opening degree of the EGR control valve 52 (hereinafter, this degree may be referred to as --EGR control valve opening degree--) is changed, an amount of the exhaust gas passing through the EGR control valve 52 and as a result, the amount of the exhaust gas introduced to the intake passage 30 changes.

The EGR control valve 52 incorporates an actuator for changing its operation state (i.e. the EGR control valve opening degree) therein (hereinafter, this actuator may be referred to as --EGR control valve actuator--).

The EGR control valve actuator is electrically connected to the electronic control unit 80. The electronic control unit 80 gives to the EGR control valve actuator, a control signal for driving the EGR control valve actuator so as to control the EGR control valve opening degree to the target EGR control valve opening degree.

Next, a control of the EGR control valve according to the third embodiment will be explained. The control of the fuel injector and the control of the throttle valve according to the third embodiment are the same as those according to the first embodiment and therefore, the detailed explanation thereof will be omitted.

Further, in the following explanation, "EGR rate" means --rate of the amount of the exhaust gas relative to the amount of the gas suctioned into the combustion chamberand "EGR gas" means --exhaust gas introduced to the intake passage by the EGR device--.

In the third embodiment, appropriate EGR rates depending on the engine operation state are previously obtained by an experiment, etc. Then, these obtained EGR rates are memorized in the electronic control unit as target EGR rates TRegr in the form of a map as a function of the engine speed N and the engine load L as shown in Fig.8.

During the engine operation, the target EGR rate TRegr corresponding to the current engine speed N and the current engine load L is acquired from the map of Fig.8.

Then, the EGR control valve actuator is feedback controlled by the electronic control unit to control the EGR control valve opening degree such that the actual EGR rate (this EGR rate will be explained later) corresponds to the aforementioned acquired target EGR rate TRegr.

In particular, when the actual EGR rate is smaller than the target EGR rate, the control signal for driving the EGR control valve actuator to drive the EGR control valve so as to increase the EGR control valve opening degree is given from the electronic control unit to the EGR control valve actuator.

On the other hand, when the actual EGR rate is larger than the target EGR rate, the control signal for driving the EGR control valve actuator to drive the EGR control valve so as to decrease the EGR control valve opening degree is given from the electronic control unit to the EGR control valve actuator.

In the map of Fig.8, as the engine speed N increases and as the engine load L increases, the target EGR rate TRege decreases.

Next, the calculation of the actual EGR rate according to the third embodiment will be explained. In the third embodiment, the actual EGR rate Regr is calculated according to the following equation 5. In the equation 5, "Gc" is --total amount of the gas suctioned into the combustion chamber (i.e. the mixture gas of the air and the exhaust gas) in one intake stroke-- and "Ga" is --amount of th air supplied to the combustion chamber in one intake stroke--.

For example, the total amount of the gas suctioned into the combustion chamber in one intake stroke can be calculated from the parameters such as the engine speed and supercharging pressure and the amount of the air suctioned into the combustion chamber in one intake stroke can be calculated from the amount of the air detected by the air flow meter.

$$Regr = (Gc - Ga)/Gc \quad ...(5)$$

Next, an EGR control valve feedback gain used in the control of the EGR control valve according to the third embodiment will be explained.

In the third embodiment, the EGR control valve is driven by the control signal given from the electronic control unit to the EGR control valve actuator.

In this regard, the degree of the driving of the EGR control valve by the EGR control valve actuator (hereinafter, this degree may be referred to as --EGR control valve manipulation amount--) is determined on the basis of a deviation of the actual EGR rate relative to the target EGR rate (hereinafter, this deviation may be referred to as --EGR rate deviation--).

Then, a feedback gain (i.e. the EGR control valve feedback gain) for defining the manner of the reflection of the EGR rate deviation in the EGR control valve manipulation amount is used in this determination.

In this regard, in the third embodiment, a calculation expression for calculating the EGR control valve feedback gain by using a predetermined parameter, which gain increases a following property of the actual EGR rate relative to the target EGR rate (hereinafter, this property may be referred to as --target EGR rate following property--) to the maximum extent, is previously obtained (hereinafter, this expression may be referred to as --EGR control valve feedback gain calculation expression--) and this obtained calculation expression is memorized in the electronic control unit.

This EGR control valve feedback gain calculation expression calculates the EGR control valve feedback gain so as to calculate a manipulation amount such that when the control signal corresponding to the EGR control valve manipulation amount calculated on the basis of the EGR rate deviation is given to the EGR control valve actuator, a time for the actual EGR rate to converge on the target EGR rate is shorten to the maximum extent, an overshoot, in which the actual EGR rate becomes higher than the target EGR rate, decreases to the maximum extent and an undershoot, in which the actual EGR rate becomes lower than the target EGR rate, decreases to the maximum extent.

An EGR rate change delay time is included as a parameter in the EGR control valve feedback gain calculation expression.

In this regard, the EGR rate change delay time means --time until the EGR rate actually starts to change since the control signal for changing the EGR control valve opening degree by driving the EGR control valve actuator to drive the EGR control valve is given to the EGR control valve actuator--.

Then, in the third embodiment, during the engine operation, the EGR rate change delay time is measured (the detail of this measurement will be explained later), new EGR control valve feedback gain is calculated by applying this measured EGR rate change delay time to the EGR control valve feedback gain calculation expression and this calculated EGR control valve feedback gain is used in the calculation of the EGR control valve manipulation amount.

The EGR control valve feedback gain calculation expression of the third embodiment may be a calculation expression for calculating the vane feedback gain using the classical or modern control theory.

In this regard, in the case that the EGR control valve feedback gain calculation expression is a calculation expression for calculating the EGR control valve feedback gain by using the modern control theory and as one of the calculation expressions, a state equation expressed by the following equation 6 is used, as shown in the following equation 7, the aforementioned measured EGR rate change delay time $\Delta t$ is reflected in the time relating to the EGR control valve opening degree Degr.

In the equations 6 and 7, "Regr(t)" is --EGR rate at the time t--, "Degr(t)" is --EGR control valve opening degree at the time t--, "Degr(t-$\Delta$t)" is --EGR control valve opening degree at the time t- $\Delta$t--, "A" is --constant matrix (or coefficient matrix) relating to the EGR rate-- and "B" is --constant matrix (or coefficient matrix) relating to the EGR control valve opening degree.

$$dRegr(t)/dt = A*Regr(t) + B*Degr(t) \quad \ldots(6)$$

$$dRegr(t)/dt = A*Regr(t) + B*Degr(t-\Delta t) \quad \ldots(2)$$

There may be a single EGR control valve feedback gain or a plurality of EGR control valve feedback gains. For example, in the case that the feedback control of the EGR control valve actuator according to the third embodiment is the PID control (i.e. the proportional-integral-derivative control), three feedback gains such as the proportional gain, the integral gain and the derivative gain are the EGR control valve feedback gains.

Next, the measurement of the EGR rate change delay time according to the third embodiment will be explained.

The control signal for driving the EGR control valve by a predetermined manipulation amount during the uninjection operation is given from the electronic control unit to the EGR control valve actuator.

Then, the time from the supply of the control signal to the EGR control valve actuator until the start of the change of the EGR rate is measured as the EGR rate change delay time.

As explained above, new EGR control valve feedback gain is calculated by applying this measured EGR rate change delay time to the aforementioned EGR control valve feedback gain calculation expression.

The aforementioned predetermined manipulation amount (i.e. the amount of the driving of the EGR control valve for the measurement of the EGR rate change delay time during the uninjection operation) may be any amount as far as this manipulation amount is a manipulation amount which leads to the change of the EGR rate for sufficiently realizing the change of the EGR rate by the driving of the EGR control valve for the measurement of the EGR rate change delay time or may be a manipulation amount which decreases or increases the EGR control valve opening degree.

However, the pressure of the exhaust gas discharged from the combustion chamber decreases during the uninjection operation and therefore, the EGR rate also decreases.

Therefore, in the case that the aforementioned predetermined manipulation amount is a manipulation amount for decreasing the EGR control valve opening degree (i.e. a manipulation amount for decreasing the EGR rate), it is difficult to judge if the decrease of the EGR rate is derived from the uninjection operation or from the driving of the EGR control valve for the measurement of the EGR rate change delay time.

Therefore, in order to realize the change of the EGR rate by the driving of the EGR control valve for the measurement of the EGR rate change delay time, in the case that the aforementioned predetermined manipulation amount is a manipulation amount for decreasing the EGR control valve opening degree, it is preferred that the aforementioned predetermined manipulation amount is set as a manipulation amount having a relatively large absolute value.

Further, in the case that the aforementioned predetermined manipulation amount is a manipulation amount for increasing the EGR control valve opening degree (i.e a manipulation amount for increasing the EGR rate), the absolute value of the aforementioned manipulation amount is relatively small and in the case that the increase of the EGR rate due to the driving of the EGR control valve according to the manipulation amount does not exceed the decrease of the EGR rate due to the uninjection operation, the EGR rate does not increase.

In this case, it is difficult to identify the time of the start of the change of the EGR rate by the influence of the driving of the EGR control valve for the measurement of the EGR rate change delay time.

Therefore, in order to identify the time of the start of the change of the EGR rate by the driving of the EGR control valve for the measurement of the EGR rate change delay time, it is preferred that the aforementioned predetermined manipulation amount is set as a manipulation amount having the large absolute value for at least increasing the EGR rate even when the aforementioned predetermined manipulation amount is a manipulation amount for increasing the EGR control valve opening degree.

Further, even during the uninjection operation, the large change of the EGR control valve opening degree for the measurement of the EGR rate change delay time may not be preferred in the drivability point of view.

In this regard, compared with the case that the aforementioned predetermined manipulation amount is a manipulation amount for decreasing the EGR controls valve opening degree, a manipulation amount having a small absolute value can be employed as the aforementioned predetermined manipulation amount in the case that the aforementioned predetermined manipulation amount is a manipulation amount for increasing the EGR control valve opening degree.

Therefore, in the drivability point of view, it is preferred that the aforementioned predetermined manipulation amount is set as a manipulation amount for increasing the EGR control valve opening degree.

Further, in the case that a control for increasing or decreasing the EGR control valve opening degree is performed when the uninjection operation starts, in consideration of the transition of the EGR rate due to this control, the aforementioned predetermined manipulation amount should be set referring to the aforementioned description relating to the predetermined manipulation amount used in the driving of the EGR control valve for the measurement of the EGR rate change delay time.

Next, an advantage of using the EGR rate change delay time measured as explained above in the calculation of new EGR control valve feedback gain, will be explained.

In order to maintain the target EGR rate following property high, the control signal given to the EGR control valve actuator should be determined in consideration of the time until the EGR rate actually starts to change since the control signal for changing the operation state of the EGR control valve is given from the electronic control unit to the EGR control valve actuator (i.e. the EGR rate change delay time).

The pressure of the exhaust gas discharged from the combustion chamber changes depending on a combustion amount in the combustion chamber. In addition, the EGR rate is subject to the influence of the pressure of the exhaust gas discharged from the combustion chamber.

In this case, the time from the start of the driving of the EGR control valve actuator until the start of the change of the EGR rate (i.e. the EGR rate change delay time) changes depending on the combustion amount in the combustion chamber.

Then, the amount of the fuel supplied to the combustion chamber continuously changes depending on the requirement for the engine and therefore, the combustion amount in the combustion chamber also continuously changes.

Therefore, in the case that the EGR rate change delay time is measured when the combustion is generated in the combustion chamber, the influence of the combustion in the combustion chamber is reflected in the measured EGR rate change delay time.

Further, when an environment surrounding the engine (e.g. the temperature of a cooling water of the engine, the temperature of the lubricant oil of the engine, etc.) changes, the change property of the EGR rate changes.

In this regard, if the torque is produced by the combustion in the combustion chamber, the engine operation state changes and the supercharging pressure also changes by the influence of this change of the engine operation state.

Thus, the change of the EGR rate change delay time due to the change of the environment surrounding the engine as well as the change of the EGR rate change delay time due to a factor other than the change of the environment (i.e. the torque) are reflected in the EGR rate change delay time measured under the condition where the torque is produced.

Therefore, the EGR rate change delay time may not sufficient as the EGR rate change delay time to be considered for maintaining the target EGR rate following property high.

On the other hand, in the third embodiment, when no fuel is supplied to the combustion chamber, the EGR rate change delay time is measured. That is, when no combustion is generated in the combustion chamber, the EGR rate change delay time is measured.

Therefore, the thus measured EGR rate change delay time is sufficient as the EGR rate change delay time to be considered for maintaining the target EGR rate following property high.

Then, in the third embodiment, the thus measured EGR rate change delay time is considered in the calculation of the EGR control valve feedback gain.

Then, this EGR control valve feedback gain is used in the feedback control of the EGR control valve actuator and therefore, in the third embodiment, there is an advantage that the target EGR rate following property is maintained high.

Of course, according to the third embodiment, factors, which change the EGR rate responsiveness such as the temperature of the engine, the temperature of the cooling water of the engine, the temperature of the lubricant oil of the engine, the atmospheric pressure, the pressure of the exhaust gas in the exhaust passage upstream of a catalyst in the case that the catalyst for purifying a particular component in the exhaust gas is arranged in the exhaust passage, a mechanical deterioration of the EGR control valve, are considered in order to maintain the target EGR rate following property.

Next, an example of a routine for performing the calculation of the EGR control valve feedback gain according to the third embodiment will be explained. This example of the routine is shown in Fig.9. The routine of Fig.9 is performed every a predetermined time has elapsed.

When the routine of Fig.9 starts, first, at step 300, it is judged if the uninjection operation flag Ffc is set (Ffc=1). The uninjection operation flag Ffc is the same as the uninjection operation flag of the routine of Fig.4.

When it is judged that Ffc=1 at the step 300, that is, it is judged that the uninjection operation is performed, the routine proceeds to the step 301.

On the other hand, when it is not judged that Ffc=1, that is, it is judged that the uninjection operation is not performed (in other words, the normal operation is performed), the routine ends directly. That is, in this case, the calculation of new EGR control valve feedback gain is not performed.

When it is judged that Ffc=1 at the step 300 and then, the routine proceeds to the step 301, the control signal for driving the EGR control valve by a predetermined manipulation amount so as to decrease the EGR control valve opening degree is given from the electronic control unit to the EGR control valve actuator.

Next, at the step 302, it is judged if the uninjection operation flag Ffc is set (Ffc=1), that is, it is judged if the uninjection operation is continued. In this regard, when it is judged that Ffc=1, the routine proceeds to the step 303. On the other hand, when it is not judged that Ffc=1, the routine proceeds to the step 306.

When it is judged that Ffc=1 at the step 302, that is, it is judged that the uninjection operation is continued and then, the routine proceeds to the step 303, a counter Tdly indicating the time having elapsed from the giving of the control signal from the electronic control unit to the EGR control valve actuator at the step 301, that is, the EGR rate change delay time is counted up.

Next, at the step 304, it is judged if a change amount $\Delta$ Regr of the EGR rate is smaller than zero ($\Delta$ Regr< 0).

In this regard, when it is judged that $\Delta$Regr< 0 (i.e. it is judged that the EGR rate starts to decrease), the routine proceeds to the step 305.

On the other hand, when it is not judged that $\Delta$Regr< 0, the routine returns to the step 302 and it is judged if the uninjection operation flag Ffc is set (Ffc=1).

In this regard, when it is judged that Ffc=1, the routine proceeds to the step 303 and the counter Tdly is counted up. That is, in this routine, until it is judged that $\Delta$Regr < 0 at the step 304, the routine proceeds to the step 302 and as far as it is judged that Ffc=1, the step 303 is performed repeatedly and the count up of the counter Tdly is continued.

When it is judged that $\Delta$Regr< 0 at the step 304, that is, it is judged that the EGR rate starts to decrease and then, the routine proceeds to the step 305, the EGR control valve feedback gain Kgain is calculated by applying the current counter Tdly to the EGR control valve feedback gain calculation expression.

Next, at the step 306, the counter Tdly is cleared and then, the routine ends.

When it is not judged that Ffc=1 at the step 302, that is, it is judged that the uninjection operation ends and then, the routine proceeds to the step 306, the counter Tdly is cleared and then, the routine ends. That is, in this case, once the measurement of the EGR rate change delay time Tdly starts, this measurement is stopped since the uninjection operation ends.

Next, another embodiment of the control device of the engine of the invention (hereinafter, this embodiment may be referred to as --fourth embodiment--) will be explained.

The engine which the control device of the fourth embodiment is applied, is the engine shown in Fig.7.

The constitution of the fourth embodiment is the same as that of the third embodiment except for a part thereof and therefore, in the following explanation, mainly, the constitution of the fourth embodiment different from that of the third embodiment will be explained.

The EGR control valve feedback gain used in the control of the EGR control valve according to the fourth embodiment will be explained.

In the fourth embodiment, similar to the third embodiment, the EGR control valve manipulation amount is determined on the basis of the EGR rate deviation. Then, similar to the third embodiment, the EGR control valve feedback gain is used in this determination.

Then, similar to the third embodiment, the EGR control valve feedback gain calculation expression is memorized in the electronic control unit.

The EGR rate change delay time and the EGR rate change rate at the fuel injection being performed are included as parameters in the EGR control valve feedback gain calculation expression of the fourth embodiment.

In this regard, the EGR rate change delay time is the same as the --EGR rate change delay time-- of the third embodiment.

Further, the EGR rate change rate at the fuel injection being performed meansrate of the EGR rate which changes by the influence of the combustion of the fuel when the fuel is injected from the fuel injector--.

Then, in the fourth embodiment, during the engine operation, the EGR rate change delay time is measured (the detail of this measurement will be explained later), the EGR rate change rate at the fuel injection being performed is calculated (the detail of this calculation will be explained later), new EGR control valve feedback gain is calculated by applying the measured EGR rate change delay time and the calculated EGR rate change rate at the fuel injection being performed to the EGR control valve feedback gain calculation expression and this calculated EGR control valve feedback gain is used in the calculation of the EGR control valve manipulation amount.

The EGR control valve feedback gain calculation expression of the fourth embodiment may be a calculation expression for calculating the EGR control valve feedback gain by using the classical or modern control theory.

In this regard, in the case that the EGR control valve feedback gain calculation expression is a calculation expression for calculating the EGR control valve feedback gain by using the modern control theory and as one of the calculation expressions, a state equation expressed by the following equation 8 is used, as shown in the following equation 9, the measured EGR rate change delay time $\Delta t$ is reflected in the time relating to the EGR control valve opening degree Degr and the calculated EGR rate change rate at the fuel injection being performed is reflected in the constant matrix (or the coefficient matrix) C relating to the fuel injection amount.

In the equations 8 and 9, "Regr(t)" is --EGR rate at the time t--, "Degr(t)" is --EGR control valve opening degree at the time t--, "Degr(t-$\Delta$t)" is --EGR control valve opening degree at the time t-$\Delta$t--, "Q(t)" is --fuel injection amount at the time t--, "A" is --constant matrix (or coefficient matrix) relating to the EGR rate--, "B" is --constant matrix (or coefficient matrix) relating to the EGR control valve opening degree and "C" is --constant matrix (or coefficient matrix) relating to the fuel injection amount--.

$$dRegr(t)/dt=A*Regr(t)+B*Degr(t)+C*Q(t) \quad …(8)$$

$$dRegr(t)/dt=A*Regr(t)+B*Degr(t-\Delta t)+C*Q(t) \quad …(9)$$

Next, the measurement of the EGR rate change delay time and the calculation of the EGR rate change rate at the fuel injection being performed according to the fourth embodiment will be explained.

In the fourth embodiment, the control signal for driving the EGR control valve by a predetermined manipulation amount during the uninjection operation is given from the electronic control unit to the EGR control valve actuator.

Then, the time from the giving of the control signal to the EGR control valve actuator until the start of the change of the EGR rate is measured as the EGR rate change delay time. That is, similar to the third embodiment, the EGR rate change delay time is measured.

Further, in the fourth embodiment, when the uninjection operation is performed and the EGR rate change delay time is measured, the command signal for injecting the fuel of a minute amount from the fuel injector is given to the fuel injector.

At this time, the fuel injection amount is set as a small amount so as not to produce the torque in the engine by the combustion of the fuel.

Then, the change rate of the EGR rate at this time is calculated as the EGR rate change rate at the fuel injection being performed.

As explained above, new EGR rate feedback gain is calculated by applying the thus measured EGR rate change delay time and the thus calculated EGR rate change rate at the fuel injection being performed to the EGR control valve feedback gain calculation expression.

Of course, when the fuel of the minute amount is injected from the fuel injector for the calculation of the EGR rate change rate at the fuel injection being performed and the influence of the combustion of the injected fuel remains in the supercharging pressure, the measurement of the EGR rate change delay time is not performed.

Further, the order of the performance of the measurement of the EGR rate change delay time and the calculation of the EGR rate change rate at the fuel injection being performed may be any order and these measurement and calculation may be performed during one uninjection operation and may be performed during the different uninjecton operations, respectively.

Next, an advantage of using the measured EGR rate change delay time and the calculated EGR rate change rate at the fuel injection being performed as explained above in the calculation of the EGR control valve feedback gain, will be explained.

In the second embodiment, there is the following advantage other than the advantage explained relating to the first embodiment.

In the fourth embodiment, there is the following advantage other than the advantage explained relating to the third embodiment. That is, when the operation state of the EGR control valve is changed, the EGR rate changes.

At this time, even when the change of the operation state of the EGR control valve is the same, the manner of the change of the EGR rate varies depending on the combustion amount in the combustion chamber.

Then, the fuel injection amount changes continuously depending on the requirement for the engine (e.g. depending on the depression amount of the acceleration pedal) and therefore, the combustion amount in the combustion chamber changes continuously.

On the other hand, in may cases, when the fuel is injected into the combustion chamber, the feedback control of the EGR control valve actuator is performed and therefore, if the feedback control of the EGR control valve actuator is performed not in consideration of the manner of the change of the EGR rate depending on the combustion amount in the combustion chamber, the target EGR rate following property decreases, compared with the case that the feedback control of the EGR control valve actuator is performed in consideration of the manner of the change of the EGR rate depending on the combustion amount in the combustion chamber.

On the other hand, when the combustion is generated in the combustion chamber so as not to produce the torque while the engine performs the uninjection operation, the EGR rate changes.

At this time, no torque is produced and therefore, the change rate of the EGR rate at this time is not subject to the influence of the torque. That is, the change rate of the EGR rate at this time is subject only to the influence of the combustion in the combustion chamber.

Therefore, if the change rate of the EGR rate at this time is calculated and then, the EGR control valve feedback gain is set in consideration of this calculated change rate of the EGR rate, the combustion in the combustion chamber is reflected in the EGR control valve feedback gain.

Thus, when the feedback control of the EGR control valve actuator is performed by the control signal determined using this EGR control valve feedback gain, even when the fuel injection to the combustion chamber is performed, the target EGR rate following property can be maintained high.

Next, an example of a routine for performing the calculation of the EGR control valve feedback gain according to the fourth embodiment will be explained. This example of the routine is shown in Figs. 10 and 11. The routine of Figs.10 and 11 is performed every a predetermined time has elapsed.

When the routine of Figs. 10 and 11 starts, first, at the step 400 of Fig. 10, it is judged if the uninjection operation flag Ffc is set (Ffc=1). The uninjection operation flag Ffc is the same as the uninjection operation flag of the routine of Fig.4.

When it is judged that Ffc=1 at the step 400, that is, it is judged that the uninjection operation is performed, the routine proceeds to the step 401.

On the other hand, when it is not judged that Ffc=1, that is, it is judged that the uninjection operation is not performed (in other words, the normal operation is performed), the routine ends directly. That is, in this case, the calculation of new EGR control valve feedback gain is not performed.

When it is judged that Ffc=1 at the step 400 and then, the routine proceeds to the step 401, it is judged if the data of the EGR rate change delay time Tdly stored in the electronic control unit at the step 406 of the routine performed before the routine is performed at this time is still stored in the electronic control unit.

In this regard, when it is judged that the data is still stored in the electronic control unit, the routine proceeds to the step 408 of Fig.11.

On the other hand, when it is not judged that the data is stored in the electronic control unit, the routine proceeds to the step 402.

The data of the EGR rate change delay time Tdly stored in the electronic control unit is deleted from the electronic control unit by the performance of the step 414 of Fig.11.

When it is not judged that the data of the EGR rate change delay time Tdly is still stored in the electronic control unit at the step 401 and then, the routine proceeds to the step 402, the control signal for driving the EGR control valve by a predetermined manipulation amount so as to decrease the EGR control valve opening degree is given from the electronic control unit to the EGR control valve actuator.

Next, at the step 403, it is judged if the uninjection operation flag Ffc is set (Ffc=1), that is, it is judged if the uninjection operation is continued. In this regard, when it is judged that Ffc=1, the routine proceeds to the step 404. On the other hand, when it is not judged that Ffc=1, the routine proceeds to the step 407.

When it is judged that Ffc=1 at the step 403, that is, it is judged that the uninjection operation is continued and then, the routine proceeds to the step 404, the counter Tdly indicating the time having elapsed from the giving of the control signal from the electronic control unit to the EGR control valve actuator at the step 402, that is, the EGR rate change delay time is counted up.

Next, at the step 405, it is judged if the change amount Δ Regr of the EGR rate is smaller than zero (Δ Regr< 0). In this regard, when it is judged that Δ Regr< 0 (i.e. it is judged that the EGR rate starts to decrease), the routine proceeds to the step 406. On the other hand, when it is not judged that Δ Regr< 0, the routine returns to the step 403 and it is judged if the uninjection operation flag Ffc is set (Ffc=1).

In this regard, when it is judged that Ffc=1, the routine proceeds to the step 404 and the counter Tdly is counted up. That is, in this routine, until it is judged that Δ Regr <0 at the step 405, the routine proceeds to the step 403 and as far as it is judged that Ffc=1, the step 404 is performed repeatedly and the count up of the counter Tdly is continued.

When it is judged that Δ Regr< 0 at the step 405, that is, it is judged that the EGR rate starts to decrease and then, the routine proceeds to the step 406, the counter Tdly at this time is stored in the electronic control unit.

Next, at the step 408 of Fig.11, it is judged if the uninjection operation flag Ffc is set (Ffc=1), that is, it is judged if the uninjection operation is continued. In this regard, when it is judged that Ffc=1, the routine proceeds to the step 409. On the other hand, when it is not judged that Ffc=1, the routine ends directly.

When it is judged that Ffc=1 at the step 408, that is, it is judged that the uninjection operation is continued and then, the routine proceeds to the step 409, the command signal for injecting the fuel having the minute amount from the fuel injector is given to the fuel injector.

Next, at the step 410, the change amount Δ Regr of the EGR rate is calculated.

Next, at the step 411, the change rate Sregr of the EGR rate is calculated using the change amount Δ Regr of the EGR rate calculated at the step 410.

Next, at the step 412, the counter Tdly stored in the electronic control unit is acquired.

Next, at the step 413, the EGR control valve feedback gain Kgain is calculated by applying the change rate Sregr of the EGR rate calculated at the step 411 and the counter Tdly acquired at the step 412, that is, the EGR rate change delay time to the EGR control valve feedback gain calculation expression.

Next, at the step 414, the counter Tdly stored in the electronic control unit is deleted and then, the routine ends.

When it is not judged that Ffc=1 at the step 403 of Fig. 10, that is, it is judged that the uninjection operation ends and then, the routine proceeds to the step 407, the counter Tdly is cleared and then, the routine ends. That is, in this case, once the measurement of the EGR rate change delay time Tdly starts, the measurement is stopped since the uninjection operation ends.

Next, further another embodiment of the control device of the engine of the invention (hereinafter, this embodiment may be referred to as --fifth embodiment--) will be explained.

The engine which the control device of the fifth embodiment is applied, is shown in Fig.12. Comparing the engine shown in Fig.12 with the engine shown in Fig.1, except that the engine shown in Fig.12 comprises the EGR device 50, the constitution of the engine shown in Fig.12 is the same as that of the engine shown in Fig.1 and therefore, the detailed explanation thereof will be omitted.

The constitution of the EGR device 50 of the engine shown in Fig.12 is the same as that of the EGR device 50 of the engine shown in Fig.7 and therefore, the detailed explanation thereof will be omitted.

Further, the controls of the fuel injector, the throttle valve and vanes according to the fifth embodiment are the same as those according to the first embodiment and the control of the EGR control valve is the same as that according to the third embodiment and therefore, the detailed explanations thereof will be omitted.

The vane feedback gain used in the control of the vane according to the fifth embodiment will be explained.

In the fifth embodiment, similar to the first embodiment, the vane manipulation amount is determined on the basis of the supercharging pressure deviation. Then, a feedback gain (i.e. the vane feedback gain) for defining the manner of the reflection of the supercharging pressure deviation in the vane manipulation amount is used in this determination.

In this regard, in the fifth embodiment, a calculation expression for calculating the vane feedback gain by using a predetermined parameter, which gain increases the target supercharging pressure following property to the maximum extent, is previously obtained (hereinafter, this expression may be referred to as --vane feedback gain calculation expression--) and this obtained calculation expression is memorized in the electronic control unit.

This vane feedback gain calculation expression calculates the vane feedback gain so as to calculate the vane manipulation amount such that when the control signal corresponding to the vane manipulation amount calculated on the basis of the supercharging pressure deviation is given to the vane actuator, a time for the actual supercharging pressure to converge on the target supercharging pressure is shorten to the maximum extent, an overshoot, in which the actual supercharging pressure becomes higher than the target supercharging pressure, decreases to the maximum extent and an undershoot, in which the actual supercharging pressure becomes lower than the target supercharging pressure, decreases to the maximum extent.

The supercharging pressure change delay time at the vane being manipulated and the supercharging pressure change delay time at the EGR control valve being manipulated are included as parameters in the vane feedback gain calculation expression.

In this regard, the supercharging pressure change delay time at the vane being manipulated means --time until the supercharging pressure actually starts to change since the control signal for changing the vane opening degree by driving the vane actuator to drive the vane under the condition where the EGR control valve opening degree is maintained constant, is given to the vane actuator-- and the supercharging pressure change delay time at the EGR control valve being manipulated means --time until the supercharging pressure actually starts to change since the control signal for changing the EGR control valve opening degree by driving the EGR control valve actuator to drive the EGR control valve under the condition where the vane opening degree is maintained constant, is given to the EGR control valve actuator--.

Then, in the fifth embodiment, during the engine operation, these supercharging pressure change delay times are measured (the detail of this measurement will be explained later), new vane feedback gain is calculated by applying these measured supercharging pressure change delay times to the vane feedback gain calculation expression and this calculated vane feedback gain is used in the calculation of the vane manipulation amount.

Next, an EGR control valve feedback gain used in the control of the EGR control valve according to the fifth embodiment will be explained.

In the fifth embodiment, similar to the third embodiment, the EGR control valve manipulation amount is determined on the basis of the EGR rate deviation.

Then, a feedback gain (i.e. the EGR control valve feedback gain) for defining the manner of the reflection of the EGR rate deviation in the EGR control valve manipulation amount is used in this determination.

In this regard, in the fifth embodiment, a calculation expression for calculating the EGR control valve feedback gain by using a predetermined parameter, which gain increases the target EGR rate following property to the maximum extent, is previously obtained (hereinafter, this expression may be referred to as --EGR control valve feedback gain calculation expression--) and this obtained calculation expression is memorized in the electronic control unit.

This EGR control valve feedback gain calculation expression calculates the EGR control valve feedback gain so as to calculate the EGR control valve manipulation amount such that when the control signal corresponding to the EGR control valve manipulation amount calculated on the basis of the EGR rate deviation is given to the EGR control valve actuator, a time for the actual EGR rate to converge on the target EGR rate is shorten to the maximum extent, an overshoot, in which the actual EGR rate becomes higher than the target EGR rate, decreases to the maximum extent and an undershoot, in which the actual EGR rate becomes lower than the target EGR rate, decreases to the maximum extent.

The EGR control rate change delay time at the EGR control valve being manipulated and the EGR rate change delay time at the vane being manipulated are included as parameters in the EGR control valve feedback gain calculation expression.

In this regard, the EGR rate change delay time at the EGR control valve being manipulated means --time until the EGR rate actually starts to change since the control signal for changing the EGR control valve opening degree by driving the EGR control valve actuator to drive the EGR control valve under the condition where the vane opening degree is maintained constant, is given to the EGR control valve actuator-- and the EGR rate change delay time at the vane being manipulated means --time until the supercharging pressure actually starts to change since the control signal for changing the vane opening degree by driving the vane actuator to drive the vane under the condition where the EGR control valve opening degree is maintained constant, is given to the vane actuator--.

Then, in the fifth embodiment, during the engine operation, these EGR rate change delay times are measured (the detail of this measurement will be explained later), new EGR control valve feedback gain is calculated by applying these measured EGR rate change delay times to the EGR control valve feedback gain calculation expression and this calculated EGR control valve feedback gain is used in the calculation of the EGR control valve manipulation amount.

Next, the measurement of the supercharging pressure change delay time and the EGR rate change delay time according to the fifth embodiment will be explained.

The control signal for driving the vane by a predetermined manipulation amount under the condition where the EGR control valve opening degree is maintained constant during the uninjection operation is given from the electronic control unit to the vane actuator.

Then, the time from the supply of the control signal to the vane actuator until the start of the change of the supercharging pressure is measured as the supercharging pressure change delay time at the vane being manipulated and the time from the supply of the control signal to the vane actuator until the start of the change of the EGR rate is measured as the EGR rate change delay time at the vane being manipulated.

Further, the control signal for driving the EGR control valve by a predetermined manipulation amount under the condition where the vane opening degree is maintained constant during the uninjection operation is given from the electronic controls unit to the EGR control valve actuator.

Then, the time from the supply of the control signal to the EGR control valve actuator until the start of the change of the EGR rate is measured as the EGR rate change delay time at the EGR control valve being manipulated and the time from the supply of the control signal to the EGR control valve actuator until the start of the change of the supercharging pressure is measured as the supercharging pressure change delay time at the EGR control valve being manipulated.

As explained above, new vane feedback gain is calculated by applying these measured supercharging pressure change delay times at the vane being manipulated and at the EGR control valve being manipulated to the aforementioned vane feedback gain calculation expression and new EGR control valve feedback gain is calculated by applying these measured EGR rate change delay times at the vane being manipulated and at the EGR control valve being manipulated to the aforementioned EGR control valve feedback gain calculation expression.

The order of the performance of the measurement of the supercharging pressure change delay time at the vane being manipulated and the EGR rate change delay time at the vane being manipulated and the measurement of the EGR rate change delay time at the EGR control valve being manipulated and the supercharging pressure change delay time at the EGR control valve being manipulated may be performed during one uninjection operation and may be performed during the different uninjecton operations, respectively.

Next, an advantage of using the measured two supercharging pressure change delay times as explained above in the calculation of the vane feedback gain, will be explained.

In order to maintain the target supercharging pressure following property high, the control signal given to the vane actuator should be determined in consideration of the time until the supercharging pressure actually starts to change since the control signal for changing the operation state of the vane is given from the electronic control unit to the vane actuator (i.e. the supercharging pressure change delay time at the vane being manipulated).

In addition, when the EGR rate changes, the supercharging pressure changes and therefore, in order to maintain the target supercharging pressure following property high, the control signal given to the vane actuator should be determined in consideration of the time until the supercharging pressure actually starts to change since the control signal for changing the operation state of the EGR control valve is given from the electronic control unit to the EGR control valve actuator (i.e. the supercharging pressure change delay time at the EGR control valve being manipulated).

The pressure of the exhaust gas discharged from the combustion chamber changes depending on a combustion amount in the combustion chamber. In addition, the supercharging pressure is subject to the influence of the pressure of the exhaust gas discharged from the combustion chamber.

In this case, the time from the start of the driving of the vane actuator until the start of the change of the supercharging pressure changes depending on the combustion amount in the combustion chamber.

Of course, the time from the start of the driving of the EGR control valve actuator until the start of the change of the supercharging pressure changes depending on the combustion amount in the combustion chamber.

Then, the amount of the fuel supplied to the combustion chamber continuously changes depending on the requirement for the engine and therefore, the combustion amount in the combustion chamber also continuously changes.

Therefore, in the case that the supercharging pressure change delay time is measured when the combustion is generated in the combustion chamber, the influence of the combustion in the combustion chamber is reflected in the measured supercharging pressure change delay time.

Further, when an environment surrounding the engine (e.g. the temperature of the cooling water of the engine, the temperature of the lubricant oil of the engine, etc.) changes, the change property of the supercharging pressure changes.

In this regard, if the torque is produced by the combustion in the combustion chamber, the engine operation state changes and the supercharging pressure also changes by the influence of this change of the engine operation state.

Thus, the change of the supercharging pressure change delay time due to the change of the environment surrounding the engine as well as the change of the supercharging pressure change delay time due to a factor other than the change of the environment (i.e. the torque) are reflected in the supercharging pressure change delay time measured under the condition where the torque is produced.

Therefore, the supercharging pressure change delay time may not sufficient as the supercharging pressure change delay time to be considered for maintaining the target supercharging pressure following property high.

On the other hand, in the fifth embodiment, when no fuel is supplied to the combustion chamber, the supercharging pressure change delay time at the operation state of the vane being changed (i.e. the supercharging pressure change delay time at the vane being manipulated) and the supercharging pressure change delay time at the operation state of the EGR control valve being changed (i.e. the supercharging pressure change delay time at the EGR control valve being manipulated) are measured.

That is, when no combustion is generated in the combustion chamber, the supercharging pressure change delay times at the vane being manipulated and at the EGR control valve being manipulated are measured.

Therefore, the thus measured supercharging pressure change delay times are sufficient as the supercharging pressure change delay times to be considered for maintaining the target supercharging pressure following property high.

Then, in the fifth embodiment, the thus measured two supercharging pressure change delay times are considered in the calculation of the vane feedback gain.

Then, this vane feedback gain is used in the feedback control of the vane actuator and therefore, in the fifth embodiment, there is an advantage that the target supercharging pressure following property is maintained high in the case that the engine comprises means for controlling the control amounts (i.e. the supercharging pressure and the EGR rate) which influence each other such as the supercharger and the EGR device.

Of course, according to the fifth embodiment, by considering the supercharging pressure change delay time in the calculation of the vane feedback gain, factors, which change the supercharging pressure responsiveness such as a temperature of the engine, the temperature of the lubricant oil of the engine, the atmospheric pressure, a pressure of the exhaust gas in the exhaust passage downstream of the exhaust turbine and upstream of a catalyst in the case that the catalyst for purifying a particular component in the exhaust gas is arranged in the exhaust passage, a mechanical deterioration of the vane, the mechanical deterioration of the EGR control valve, etc., are considered in order to maintain the target supercharging pressure following property.

Next, an advantage of using the two supercharging pressure change delay times measured as explained above in the calculation of new vane feedback gain, will be explained.

In order to maintain the target EGR rate following property high, the control signal given to the EGR control valve actuator should be determined in consideration of the time until the EGR rate actually starts to change since the control signal for changing the operation state of the EGR control valve is given from the electronic control unit to the EGR control valve actuator (i.e. the EGR rate change delay time at the EGR control valve being manipulated).

In addition, when the supercharging pressure changes, the EGR rate changes and therefore, in order to maintain the target EGR rate following property high, the control signal given to the EGR control valve actuator should be determined in consideration of the time until the EGR rate actually starts to change since the control signal for changing the operation state of the vane is given from the electronic control unit to the vane actuator (i.e. the EGR rate change delay time at the vane being manipulated).

The pressure of the exhaust gas discharged from the combustion chamber changes depending on the combustion amount in the combustion chamber. In addition, the EGR rate is subject to the influence of the pressure of the exhaust gas discharged from the combustion chamber.

In this case, the time from the start of the driving of the EGR control valve actuator until the start of the change of the EGR rate changes depending on the combustion amount in the combustion chamber.

Of course, the time from the start of the driving of the vane actuator until the start of the change of the EGR rate changes depending on the combustion amount in the combustion chamber.

Then, the amount of the fuel supplied to the combustion chamber continuously changes depending on the requirement for the engine and therefore, the combustion amount in the combustion chamber also continuously changes.

Therefore, in the case that the EGR rate change delay time is measured when the combustion is generated in the combustion chamber, the influence of the combustion in the combustion chamber is reflected in the measured EGR rate change delay time.

Further, when an environment surrounding the engine (e.g. the temperature of the cooling water of the engine, the temperature of the lubricant oil of the engine, etc.) changes, the change property of the EGR rate changes.

In this regard, if the torque is produced by the combustion in the combustion chamber, the engine operation state changes and the EGR rate also changes by the influence of this change of the engine operation state.

Thus, the change of the EGR rate change delay time due to the change of the environment surrounding the engine as well as the change of the EGR rate change delay time due to a factor other than the change of the environment (i.e. the torque) are reflected in the EGR rate change delay time measured under the condition where the torque is produced.

Therefore, the EGR rate change delay time may not sufficient as the EGR rate change delay time to be considered for maintaining the target EGR rate following property high.

On the other hand, in the fifth embodiment, when no fuel is supplied to the combustion chamber, the EGR rate change delay time at the operation state of the EGR control valve being changed (i.e. the EGR rate change delay time at the EGR control valve being manipulated) and the EGR rate change delay time at the operation state of the vane being changed (i.e. the EGR rate change delay time at the vane being manipulated) are measured.

That is, when no combustion is generated in the combustion chamber, the EGR rate change delay times at the EGR control valve being manipulated and at the vane being manipulated are measured.

Therefore, the thus measured EGR rate change delay times are sufficient as the EGR rate change delay times to be considered for maintaining the target EGR rate following property high.

Then, in the fifth embodiment, the thus measured two EGR rate change delay times are considered in the calculation of the EGR control valve feedback gain.

Then, this EGR control valve feedback gain is used in the feedback control of the EGR control valve actuator and therefore, in the fifth embodiment, there is an advantage that the target EGR rate following property is maintained high in the case that the engine comprises means for controlling the control amounts (i.e. the supercharging pressure and the EGR rate) which influence each other such as the supercharger and the EGR device.

Of course, according to the fifth embodiment, by considering the EGR rate change delay time in the calculation of the EGR control valve feedback gain, factors, which change the EGR rate responsiveness such as the temperature of the engine, the temperature of the lubricant oil of the engine, the atmospheric pressure, the pressure of the exhaust gas in the exhaust passage downstream of the exhaust turbine and upstream of a catalyst in the case that the catalyst for purifying a particular component in the exhaust gas is arranged in the exhaust passage, a mechanical deterioration of the vane, the mechanical deterioration of the EGR control valve, etc., are considered in order to maintain the target EGR rate following property.

Next, an example of a routine for performing the calculation of the vane feedback gain and the EGR control valve feedback gain according to the fifth embodiment will be explained. This example of the routine is shown in Figs.13 to 16. The routine of Figs.13 to 16 is performed every a predetermined time has elapsed.

When the routine of Figs.13 to 16 starts, first, at step 500, it is judged if the uninjection operation flag Ffc is set (Ffc=1). The uninjection operation flag Ffc is the same as the uninjection operation flag of the routine of Fig.4.

When it is judged that Ffc=1 at the step 500, that is, it is judged that the uninjection operation is performed, the routine proceeds to the step 501.

On the other hand, when it is not judged that Ffc=1, that is, it is judged that the uninjection operation is not performed (in other words, the normal operation is performed), the routine ends directly. That is, in this case, the calculation of new vane feedback gain and new EGR control valve feedback gain is not performed.

When it is judged that Ffc=1 at the step 500 and then, the routine proceeds to the step 501, it is judged if the data of the supercharging pressure change delay time Tpvdly at the vane being manipulated stored in the electronic control unit at the step 507 of the routine performed before the routine is performed at this time and the data of the EGR rate change delay time Trvdly at the vane being manipulated stored in the electronic control unit at the step 511 of the routine performed before the routine is performed at this time are still stored in the electronic control unit.

In this regard, when it is judged that the data is still stored in the electronic control unit, the routine proceeds to the step 516 of Fig.15.

On the other hand, when it is not judged that the data is stored in the electronic control unit, the routine proceeds to the step 502.

The data of the supercharging pressure change delay time Tpvdly at the vane being manipulated and the EGR rate change delay time Trvdly at the vane being manipulated stored in the electronic control unit are deleted from the electronic control unit by the performance of the step 532 of Fig. 16.

When it is not judged that the data of the supercharging pressure change delay time Tpvdly at the vane being manipulated and the EGR rate change delay time Trvdly at the vane being manipulated are still stored in the electronic control unit at the step 501 and then, the routine proceeds to the step 502, the control signal for driving the vane by a predetermined manipulation amount so as to decrease the vane opening degree is given from the electronic control unit to the vane actuator.

Next, at the step 503, it is judged if the uninjection operation flag Ffc is set (Ffc=1), that is, it is judged if the uninjection operation is continued. In this regard, when it is judged that Ffc=1, the routine proceeds to the step 504. On the other hand, when it is not judged that Ffc=1, the routine proceeds to the step 509.

When it is not judged that Ffc=1 at the step 503 and then, the routine proceeds to the step 509, the counter Tpvdly indicating the time having elapsed from the giving of the control signal from the electronic control unit to the vane actuator at the step 502, that is, the supercharging pressure change delay time at the vane being manipulated (hereinafter, this counter may be referred to as --supercharging pressure change delay time counter at the vane being manipulated) and the counter Trvdly indicating the time having elapsed from the giving of the control signal from the electronic control unit to the vane actuator at the step 502, that is, the EGR rate change delay time at the vane being manipulated (hereinafter, this counter may be referred to as --EGR rate change delay time counter at the vane being manipulated), are cleared and then, the routine ends.

When it is judged that Ffc=1 at the step 503, that is, it is judged that the uninjection operation is continued and then, the routine proceeds to the step 504, it is judged if a supercharging pressure change delay time stored flag at the vane being manipulated Fpv is set (Fpv=1).

In this regard, the supercharging pressure change delay time stored flag at the vane being manipulated Fpv is set at the step 508 when the supercharging pressure change delay time counter at the vane being manipulated Tpvdly is stored as the supercharging pressure change delay time at the vane being manipulated in the electronic control unit at the step 507 and is reset at the step 533 when the supercharging pressure change delay time at the vane being manipulated Tpvdly stored in the electronic control unit at the step 532 is deleted.

At the step 504, when it is judged that Fpv=1, the routine proceeds to the step 510 of Fig. 14.

On the other hand, when it is not judged that Fpv=1, the routine proceeds to the step 505.

When it is not judged that Fpv=1 at the step 504 and then, the routine proceeds to the step 505, the supercharging pressure change delay time counter at the vane being manipulated Tpvdly is counted up.

Next, at the step 506, it is judged if a change amount $\Delta$ Pim of the supercharging pressure is larger than zero ($\Delta$Pim>0). In this regard, when it is judged that $\Delta$Pim>0, the routine proceeds to the step 507. On the other hand, when it is not judged that $\Delta$ Pim>0, the routine returns to the step 510 of Fig.14.

When it is judged that $\Delta$Pim>0 at the step 506 and then, the routine proceeds to the step 507, the supercharging pressure change delay time counter at the vane being manipulated Tpvdly at this time is stored as the supercharging pressure change delay time at the vane being manipulated in the electronic control unit.

Next, at the step 508, the supercharging pressure change delay time stored flag at the vane being manipulated Fpv is set.

When the routine proceeds to the step 509 of Fig.14 following the step 508 or when it is judged that Fpv=1 at the step 504 and then, the routine proceeds to the step 509 of Fig.14 or when it is not judged that $\Delta$ Pim >0 at the step 506 and then, the routine proceeds to the step 509 of Fig. 14, it is judged if an EGR rate change delay time stored flag at the vane being manipulated Frv is set (Frv=1).

In this regard, the EGR rate change delay time stored flag at the vane being manipulated Frv is set at the step 514 when the EGR rate change delay time counter at the vane being manipulated Trvdly is stored as the EGR rate change delay time at the vane being manipulated in the electronic control unit at the step 513 and is reset at the step 533 when the EGR rate change delay time counter at the vane being manipulated Tpvdly stored in the electronic control unit at the step 532 is deleted.

At the step 510, when it is judged that Frv=1, the routine proceeds to the step 515. On the other hand, when it is not judged that Frv=1, the routine proceeds to the step 511.

When it is not judged that Frv=1 at the step 510 and then, the routine proceeds to the step 511, the EGR rate change delay time counter at the vane being manipulated Trvdly is counted up.

Next, at the step 512, it is judged if a change amount $\Delta$ Regr of the EGR rate is larger than zero ($\Delta$ Regr>0). In this regard, when it is judged that $\Delta$ Regr>0, the routine proceeds to the step 513. On the other hand, when it is not judged that $\Delta$ Regr> 0, the routine returns to the step 515.

When it is judged that $\Delta$ Regr>0 at the step 512 and then, the routine proceeds to the step 513, the EGR rate change delay time counter at the vane being manipulated Trvdly at this time is stored as the EGR rate change delay time at the vane being manipulated in the electronic control unit.

Next, at the step 514, the EGR rate change delay time stored flag at the vane being manipulated Frv is set.

When the routine proceeds to the step 515 following the step 514 or when it is judged that Frv=1 at the step 510 and then, the routine proceeds to the step 515 or when it is not judged that $\Delta$ Regr>0 at the step 512 and then, the routine proceeds to the step 515, it is judged if the supercharging pressure change delay time stored flag at the vane being manipulated Fpv is set (Fpv=1) and the EGR rate change delay time stored flag at the vane being manipulated Frv is set (Frv=1).

In this regard, when it is judged that Fpv=1 and Frv=1, the routine proceeds to the step 516 of Fig.15.

On the other hand, when it is not judged that Fpv=1 and Frv=1, the routine proceeds to the step 503 of Fig.13. That is, in this routine, while the uninjection operation is continued, the steps 503 to 505 are performed repeatedly until the measurement of the supercharging pressure change delay time at the vane being manipulated and the EGR rate change delay time at the vane being manipulated are completed.

When it is judged that Fpv=1 and Frv=1 at the step 515 and then, the routine proceeds to the step 516 of Fig.15 or when it if judged that the data of the supercharging pressure change delay time Tpvdly at the vane being manipulated Tpvdly and the EGR rate change delay time at the vane being manipulated Trvdly are still stored in the electronic control unit at the step 501 of Fig.13 and then, the routine proceeds to the step 516 of Fig.15, the control signal for driving the EGR control valve by a predetermined manipulation amount so as to decrease the EGR control valve opening degree is given from the electronic control unit to the EGR control valve actuator.

Next, at the step 517, it is judged if the uninjection operation flag Ffc is set (Ffc=1), that is, it is judged if the uninjection operation is continued. In this regard, when it is judged that Ffc=1, the routine proceeds to the step 518. On the other hand, when it is not judged that Ffc=1, the routine proceeds to the step 522.

When it is not judged that Ffc=1 at the step 517 and then, the routine proceeds to the step 523, the counter Tpedly indicating the time having elapsed from the giving of the control signal from the electronic control unit to the EGR control valve actuator at the step 516, that is, the supercharging pressure change delay time at the EGR control valve being manipulated (hereinafter, this counter may be referred to as --supercharging pressure change delay time counter at the EGR control valve being manipulated) and the counter Tredly indicating the time having elapsed from the giving of the control signal from the electronic control unit to the vane actuator at the step 516, that is, the EGR rate change delay time at the EGR control valve being manipulated (hereinafter, this counter may be referred to as --EGR rate change delay time counter at the EGR control valve being manipulated), are cleared and then, the routine ends.

When it is judged that Ffc=1 at the step 517, that is, it is judged that the uninjection operation is continued and then, the routine proceeds to the step 518, it is judged if a supercharging pressure change delay time stored flag at the EGR control valve being manipulated Fpe is set (Fpe=1).

In this regard, the supercharging pressure change delay time stored flag at the EGR control valve being manipulated Fpe is set at the step 522 when the supercharging pressure change delay time counter at the EGR control valve being manipulated Tpedly is stored as the supercharging pressure change delay time at the EGR control valve being manipulated in the electronic control unit at the step 521 and is reset at the step 533 when the supercharging pressure change delay time at the EGR control valve being manipulated Tpedly stored in the electronic control unit at the step 532 is deleted.

At the step 518, when it is judged that Fpe=1, the routine proceeds to the step 524 of Fig.16. On the other hand, when it is not judged that Fpe=1, the routine proceeds to the step 519.

When it is not judged that Fpe=1 at the step 518 and then, the routine proceeds to the step 519, the supercharging pressure change delay time counter at the EGR control valve being manipulated Tpedly is counted up.

Next, at the step 520, it is judged if the change amount $\Delta$ Pim of the supercharging pressure is smaller than zero ($\Delta$Pim<0). In this regard, when it is judged that $\Delta$Pim<0, the routine proceeds to the step 521. On the other hand, when it is not judged that $\Delta$Pim < 0, the routine returns to the step 524 of Fig.16.

When it is judged that $\Delta$Pim < 0 at the step 520 and then, the routine proceeds to the step 521, the supercharging pressure change delay time counter at the EGR control valve being manipulated Tpedly at this time is stored as the supercharging pressure change delay time at the EGR control valve being manipulated in the electronic control unit.

Next, at the step 522, the supercharging pressure change delay time stored flag at the EGR control valve being manipulated Fpe is set.

When the routine proceeds to the step 524 of Fig.16 following the step 522 or when it is judged that Fpe=1 at the step 518 and then, the routine proceeds to the step 524 of Fig.16 or when it is not judged that $\Delta$ Pim < 0 at the step 520 and then, the routine proceeds to the step 524 of Fig.16, it is judged if an EGR rate change delay time stored flag at the EGR control valve being manipulated Fre is set (Fre=1).

In this regard, the EGR rate change delay time stored flag at the EGR control valve being manipulated Fre is set at the step 528 when the EGR rate change delay time counter at the EGR control valve being manipulated Tredly is stored as the EGR rate change delay time at the EGR control valve being manipulated in the electronic control unit at the step 527 and is reset at the step 533 when the EGR rate change delay time counter at the EGR control valve being manipulated Tpedly stored in the electronic control unit at the step 532 is deleted.

At the step 524, when it is judged that Fre=1, the routine proceeds to the step 529. On the other hand, when it is not judged that Fre=1, the routine proceeds to the step 525.

When it is not judged that Fre=1 at the step 524 and then, the routine proceeds to the step 525, the EGR rate change delay time counter at the EGR control valvee being manipulated Tredly is counted up.

Next, at the step 526, it is judged if the change amount $\Delta$ Regr of the EGR rate is smaller than zero ($\Delta$Regr<0). In this regard, when it is judged that $\Delta$ Regr< 0, the routine proceeds to the step 527. On the other hand, when it is not judged that $\Delta$ Regr< 0, the routine returns to the step 529.

When it is judged that $\Delta$ Regr< 0 at the step 526 and then, the routine proceeds to the step 527, the EGR rate change delay time counter at the EGR control valve being manipulated Tredly at this time is stored as the EGR rate change delay time at the EGR control valve being manipulated in the electronic control unit.

Next, at the step 526, the EGR rate change delay time stored flag at the EGR control valve being manipulated Fre is set.

When the routine proceeds to the step 529 following the step 528 or when it is judged that Fre=1 at the step 524 and then, the routine proceeds to the step 529 or when it is not judged that $\Delta$Regr< 0 at the step 526 and then, the routine proceeds to the step 529, it is judged if the supercharging pressure change delay time stored flag at the EGR control valve being manipulated Fpe is set (Fpe=1) and the EGR rate change delay time stored flag at the EGR control valve being manipulated Fre is set (Fre=1).

In this regard, when it is judged that Fpe=1 and Fre=1, the routine proceeds to the step 530.

On the other hand, when it is not judged that Fpe=1 and Fre=1, the routine proceeds to the step 517 of Fig.15. That is, in this routine, while the uninjection operation is continued, the steps 517 to 529 are performed repeatedly until the measurement of the supercharging pressure change delay time at the EGR control valve being manipulated and the EGR rate change delay time at the EGR control valve being manipulated are completed.

When it is judged that Fpe=1 and Fre=1 at the step 529 and then, the routine proceeds to the step 530, the supercharging pressure change delay time at the vane being manipulated Tpvdly, the supercharging pressure change delay time at the EGR control valve being manipulated Tpedly, the EGR rate change delay time at the vane being manipulated Trvdly and the EGR rate change delay time at the EGR control valve being manipulated Tredly stored in the electronic control unit are acquired.

Next, at the step 531, the vane feedback gain Kvgain is calculated by applying the supercharging pressure change delay times at the vane being manipulated and at the EGR control valve being manipulated Tpvdly and Tpedly acquired at the step 530 to the vane feedback gain calculation expression and the EGR control valve feedback gain Kegain is calculated by applying the EGR rate change delay times at the vane being manipulated and at the EGR control valve being manipulated Trvdly and Tredly acquired at the step 530 to the EGR control valve feedback gain calculation expression.

Next, at the step 532, the supercharging pressure change delay times at the vane being manipulated and at the EGR control valve being manipulated Tpvdly and Tpedly and the EGR rate change delay times at the vane being manipulated and at the EGR control valve being manipulated Trvdly and Tredly stored in the electronic control unit are deleted.

Next, at the step 533, the supercharging pressure change delay time stored flag at the vane being manipulated Fpv, the EGR rate change delay time stored flag at the vane being manipulated Frv, the supercharging pressure change delay time stored flag at the EGR control valve being manipulated Fpe and the EGR rate change delay time stored flag Fre at the EGR control valve being manipulated Fre are reset and then, the routine ends.

Next, further another embodiment of the control device of the engine of the invention (hereinafter, this embodiment may be referred to as --sixth embodiment--) will be explained. The engine which the control device of the sixth embodiment is applied, is the engine shown in Fig.12.

The constitution of the sixth embodiment is the same as that of the fifth embodiment except for a part thereof and therefore, in the following explanation, mainly, the constitution of the sixth embodiment different from that of the fifth embodiment will be explained.

The vane feedback gain used in the control of the vane according to the sixth embodiment and the EGR control valve feedback gain used in the control of the EGR control valve according to the sixth embodiment will be explained.

In the sixth embodiment, similar to the fifth embodiment, the vane manipulation amount is determined on the basis of the supercharging pressure deviation. Then, the vane feedback gain is used in this determination.

In this regard, similar to the fifth embodiment, the vane feedback gain calculation expression is memorized in the electronic control unit.

Further, in the sixth embodiment, similar to the fifth embodiment, the EGR control valve manipulation amount is determined on the basis of the EGR rate deviation. Then, similar to the fifth embodiment, the EGR control valve feedback gain is used in this determination.

In this regard, similar to the fifth embodiment, the EGR control valve feedback gain calculation expression is memorized in the electronic control unit.

Then, the supercharging pressure change delay time at the vane being manipulated, the supercharging pressure change delay time at the EGR control valve being manipulated and a supercharging pressure change rate at the fuel injection being performed are included as parameters in the vane feedback gain calculation expression.

In this regard, the supercharging pressure change delay time at the vane being manipulated is the same as --supercharging pressure change delay time at the vane being manipulated-- of the fifth embodiment and the supercharging pressure change delay time at the EGR control valve being manipulated is the same as --supercharging pressure change delay time at the EGR control valve being manipulated-- of the fifth embodiment.

Further, the supercharging pressure change rate at the fuel injection being performed is the same as --supercharging pressure change rate at the fuel injection being performed-- of the second embodiment.

Then, in the sixth embodiment, during the engine operation, these supercharging pressure change delay times at the vane being manipulated and the EGR control valve being manipulated are measured (the detail of this measurement will be explained later), the supercharging pressure change rate at the fuel injection being performed is calculated (the detail of this calculation will be explained later), new vane feedback gain is calculated by applying these measured supercharging pressure change delay times and this calculated supercharging pressure change rate at the fuel injection being performed to the vane feedback gain calculation expression and this calculated vane feedback gain is used in the calculation of the vane manipulation amount.

The EGR control rate change delay time at the EGR control valve being manipulated, the EGR rate change delay time at the vane being manipulated and the EGR rate change rate at the fuel injection being performed are included as parameters in the EGR control valve feedback gain calculation expression of the sixth embodiment.

In this regard, the EGR rate change delay time at the EGR control valve being manipulated is the same as -- EGR rate change delay time at the EGR control valve being manipulated-- of the fifth embodiment and the EGR rate change delay time at the vane being manipulated is the same as --EGR rate change delay time at the vane being manipulated-- of the fifth embodiment.

Further, the EGR rate change rate at the fuel injection being performed is the same as --EGR rate change rate at the fuel injection being performed-- of the fourth embodiment.

Then, in the sixth embodiment, during the engine operation, these EGR rate change delay times at the EGR control valve being manipulated and the vane being manipulated are measured (the detail of this measurement will be explained later), the EGR rate change rate at the fuel injection being performed is calculated (the detail of this calculation will be explained later), new EGR control valve feedback gain is calculated by applying these measured EGR rate change delay times and this calculated EGR rate change rate at the fuel injection being performed to the EGR control valve feedback gain calculation expression and this calculated EGR control valve feedback gain is used in the calculation of the EGR control valve manipulation amount.

Next, the measurement of the supercharging pressure change delay time the EGR rate change delay time and the calculation of the supercharging pressure change rate and the EGR rate change rate at the fuel injection being performed according to the sixth embodiment will be explained.

In the sixth embodiment, the control signal for driving the vane by a predetermined manipulation amount under the condition where the EGR control valve opening degree is maintained constant during the uninjection operation is given from the electronic control unit to the vane actuator.

Then, the time from the supply of the control signal to the vane actuator until the start of the change of the supercharging pressure is measured as the supercharging pressure change delay time at the vane being manipulated and the time from the supply of the control signal to the vane actuator until the start of the change of the EGR rate is measured as the EGR rate change delay time at the vane being manipulated.

Further, in the sixth embodiment, the control signal for driving the EGR control valve by a predetermined manipulation amount under the condition where the vane opening degree is maintained constant during the uninjection operation is given from the electronic control unit to the EGR control valve actuator.

Then, the time from the supply of the control signal to the EGR control valve actuator until the start of the change of the EGR rate is measured as the EGR rate change delay time at the EGR control valve being manipulated and the time from the supply of the control signal to the EGR control valve actuator until the start of the change of the supercharging pressure is measured as the supercharging pressure change delay time at the EGR control valve being manipulated.

Further, in the sixth embodiment, when the uninjection operation is performed and the measurement of the supercharging pressure change delay time and the EGR rate change delay time at the vane being manipulated and the EGR rate change delay time and the supercharging pressure change delay time at the EGR control valve being manipulated is not performed, the command signal for injecting the fuel having a minute amount from the fuel injector is given to the fuel injector.

At this time, the fuel injection amount is set as a small amount so as not to produce the torque in the engine by the combustion of the fuel.

Then, the change rate of the supercharging pressure at this time is calculated as the supercharging pressure change rate at the fuel injection being performed and the change rate of the EGR rate at this time is calculated as the EGR rate change rate at the fuel injection being performed.

As explained above, new vane feedback gain is calculated by applying the thus measured two supercharging pressure change delay times and the thus calculated supercharging pressure change rate at the fuel injection being performed to the vane feedback gain calculation expression and new EGR control valve feedback gain is calculated by applying the thus measured two EGR rate change delay times and the thus calculated EGR rate change rate at the fuel injection being performed to the EGR control valve feedback gain calculation expression.

Of course, when the fuel of the minute amount is injected from the fuel injector for the calculation of the supercharging pressure change rate at the fuel injection being performed, the influence of the combustion of the injected fuel remains in the supercharging pressure and the EGR rate, the fuel of the minute amount is injected from the fuel injector for the calculation of the EGR rate change rate at the fuel injection being performed and the influence of the combustion of the injected fuel remains in the EGR rate and the supercharging pressure rate, the measurement of the supercharging pressure change delay time and the EGR rate change delay time at the vane being manipulated and the EGR rate change delay time and the supercharging pressure change delay time at the EGR control valve being manipulated is not performed.

Further, the order of the performance of the measurement of the supercharging pressure change delay time and the EGR rate change delay time at the vane being manipulated, the measurement of the EGR rate change delay time and the supercharging pressure change delay time at the EGR control valve being manipulated and the calculation of the supercharging pressure change rate and the EGR rate change rate at the fuel injection being performed may be any order and these measurement and calculation may be performed during one uninjection operation and may be performed during the different uninjecton operations, respectively.

According to the sixth embodiment, by using the supercharging pressure change delay times and the calculated supercharging pressure change rate at the fuel injection being performed in the calculation of new vane feedback gain, for the same reasons as those explained relating to the second and fifth embodiments, the target supercharging pressure following property can be maintained high even when the injection of the fuel to the combustion chamber, in the case that the engine comprises means for controlling the control amounts (i.e. the supercharging pressure and the EGR rate) which influence each other such as the supercharger and the EGR device.

According to the sixth embodiment, by using the EGR rate change delay times and the calculated EGR rate change rate at the fuel injection being performed in the calculation of new EGR control valve feedback gain, for the same reasons as those explained relating to the fourth and fifth embodiments, the target EGR rate following property can be maintained high even when the injection of the fuel to the combustion chamber, in the case that the engine comprises means for controlling the control amounts (i.e. the supercharging pressure and the EGR rate) which influence each other such as the supercharger and the EGR device.

Next, an example of a routine for performing the calculation of the vane feedback gain and the EGR control valve feedback gain according to the sixth embodiment will be explained. This example of the routine is shown in Figs.17 to 21. The routine of Figs.17 to 21 is performed every a predetermined time has elapsed.

The steps 600 to 629, 632 and 633 of the routine of Figs.17 to 21 are the same as the steps 500 to 529, 532 and 533 of the routine of Figs.13 to 16 and therefore, the explanation of these steps is omitted.

When it is judged that Fpe=1 and Fre=1 at the step 629 of Fig.20 and then, the routine proceeds to the step 629A of Fig.21, it is judged if the uninjection operation flag Ffc is set (Ffc=1), that is, it is judged if the uninjection operation is continued.

In this regard, when it is judged that Ffc=1, the routine proceeds to the step 620B. On the other hand, when it is not judged that Ffc=1, the routine ends directly.

When it is judged that Ffc=1 at the step 629A and then, the routine proceeds to the step 629B, the command signal for injecting the fuel having the minute amount from the fuel injector is given to the fuel injector.

Next, at the step 629C, the change amount $\Delta$ Pim of the supercharging pressure and the change amount $\Delta$ Regr of the EGR rate are calculated.

Next, at the step 629D, the change rate Spim of the supercharging pressure is calculated using the change amount ∆Pim of the supercharging pressure calculated at the step 629C and the change rate Sregr of the EGR rate is calculated using the change amount ∆Regr of the EGR rate calculated at the step 629C.

Next, at the step 630, the supercharging pressure change delay time at the vane being manipulated Tpvdly, the supercharging pressure change delay time at the EGR control valve being manipulated Tpedly, the EGR rate change delay time at the vane being manipulated Trvdly and the EGR rate change delay time at the EGR control valve being manipulated Tredly stored in the electronic control unit are acquired.

Next, at the step 631, the vane feedback gain Kvgain is calculated by applying the supercharging pressure change delay times at the vane being manipulated and at the EGR control valve being manipulated Tpvdly and Tpedly acquired at the step 630 and the supercharging pressure change rate Spim calculated at the step 629D to the vane feedback gain calculation expression and the EGR control valve feedback gain Kegain is calculated by applying the EGR rate change delay times at the vane being manipulated and at the EGR control valve being manipulated Trvdly and Tredly acquired at the step 630 and the EGR rate change rate Sregr calculated at the step 629D to the EGR control valve feedback gain calculation expression.

In the above-explained embodiments, only when the uninjection operation starts and the supercharging pressure is equal to or higher than a predetermined pressure, the measurement of the supercharging pressure change delay time or the EGR rate change delay time may be performed.

That is, when the uninjection operation starts and the supercharging pressure is lower than the predetermined pressure, the measurement of the supercharging pressure change delay time or the EGR rate change delay time may not be performed.

This has the following advantage. That is, if the supercharging pressure is low, the change of the supercharging pressure when the operation state of the vane changes may be small.

In this case, even when the operation state of the vane is changed for the measurement of the supercharging pressure change delay time (or the EGR rate change delay time at the vane being manipulated), it is difficult to identify the time of the start of the change of the supercharging pressure or the EGR rate by the influence of the change of the operation state of the vane.

However, if the supercharging pressure is high, the change of the supercharging pressure when the operation state of the vane changes is relatively large.

Therefore, the measurement of the supercharging pressure change delay time or the EGR rate change delay time at the vane being manipulated only when the uninjection operation starts and the supercharging pressure is equal to or higher than the predetermined pressure has an advantage that the time of the start of the change of the supercharging pressure or the EGR rate due to the change of the operation state of the vane can be easily identified.

Similarly, if the supercharging pressure is low, the change of the EGR rate when the operation state of the EGR control valve changes may be small.

In this case, even when the operation state of the EGR control valve is changed for the measurement of the EGR rate change delay time (or the supercharging pressure change delay time at the EGR control valve being manipulated), it is difficult to identify the time of the start of the change of the EGR rate or the supercharging pressure by the influence of the change of the operation state of the EGR control valve.

However, if the supercharging pressure is high, the change of the EGR rate when the operation state of the EGR control valve changes is relatively large.

Therefore, the measurement of the EGR rate change delay time or the supercharging pressure change delay time at the EGR control valve being manipulated only when the uninjection operation starts and the supercharging pressure is equal to or higher than the predetermined pressure has an advantage that the time of the start of the change of the EGR rate or the supercharging pressure due to the change of the operation state of the EGR control valve can be easily identified.

Further, the above-explained embodiments are those in the case that the invention is applied to the compression self-ignition type internal combustion engine. However, the invention can be applied to a spark ignition type internal combustion engine (i.e. a gasoline engine).

**Claims**

1. A control device of an internal combustion engine comprising:

   a controlled object for variably controlling a control amount relating to the engine; and
   a controlled object actuator for changing an operation state of the controlled object, wherein the control device comprises:

   means for determining a target operation state of the controlled object; and
   means for determining a control signal to be given to the controlled object actuator for feedback controlling the driving state of the controlled object actuator to accomplish the target operation state determined by the target operation state determination means and giving the determined control signal to the controlled object actuator, and
   wherein the control device changes the operation state of the controlled object by driving the controlled object actuator when no fuel is supplied to the combustion chamber,
   measures as a control amount change delay time, the time from the start of the driving of the controlled object actuator until the start of the change of the control amount controlled by the controlled object, and
   sets a feedback gain used in the determination of the control signal by the controlled object actuator in consideration of the measured control amount change delay time.

2. The device of claim 1, wherein the engine comprises a supercharger having a compressor arranged in an intake passage for compressing a gas supplied to the combustion chamber and an exhaust turbine arranged in an exhaust passage and connected to the compressor and
   the supercharger has vanes for variably controlling a flow rate of the exhaust gas passing through the exhaust turbine by the operation state of the vanes being changed and a vane actuator for changing the operation state of the vanes,
   wherein the controlled object is the vane and the controlled object actuator is the vane actuator,
   wherein the target operation state determination means determines a target operation state of the vane, and
   the controlled object actuator control means determines a control signal to be given to the vane actuator for feedback controlling the driving state of the vane actuator to accomplish the target operation state determined by the target operation state determination means and gives the determined control signal to the vane actuator, and
   wherein the control device changes the vane operation state by driving the vane actuator when no fuel is supplied to the combustion chamber,
   measures as a pressure change delay time which is the control amount change delay time, the time from the start of the driving of the vane actuator until the start of the change of the pressure of the gas compressed by the compressor, and

sets a feedback gain used in the determination of the control signal by the vane actuator control means in consideration of the measured pressure change delay time.

3. The device of claim 1, wherein the engine comprises an exhaust gas recirculation device for introducing to an intake passage, an exhaust gas discharged from a combustion chamber to an exhaust passage and

the exhaust gas recirculation device has an exhaust gas recirculation control valve for variably controlling the amount of the exhaust gas introduced to the intake passage and an exhaust gas recirculation control valve actuator for changing the operation state of the exhaust gas recirculation control valve,

wherein the controlled object may is the exhaust gas recirculation control valve and the controlled object actuator is the exhaust gas recirculation control valve actuator,

wherein the target operation state determination means determines a target operation state of the exhaust gas recirculation control valve and

the controlled object actuator control means determines a control signal to be given to the exhaust gas recirculation control valve actuator for feedback controlling the driving state of the exhaust gas recirculation control valve actuator to accomplish the target operation state determined by the target operation state determination means and gives the determined control signal to the exhaust gas recirculation control valve actuator, and

wherein the control device changes the operation state of the exhaust gas recirculation control valve by driving the exhaust gas recirculation control valve actuator when no fuel is supplied to the combustion chamber,

measures as an exhaust gas amount change delay time, the time from the start of the driving of the exhaust gas recirculation control valve actuator until the start of the change of the amount of the exhaust gas introduced into the intake passage, and

sets a feedback gain used in the determination of the control signal by the exhaust recirculation control valve actuator in consideration of the measured exhaust gas amount change delay time.

4. The device of claim 1, wherein the control device generates a combustion in the combustion chamber so as not to produce a torque while the engine performs a fuel supply stop operation for stopping the fuel supply to the combustion chamber,

calculates a change rate of the control amount at this time as a control amount change rate and

sets a feedback gain used in the determination of the control signal by the controlled object actuator control means in consideration of the measured control amount change delay time and the calculated control amount change rate.

5. The device of claim 4, wherein the engine comprises a supercharger having a compressor arranged in an intake passage for compressing a gas supplied to the combustion chamber and an exhaust turbine arranged in an exhaust passage and connected to the compressor and

the supercharger has vanes for variably controlling the flow rate of the exhaust gas passing through the exhaust turbine by the operation state of vanes being changed and a vane actuator for changing the operation state of the vanes,

wherein the controlled object is the vane and the controlled object actuator is the vane actuator,

wherein the target operation state determination means determines the target operation state of the vanes and

the controlled object actuator control means determines the control signal to be given to the vane actuator for feedback controlling the driving state of the vane actuator to accomplish the target operation state determined by the target operation state determination means and gives the determined control signal to the vane actuator, and

wherein the control device changes the operation state of the vanes by driving the vane actuator when the no fuel is supplied to the combustion chamber,

measures as a pressure change delay time which is the control amount change delay time, the time from the start of the driving of the vane actuator until the start of the change of the pressure of the gas compressed by the compressor,

generates the combustion in the combustion chamber so as not to produce the torque while the engine performs the fuel supply stop operation,

calculates as a pressure change rate which is the control amount change rate, the change rate of the pressure of the gas at this time compressed by the compressor, and

sets a feedback gain used in the determination of the control signal by the vane actuator control means in consideration of the measured pressure change delay time and the calculated pressure change rate.

6. The device of claim 4, wherein the engine comprises an exhaust gas recirculation device for introducing to an intake passage, an exhaust gas discharged from a combustion chamber to an exhaust passage and

the exhaust gas recirculation device has an exhaust gas recirculation control valve for variably controlling an amount of the exhaust gas introduced to the intake passage by changing the operation state of the valve and an exhaust gas recirculation control valve actuator for changing the operation state of the exhaust gas recirculation control valve, wherein the controlled object is the exhaust gas recirculation control valve and the controlled object actuator is the exhaust gas recirculation control valve actuator,

wherein the target operation state determination means determines the target operation state of the exhaust gas recirculation control valve and

the controlled object actuator control means determines a control signal to be given to the exhaust gas recirculation control valve actuator for feedback controlling the driving state of the exhaust gas recirculation control valve actuator to accomplish the target operation state determined by the target operation state determined means and gives the determined control signal to the exhaust gas recirculation control valve actuator,

wherein the control device changes the operation state of the exhaust gas recirculation control valve by driving the exhaust gas recirculation control valve actuator when no fuel is supplied to the combustion chamber,

measures as an exhaust gas amount change delay time which is the control amount change delay time, the time from the starting of the driving of the exhaust gas recirculation control valve actuator until the start of the change of the amount of the exhaust gas introduced to the intake passage,

generates the combustion in the combustion chamber so as not to produce the torque while the engine performs the fuel supply stop operation,

calculates as an exhaust gas amount change rate which is the control amount change rate, a change rate of the amount of the exhaust gas introduced to the intake passage at this time, and

sets a feedback gain used in the determination of the control signal by the exhaust gas recirculation control valve actuator control means in consideration of the measured exhaust gas amount change delay time and the calculated exhaust gas amount change rate.

7. A control device of an internal combustion engine, comprising:

a first controlled object for variably controlling a first control amount which is one of control amounts relating to the engine;
a first controlled object actuator for changing an operation state of the first controlled object;
a second controlled object for variably controlling a second control amount which is one of the control amounts relating to the engine and is different from the first control amount; and
a second controlled object actuator for changing an operation state of the second controlled object,
wherein the control device comprises:

first target operation state determination means for determining a target operation state of the first controlled object;
first controlled object actuator control means for determining a control signal to be given to the first controlled object actuator for feedback controlling the driving state of the first controlled object actuator to accomplish the target operation state determined by the first target operation state determination means and giving the determined control signal to the first controlled object actuator;
second target operation state determination means for determining a target operation state of the second controlled object; and
second controlled object actuator control means for determining a control signal to be given to the second controlled object actuator for feedback controlling the driving state of the second controlled object actuator to accomplish the target operation state determined by the second target operation state determination means and giving the determined control signal to the second controlled object actuator,
wherein the control device changes the operation state of the first controlled object by driving the first controlled object actuator when no fuel is supplied to the combustion chamber,
measures as a first control amount change delay time at the first controlled object being manipulated, the time from the starting of the driving of the first controlled object actuator until the start of the change of the first control amount,
measures as a second control amount change delay time at the first controlled object being manipulated, the time from the starting of the driving of the first controlled object actuator until the start of the change of the second control amount,
changes the operation state of the second controlled object by driving the second controlled object actuator when no fuel is supplied to the combustion chamber,
measures as a first control amount change delay time at the second controlled object being manipulated, the time from the starting of the driving of the second controlled object actuator until the start of the change of the first control amount,
measures as a second control amount change delay time at the second controlled object being manipulated, the time from the starting of the driving of the second controlled object actuator until the start of the change of the second control amount,

sets a feedback gain used in the determination of the control signal by the first controlled object actuator control means in consideration of the measured two first control amount change delay times, and

sets a feedback gain used in the determination of the control signal by the second controlled object actuator control means in consideration of the measured two second control amount change delay times.

8. The device of claim 7, wherein the engine comprises:

a supercharger having a compressor arranged in an intake passage for compressing a gas supplied to the combustion chamber and an exhaust turbine arranged in an exhaust passage and connected to the compressor; and

an exhaust gas recirculation device for introducing to the intake passage, an exhaust gas discharged from the combustion chamber to the exhaust passage,

the the supercharger has vanes for variably controlling the flow rate of the exhaust gas passing through the exhaust turbine by changing the operation state of the vanes and a vane actuator for changing the operation state of the vanes, and

the exhaust gas recirculation device has an exhaust gas recirculation control valve for variably controlling the amount of the exhaust gas introduced to the intake passage by changing the operation state of the valve and an exhaust gas recirculation control valve actuator for changing the operation state of the exhaust gas recirculation control valve,

wherein the first controlled object is the vane, the first controlled object actuator is the vane actuator, the second controlled object is the exhaust recirculation control valve and the second controlled object actuator is the exhaust gas recirculation control valve actuator,

wherein the first target operation state determination means determines the target operation state of the vane, the first controlled object actuator control means determines a control signal to be given to the vane actuator for feedback controlling the driving state of the vane actuator to accomplish the target operation state determined by the first target operation state determination means and gives the determined control signal to the vane actuator,

the second target operation state determination means determines the target operation state of the exhaust gas recirculation control valve,

the second controlled object actuator control means determines a control signal to be given to the exhaust gas recirculation control valve actuator for feedback controlling the driving state of the exhaust gas recirculation control valve actuator to accomplish the target operation state determined by the second target operation state determination means and gives the determined control signal to the exhaust gas recirculation control valve,

wherein the control device changes the operation state of the vane by driving the vane actuator when no fuel is supplied to the combustion chamber,

measures as a pressure change delay time at the vane being manipulated which is the first control amount change delay time at the first controlled object being manipulated, the time from the start of the driving of the vane actuator until the start of the change of the pressure of the gas compressed by the compressor,

measures as an exhaust gas amount change delay time at the vane being manipulated which is the second control amount change delay time at the first controlled object being manipulated, the time from the start of the driving of the vane actuator until the start of the change of the amount of the exhaust gas introduced to the intake passage,

changes the operation state of the exhaust gas recirculation control valve by driving the exhaust gas recirculation control valve actuator when no fuel is supplied to the combustion chamber,

measures as a pressure change delay time at the exhaust gas recirculation control valve being manipulated which is the first control amount change delay time at the second controlled object being manipulated, the time from the start of the driving of the exhaust gas recirculation control valve actuator until the start of the change of the pressure of the gas compressed by the compressure, and

measures as an exhaust gas amount change delay time at the exhaust gas recirculation control valve being manipulated which is the second control amount change delay time at the second controlled object being manipulated, the time from the start of the driving of the exhaust gas recirculation control valve actuator until the start of the change of the amount of the exhaust gas introduced to the intake passage,

sets a feedback gain used in the determination of the control signal by the vane actuator control means in consideration of the measured two pressure change delay times, and

sets a feedback gain used in the determination of the control signal by the exhaust gas recirculation control valve actuator control means in consideration of the measured two exhaust gas amount change delay times.

**9.** The device of claim 7, wherein the control device generates the combustion in the combustion chamber so as not to produce the torque while the engine performs a fuel supply stop operation for stopping the fuel supply to the combustion chamber,
calculates the change rate of the first control amount as a first control amount change rate,
calculates the change rate of the second control amount as a second control amount change rate,
sets a feedback gain used in the determination of the control signal by the first controlled object actuator control means in consideration of the measured first control amount change delay time and the calculated first control amount change rate, and
sets a feedback gain used in the determination of the control signal by the second controlled object actuator control means in consideration of the measured second control amount change delay time and the calculated second control amount change rate.

**10.** The device of claim 9, wherein the engine comprises:

a supercharger having a compressor arranged in an intake passage for compressing a gas supplied to a combustion chamber and an exhaust turbine arranged in an exhaust passage and connected to the compressor; and
an exhaust gas recirculation device for introducing to the intake passage, an exhaust gas discharged from the combustion chamber to the exhaust passage,
the supercharger has vanes for variably controlling a flow rate of the exhaust gas passing through the exhaust turbine by changing the operation state of the vane and a vane actuator for changing the operation states of the vanes, and
the exhaust gas recirculation device has an exhaust gas recirculation control valve for variably controlling the amount of the exhaust gas introduced to the intake passage by changing the operation state of the valve and an exhaust gas recirculation control valve actuator for changing the operation state of the exhaust gas recirculation control valve,
wherein the first controlled object is the vane, the first controlled object actuator is the vane actuator, the second controlled object is the exhaust gas recirculation control valve and the second controlled object actuator is the exhaust gas recirculation control valve actuator,
wherein the first target operation state determination means determines the target operation state of the vane,
the first controlled object actuator control means determines a control signal to be given to the vane actuator for feedback controlling the driving state of the vane actuator to accomplish the target operation state determined by the first target operation state determination means and gives the determined control signal to the vane actuator,
the second target operation state determination means determines the target operation state of the exhaust gas recirculation control valve, and
the second controlled object actuator control means determines a control signal to be given to the exhaust gas recirculation control valve actuator for feedback controlling the driving state of the exhaust gas recirculation control valve actuator to accomplish the target operation state determined by the second target operation state determination means and gives the determined control signal to the exhaust gas recirculation control valve actuator, and
wherein the control device changes the operation state of the first controlled object by driving the first controlled object actuator when no fuel is supplied to the combustion chamber,
measures as a first control amount change delay time at the first controlled object being manipulated, the time from the start of the driving of the first controlled object actuator until the start of the change of the first control amount,
measures as a second control amount change delay time at the first controlled object being manipulated, the time from the start of the driving of the first controlled object actuator until the start of the change of the second control amount,
changes the operation state of the second controlled object by driving the second controlled object actuator when no fuel is supplied to the combustion chamber,
measures as a first control amount change delay time at the second controlled object being manipulated, the time from the start of the driving of the second controlled object actuator until the start of the change of the first control amount,
measures as a second control amount change delay time at the second controlled object being manipulated, the time from the start of the driving of the second controlled object actuator until the start of the change of the second control amount,
generates the combustion in the combustion chamber so as not to produce the torque while the engine performs

42

the fuel supply stop operation,

calculates as a pressure change rate which is the first control amount change rate, the change rate of the pressure of the gas compressed by the compressor,

calculates as an exhaust gas amount change rate which is the second control amount change rate, the change rate of the amount of the exhaust gas introduced to the intake passage,

sets a feedback gain used in the determination of the control signal by the vane actuator control means in consideration of the measured two pressure change delay times and the calculated pressure change rate, and

sets a feedback gain used in the determination of the control signal by the exhaust gas recirculation control valve actuator control means in consideration of the measured two exhaust gas amount change delay times and the calculated exhaust gas amount change rate.

FIG.1

EXHAUST GAS INFLOW DIRECTION

EXHAUST GAS INFLOW AMOUNT IS MINIMUM.

EXHAUST GAS INFLO AMOUNT IS MAXIMUM.

R2

R2

R2

R2

R2

R2

R2

R2

63

62

E

A

R1

FIG.2

## FIG.3

(A)

TQ

Dac

(B)

L

$TDth_{11}$    $TDth_{12}$  — — —   $TDth_{1n}$

$TDth_{21}$

$TDth_{m1}$  — — — — — — —   $TDth_{mn}$

N

(C)

L

$TPims_{11}$    $TPims_{12}$  — — —   $TPims_{1n}$

$TPims_{21}$

$TPims_{m1}$  — — — — — — —   $TPims_{mn}$

N

FIG.4

```
         ┌──────────────────────────────────────────┐
         │   VANE FEEDBACK GAIN CALCULATION          │
         └──────────────────────────────────────────┘
                            │
                          ◇ 100
                      Ffc＝1         ──No──────────────┐
                        ?                               │
                          │ Yes                         │
         ┌──────────────────────────────────────┐      │
         │ GIVING CONTROL SIGNAL TO VANE ACTUATOR│~ 01  │
         └──────────────────────────────────────┘      │
                            │                           │
              ┌─────────────┤                           │
              │           ◇ 102                         │
              │       Ffc＝1      ──No──────┐            │
              │         ?                    │            │
              │           │ Yes              │            │
              │  ┌──────────────────┐        │            │
              │  │ COUNTING UP Tdly │~ 103   │            │
              │  └──────────────────┘        │            │
              │           │                  │            │
              │         ◇ 104                │            │
              │No    ΔPim＞0                  │            │
              └──────   ?                     │            │
                          │ Yes              │            │
                 ┌──────────────────┐        │            │
                 │ CALCULATING Kgain│~ 105   │            │
                 └──────────────────┘        │            │
                            │←───────────────┘            │
                 ┌──────────────────┐                     │
                 │  CLEARING Tdly   │~ 106                │
                 └──────────────────┘                     │
                            │←────────────────────────────┘
                 ┌──────────────────┐
                 │     RETURN       │
                 └──────────────────┘
```

## FIG.5

VANE FEEDBACK GAIN CALCULATION

200
Ffc=1 ? — No → (22)
Yes

201
Tdly DATA IS STORED ? — Yes
No

GIVING CONTROL SIGNAL TO VANE ACTUATOR — 202

203
Ffc=1 ? — No → CLEARING Tdly — 207 → (22)
Yes

COUNTING UP Tdly — 04

205
ΔPim>0 ? — No
Yes

STORING Tdly — 206

(21)

FIG.6

## FIG.7

FIG.8

$TRegrs_{11}$  $TRegrs_{12}$ — — — $TRegrs_{1n}$

$TRegrs_{21}$

L

$TRegrs_{m1}$ — — — — — — $TRegrs_{mn}$

N

## FIG.9

```
┌─────────────────────────────────────────────┐
│  EGR CONTROL VALVE FEEDBACK GAIN CALCULATION  │
└─────────────────────────────────────────────┘
                      │
                      ▼           300
                  ◇─────────◇        No
                 ◇  Ffc = 1  ◇──────────────┐
                  ◇    ?    ◇               │
                   ◇───────◇                │
                      │ Yes                 │
        ┌─────────────────────────────┐     │
        │ GIVING CONTROL SIGNAL TO EGR │~ 301
        │   CONTROL VALVE ACTUATOR     │     │
        └─────────────────────────────┘     │
                      │                      │
          ┌──────────►│                      │
          │           ▼           302        │
          │       ◇─────────◇        No      │
          │      ◇  Ffc = 1  ◇───────────────┤
          │       ◇    ?    ◇                │
          │        ◇───────◇                 │
          │           │ Yes                   │
          │  ┌──────────────────┐            │
          │  │  COUNTING UP Tdly │~ 303       │
          │  └──────────────────┘            │
          │           │        304            │
          │       ◇─────────◇                │
          │  No  ◇  ΔRegr<0  ◇                │
          └─────◇    ?    ◇                   │
                  ◇───────◇                   │
                      │ Yes                    │
          ┌──────────────────┐               │
          │ CALCULATING Kgain │~ 305          │
          └──────────────────┘               │
                      │◄─────────────────────┘
          ┌──────────────────┐
          │   CLEARING Tdly   │~ 306
          └──────────────────┘
                      │◄──────────────────────┘
                      ▼
                ┌──────────┐
                │  RETURN  │
                └──────────┘
```

FIG.10

```
        ┌─────────────────────────────────────────────────┐
        │  EGR CONTROL VALVE FEEDBACK GAIN CALCULATION     │
        └─────────────────────────────────────────────────┘
                              │
                          ╱───400───╲
                         ╱           ╲      No
                        ╱   Ffc＝1    ╲─────────────┐
                        ╲      ?      ╱             │
                         ╲           ╱             ┌──┐
                          ╲─────────╱              │42│
                              │ Yes                └──┘
                          ╱───401──╲
          Yes            ╱          ╲
        ┌───────────────╱ Tdly DATA ╲
        │               ╲ IS STORED ╱
        │                ╲    ?     ╱
        │                 ╲────────╱
        │                    │ No
        │        ┌──────────────────────────────────┐
        │        │ GIVING CONTROL SIGNAL TO EGR      │── 402
        │        │ CONTROL VALVE ACTUATOR            │
        │        └──────────────────────────────────┘
        │                    │
        │          ┌─────────┤
        │          │     ╱───403──╲
        │          │    ╱          ╲     No
        │          │   ╱   Ffc＝1   ╲─────────────┐
        │          │   ╲     ?      ╱             │
        │          │    ╲          ╱              │
        │          │     ╲────────╱               │
        │          │        │ Yes                 │
        │          │  ┌──────────────┐      ┌──────────────┐
        │          │  │ COUNTING UP  │─ 404 │ CLEARING Tdly│─ 407
        │          │  │    Tdly      │      └──────────────┘
        │          │  └──────────────┘             │
        │          │        │                    ┌──┐
        │          │     ╱──405──╲               │42│
        │    No    │    ╱         ╲              └──┘
        │  ┌───────╱  △Regr＜0    ╲
        │  │       ╲      ?       ╱
        │  │        ╲            ╱
        │  │         ╲──────────╱
        │  │            │ Yes
        │  │  ┌──────────────────┐
        │  │  │  STORING Tdly    │─ 406
        │  │  └──────────────────┘
        │  │            │
        └──┴────────────┤
                     ┌──┐
                     │41│
                     └──┘
```

FIG.11

41

408

No

Ffc＝1
？

Yes

GIVING COMMAND SIGNAL TO
FUEL INJECTOR ～409

CALCULATING Δ Regr ～410

CALCULATING Sregr ～411

ACQUIRING Tdly ～412

CALCULATING Kgain ～413

DELETING Tdly ～414

42

RETURN

# FIG.12

FIG.13

```
        ┌──────────────────────────────────────┐
        │    FEEDBACK GAIN CALCULATION         │
        └──────────────────────────────────────┘
                          │
                      ╱───500───╲          No
                    ╱   Ffc＝1     ╲──────────────────┐
                    ╲      ?       ╱                  │
                      ╲─────────╱                    (51)
                       Yes │  501
                    ╱───────────────────╲    Yes
                  ╱  Tpvdly, Trvdly DATA   ╲──────────┐
                  ╲    IS STORED  ?        ╱          │
                    ╲───────────────────╱           (52)
                        No │
        ┌──────────────────────────────────┐
        │  GIVING CONTROL SIGNAL TO VANE    │～502
        │            ACTUATOR               │
        └──────────────────────────────────┘
                          │
        (55)──────────────┤
                      ╱───503───╲          No
                    ╱   Ffc＝1     ╲─────────────────────┐
                    ╲      ?       ╱                     │
                      ╲─────────╱              ┌─────────────────────┐
                       Yes │  504             │ CLEARING Tpvdly,    │～509
                      ╱────────╲     Yes       │    Trvdly           │
                    ╱  Fpv＝1    ╲──────┐       └─────────────────────┘
                    ╲     ?      ╱      │                │
                      ╲───────╱       (53)             (51)
                        No │
        ┌──────────────────────────┐
        │   COUNTING UP Tpvdly     │～505
        └──────────────────────────┘
                          │
                      ╱───506───╲     No
                    ╱  ΔPim＞0     ╲──────────┐
                    ╲      ?       ╱          │
                      ╲─────────╱           (53)
                       Yes │
        ┌──────────────────────────┐
        │    STORING Tpvdly         │～507
        └──────────────────────────┘
                          │
        ┌──────────────────────────┐
        │     SETTING Fpv           │～508
        └──────────────────────────┘
                          │
                        (54)
```

## FIG.14

54     53

510
Frv＝1 ?
→ Yes

No

COUNTING UP Trvdly ～511

512
ΔRegr＞0 ?

No

Yes

STORING Trvdly ～513

SETTING Frv ～514

55

No

515
Fpv＝1 and Frv＝1 ?

Yes

56

FIG.15

GIVING CONTROL SIGNAL TO EGR CONTROL VALVE ACTUATOR ~ 516

Ffc=1 ? — 517

No

CLEARING Tpedly, Tredly ~ 523

Yes

Fpe=1 ? — 518

Yes

No

COUNTING UP Tpedly ~ 519

$\Delta Pim < 0$ ? — 520

No

Yes

STORING Tpedly ~ 521

SETTING Fpe ~ 522

## FIG.16

(57)

524 Fre=1 ? — Yes

No

COUNTING UP Tredly ~ 525

526 ΔRegr<0 ?

No

Yes

STORING Tredly ~ 527

SETTING Fre ~ 528

(58)

529 Fpe=1 and Fre=1 ?

No

Yes

ACQUIRING Tpvdly, Tpedly, Trvdly, Tredly ~ 530

CALCULATING Kvgain, Kegain ~ 531

DELETING Tpvdly, Tpedly, Trvdly, Tredly ~ 532

(51)

RESETTING Fpv, Frv, Fpe, Fre ~ 533

RETURN

FIG.17

```
         ┌─────────────────────────────────┐
         │   FEEDBACK GAIN CALCULATION     │
         └─────────────────────────────────┘
                         │
                      600│
                    ◇ Ffc=1 ◇ ──No──→ (61)
                    ◇   ?   ◇
                        │Yes
                      601│
          ◇ Tpvdly, Trvdly DATA IS STORED ◇ ──Yes──→ (62)
          ◇              ?                 ◇
                        │No
         ┌─────────────────────────────────┐
         │  GIVING CONTROL SIGNAL TO VANE  │~602
         │           ACTUATOR              │
         └─────────────────────────────────┘
                         │
                      603│
   (65)──→         ◇ Ffc=1 ◇ ──No──→ ┌──────────────────────┐
                   ◇   ?   ◇         │ CLEARING Tpvdly, Trvdly │~609
                        │Yes         └──────────────────────┘
                      604│                      │
                   ◇ Fpv=1 ◇ ──Yes──→ (63)    (61)
                   ◇   ?   ◇
                        │No
         ┌─────────────────────────────────┐
         │      COUNTING UP Tpvdly         │~605
         └─────────────────────────────────┘
                         │
                      606│
                   ◇ ΔPim>0 ◇ ──No──→ (63)
                   ◇    ?   ◇
                        │Yes
         ┌─────────────────────────────────┐
         │        STORING Tpvdly           │~607
         └─────────────────────────────────┘
                         │
         ┌─────────────────────────────────┐
         │         SETTING Fpv             │~608
         └─────────────────────────────────┘
                         │
                       (64)
```

## FIG.18

FIG.19

GIVING CONTROL SIGNAL TO EGR CONTROL VALVE ACTUATOR ~616

617

Ffc=1 ? — No → CLEARING Tpedly, Tredly ~623 → 61

Yes

618

Fpe=1 ? — Yes →

No

COUNTING UP Tpedly ~619

620

$\Delta$Pim<0 ? — No →

Yes

STORING Tpedly ~621

SETTING Fpe ~622

## FIG.20

```
                    ( 67 )
                       |
                       |         624
                     /    \    ___/
                   /  Fre＝1 \      Yes
                 <      ?      >----------------+
                   \         /                  |
                     \    /                     |
                       | No                     |
            +----------------------+            |
            |  COUNTING UP Tredly  |~ 625       |
            +----------------------+            |
                       |          626           |
                     /    \    ___/             |
          No       /  ΔRegr＜0 \                |
      +----------<      ?       >               |
      |            \          /                 |
      |              \      /                   |
      |                | Yes                     |
      |     +----------------------+            |
      |     |    STORING Tredly    |~ 627       |
      |     +----------------------+            |
      |     +----------------------+            |
      |     |     SETTING Fre      |~ 628       |
      |     +----------------------+            |
      |                |                        |
      +----------------+------------------------+
                       |
                       *        629
                     /    \   ___/
  ( 68 )   No      / Fpe＝1 \
    ^  <----------<   and    >
    |              \ Fre＝1 /
    |                \  ? /
    |                  |
    |                  | Yes
    |                ( 69 )
```

FIG.21

69

629A

No ← Ffc=1 ?

Yes

GIVING COMMAND SIGNAL TO FUEL INJECTOR ～629B

CALCULATING $\Delta$Pim, $\Delta$Regr ～629C

CALCULATING Spim, Sregr ～629D

ACQUIRING Tpvdly, Tpedly, Trvdly, Tredly ～630

CALCULATING Kvgain, Kegain ～631

DELETING Tpvdly, Tpedly, Trvdly, Tredly ～632

RESETTING Fpv, Frv, Fpe, Fre ～633

61

RETURN

## INTERNATIONAL SEARCH REPORT

International application No.

PCT/JP2011/062056

A. CLASSIFICATION OF SUBJECT MATTER
*F02D23/00*(2006.01)i, *F02B37/24*(2006.01)i, *F02B39/16*(2006.01)i, *F02D45/00*
(2006.01)i

According to International Patent Classification (IPC) or to both national classification and IPC

B. FIELDS SEARCHED

Minimum documentation searched (classification system followed by classification symbols)
F02D23/00, F02B37/24, F02B39/16, F02D45/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 8-177575 A (Nippondenso Co., Ltd.),<br>09 July 1996 (09.07.1996),<br>paragraphs [0016] to [0028]<br>& US 5672817 A        & DE 19548071 A<br>& DE 19548071 A1        & FR 2728941 A | 1<br>2-6 |
| Y | JP 2002-227705 A (Nissan Motor Co., Ltd.),<br>14 August 2002 (14.08.2002),<br>paragraph [0066]; fig. 1<br>(Family: none) | 2-6 |
| Y | JP 2010-249057 A (Isuzu Motors Ltd.),<br>04 November 2010 (04.11.2010),<br>claim 1<br>(Family: none) | 2-6 |

[X] Further documents are listed in the continuation of Box C.    [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13 July, 2011 (13.07.11) | Date of mailing of the international search report<br>26 July, 2011 (26.07.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/062056

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-7674 A  (Denso Corp.),<br>14 January 2010 (14.01.2010),<br>paragraph [0017]<br>(Family: none) | 1-10 |
| A | JP 10-159631 A  (Nissan Motor Co., Ltd.),<br>16 June 1998 (16.06.1998),<br>paragraph [0007]<br>(Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008275058 A
- JP 2010249057 A
- JP 2004108329 A
- JP 2009057853 A